(19) Europäisches Patentamt
European Patent Office
Office européen des brevets

(11) **EP 2 079 183 B1**

(12) **EUROPEAN PATENT SPECIFICATION**

(45) Date of publication and mention of the grant of the patent:
**05.03.2014 Bulletin 2014/10**

(51) Int Cl.:
*H04H 20/33* (2008.01)    *H04L 1/00* (2006.01)
*H04N 21/438* (2011.01)    *H04N 21/4385* (2011.01)
*H04L 5/00* (2006.01)    *H04N 21/2389* (2011.01)

(21) Application number: **08172464.3**

(22) Date of filing: **19.12.2008**

(54) **Apparatus for transmitting and receiving a signal and method of transmitting and receiving a signal**

Vorrichtung zum Senden und Empfangen eines Signals und Verfahren zum Senden und Empfangen eines Signals

Appareil pour la transmission et la réception d'un signal et procédé pour la transmission et la réception d'un signal

(84) Designated Contracting States:
**AT BE BG CH CY CZ DE DK EE ES FI FR GB GR HR HU IE IS IT LI LT LU LV MC MT NL NO PL PT RO SE SI SK TR**

(30) Priority: **02.01.2008 US 18664 P**
**17.01.2008 US 21875 P**
**15.12.2008 KR 20080127314**

(43) Date of publication of application:
**15.07.2009 Bulletin 2009/29**

(60) Divisional application:
**10166222.9 / 2 224 635**

(73) Proprietor: **LG Electronics Inc.**
**Seoul 150-721 (KR)**

(72) Inventors:
• **Hong, Ho Taek**
**LG ELECTRONICS INC. IP GROUP**
**Seoul 137-724 (KR)**
• **Ko, Woo Suk**
**LG ELECTRONICS INC. IP GROUP**
**Seoul 137-724 (KR)**
• **Moon, Sang Chul**
**LG ELECTRONICS INC. IP GROUP**
**Seoul 137-724 (KR)**

(74) Representative: **Cabinet Plasseraud**
**52, rue de la Victoire**
**75440 Paris Cedex 09 (FR)**

(56) References cited:
**WO-A-2005/022811    US-A1- 2007 143 655**

• **"Digital Video Broadcasting (DVB); DVB specification for data broadcasting; ETSI EN 301 192" ETSI STANDARDS, LIS, SOPHIA ANTIPOLIS CEDEX, FRANCE, vol. BC, no. V1.4.1, 1 November 2004 (2004-11-01), XP014026918 ISSN: 0000-0001**

**EP 2 079 183 B1**

## Description

The present invention relates to a method for transmitting and receiving a signal and an apparatus for transmitting and receiving a signal, and more particularly, to a method for transmitting and receiving a signal and an apparatus for transmitting and receiving a signal, which are capable of improving data transmission efficiency.

As a digital broadcasting technology has been developed, users have received a high definition (HD) moving image. With continuous development of a compression algorithm and high performance of hardware, a better environment will be provided to the users in the future. A digital television (DTV) system can receive a digital broadcasting signal and provide a variety of supplementary services to users as well as a video signal and an audio signal.

With the development of the digital broadcasting technology, a requirement for a service such as a video signal and an audio signal is increased and the size of data desired by a user or the number of broadcasting channels is gradually increased.

Existing techniques are disclosed in the documents WO2005/022811 and in the publication by ETSI Standards, LIS, Sophia Antipolis in France on November 1st 2004 "Digital Video Broadcasting (DVB); DVB specification for data broadcasting; ETSI EN 301 192".

WO 03/045054 A1 relates to systems and methods for distributing data over a data link.

Accordingly, an embodiment of present invention is directed to a method for transmitting and receiving a signal and an apparatus for transmitting and receiving a signal that substantially obviate one or more problems due to limitations and disadvantages of the related art.

An object of the present invention is to provide a method for transmitting and receiving a signal and an apparatus for transmitting and receiving a signal, which are capable of improving data transmission efficiency.

Another object of the present invention is to provide a method for transmitting and receiving a signal and an apparatus for transmitting and receiving a signal, which are capable of improving error correction capability of bits configuring a service.

Additional advantages, objects, and features of the invention will be set forth in part in the description which follows and in part will become apparent to those having ordinary skill in the art upon examination of the following or may be learned from practice of the invention. The objectives and other advantages of the invention may be realized and attained by the structure particularly pointed out in the written description and claims hereof as well as the appended drawings.

To achieve the objects, the present invention provides a method of transmitting a signal according to claim 1, a method of receiving a signal according to claim 4, an apparatus for transmitting a signal according to claim 6 and, finally, an apparatus for receiving a signal according to claim 9.

The accompanying drawings, which are included to provide a further understanding of the invention and are incorporated in and constitute a part of this application, illustrate embodiment(s) of the invention and together with the description serve to explain the principle of the invention. In the drawings:

FIG. 1 is a view showing a signal frame for transmitting a service;

FIG. 2 is a view showing the structure of a first pilot signal P1 of the signal frame;

FIG. 3 is a view showing a signaling window;

FIG. 4 is a schematic view showing an embodiment of an apparatus for transmitting a signal;

FIG. 5 is a view showing an example of an input processor 110;

FIG. 6 is a view showing an embodiment of a coding and modulation unit;

FIG. 7 is a view showing an embodiment of a frame builder;

FIG. 8 is a view showing a first example of a ratio of symbols when mappers 131 a and 131 b perform hybrid symbol mapping;

FIG. 9 is a view showing a second example of a ratio of symbols when the mappers 131 a and 131 b perform hybrid symbol mapping;

FIG. 10 is a view showing the number of symbols and bit number per cell word according to a symbol mapping scheme in an LDPC normal mode;

FIG. 11 is a view showing another example of the number of symbols according to a symbol mapping scheme in an LDPC normal mode;

FIG. 12 is a view showing another example of the number of symbols according to a symbol mapping scheme in an LDPC normal mode;

FIG. 13 is a view showing the number of symbols according to a symbol mapping scheme in an LDPC short mode;

FIG. 14 is a view showing an example of the number of symbols according to a symbol mapping scheme in an LDPC short mode;

FIG. 15 is a view showing another example of the number of symbols according to a symbol mapping scheme in an LDPC short mode;

FIG. 16 is a view showing an embodiment of each of the symbol mappers 131 a and 131 b shown in FIG. 7;

FIG. 17 is a view showing another embodiment of each of the symbol mappers 131 a and 131b;

FIG. 18 is a view showing another embodiment of the symbol mapper;

FIG. 19 is a view showing another embodiment of each of the symbol mappers 131 a and 131b;

FIG. 20 is a view showing the concept of interleaving of bits by bit interleavers 1312a and 1312b;

FIG. 21 illustrates another example of the bit interleavers which perform interleaving;

FIG. 22 illustrates offset used in bit interleaving in accordance with a symbol mapping method;

Fig. 23 is a view showing a first example of the number of rows and columns of memories of the bit interleavers 1312a and 1312b according to the types of symbol mappers 1315a and 1315b;

Fig. 24 is a view showing a second example of the number of rows and columns of the memories of the bit interleavers 1312a and 1312b according to the types of the symbol mappers 1315a and 1315b;

FIG. 25 is a diagram showing the concept of another embodiment of interleaving of a bit interleaver;

FIG. 26 is a view showing another embodiment of bit interleaving;

FIG. 27 is a view showing another embodiment of bit interleaving;

FIG. 28 is a view showing the concept of demultiplexing of input bits of demuxs 1313a and 1313b;

FIG. 29 is a view showing an embodiment of demultiplexing an input stream by the demux;

FIG. 30 is a view showing an example of a demultiplexing type according to a symbol mapping method;

FIG. 31 is a view showing an embodiment of demultiplexing an input bit stream according to a demultiplexing type;

FIG. 32 is a view showing a demultiplexing type which is determined according to a code rate of an error correction coding and a symbol mapping method;

FIG. 33 is a view showing an example of expressing the demultiplexing method by an equation;

FIG. 34 is a view showing an example of mapping a symbol by a symbol mapper;

FIG. 35 is a view showing an example of a multi-path signal coder;

FIG. 36 is a view showing an embodiment of a modulator;

FIG. 37 is a view showing an embodiment of an analog processor 160;

FIG. 38 is a view showing an embodiment of a signal receiving apparatus capable of receiving a signal frame;

FIG. 39 is a view showing an embodiment of a signal receiver;

FIG. 40 is a view showing an embodiment of a demodulator;

FIG. 41 is a view showing a multi-path signal decoder;

FIG. 42 is a view showing an embodiment of a frame parser;

FIG. 43 is a view showing an embodiment of each of symbol demappers 247a and 247p;

FIG. 44 is a view showing another embodiment of each of the symbol demappers 247a and 247p;

FIG. 45 is a view showing another embodiment of each of the symbol demappers 247a and 247p;

FIG. 46 is a view showing another embodiment of each of the symbol demappers 247a and 247p;

FIG. 47 is a view showing an embodiment of multiplexing a demultiplexed sub stream;

FIG. 48 is a view showing an example of a decoding and demodulation unit;

FIG. 49 is a view showing an embodiment of an output processor;

FIG. 50 is a view showing another embodiment of a signal transmitting apparatus for transmitting a signal frame;

FIG. 51 is a view showing another embodiment of a signal receiving apparatus for receiving a signal frame;

FIG. 52 is a view showing an embodiment of the structure of a first pilot signal;

FIG. 53 is a view showing an embodiment of detecting a preamble signal shown in FIG. 52 and estimating a timing offset and a frequency offset;

FIG. 54 is a view showing another embodiment of the structure of the first pilot signal;

FIG. 55 is a view showing an embodiment of detecting the first pilot signal shown in FIG. 54 and measuring a timing offset and a frequency offset;

FIG. 56 is a view showing an embodiment of detecting the first pilot signal and measuring a timing offset and a frequency offset using the detected result;

FIG. 57 is a view showing an embodiment of a method of transmitting a signal;

FIG. 58 is a view showing an embodiment of a method of receiving a signal; and

FIG. 59 is a flowchart illustrating an embodiment of identifying a first pilot signal and estimating an offset in a demodulating process.

FIG. 60 illustrates another example of a method of transmitting and receiving signals in accordance with the present invention.

FIG. 61 is a conceptual diagram showing a relationship between a PLP and a service;

FIG. 62 is a view showing an example of mapping a PLP and a service;

FIG. 63 is a view showing an example of mapping a PLP and a service package;

FIG. 64 is a view showing an NIT as service table information;

FIG. 65 is a view showing another embodiment of an apparatus for receiving a signal; and

FIG. 66 is a flowchart showing another embodiment of a method for transmitting and receiving a signal.

Reference will now be made in detail to preferred embodiments of the present invention, examples of which are illustrated in the accompanying drawings. Wherever possible, the same reference numbers will be used throughout the drawings to refer to the same or like parts.

In the following description, the term "service" is indicative of either broadcast contents which can be transmitted/received by the signal transmission/reception apparatus, or content provision.

Prior to the description of an apparatus for transmitting and receiving a signal according to an embodiment of the present invention, a signal frame which is transmitted and received by the apparatus for transmitting and receiving the signal according to an embodiment of the present invention will be described.

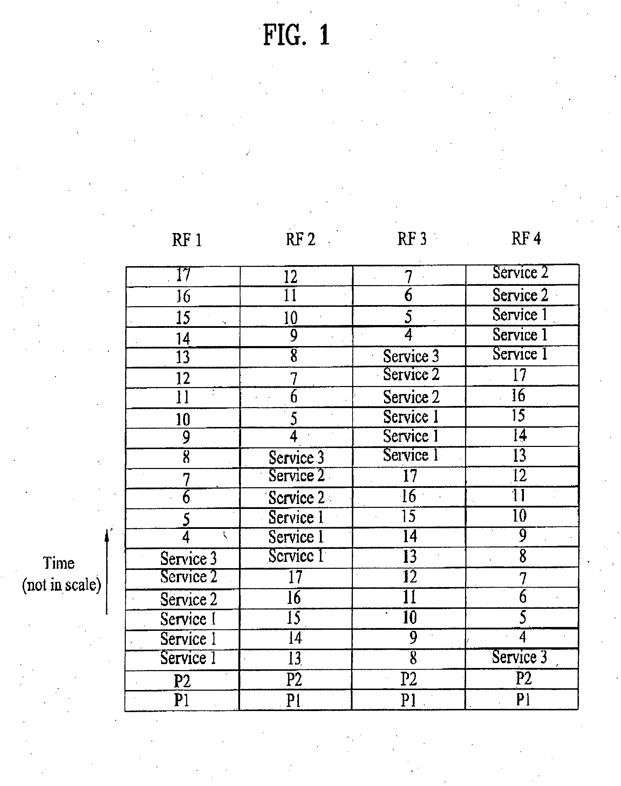

FIG. 1 shows a signal frame for transmitting a service according to an embodiment of the present invention.

The signal frame shown in FIG. 1 shows an exemplary signal frame for transmitting a broadcast service including audio/video (A/V) streams. In this case, a single service is multiplexed in time- and frequency- channels, and the multiplexed service is transmitted. The above-mentioned signal transmission scheme is called a time-frequency slicing (TFS) scheme. Compared with the case in which a single service is transmitted to only one radio frequency (RF) band, the signal transmission apparatus according to an embodiment of the present invention transmits the signal service via at least one RF band (possibly several RF bands), such that it can acquire a statistical multiplexing gain capable of transmitting many more services. The signal transmission/reception apparatus transmits/receives a single service over several RF channels, such that it can acquire a frequency diversity gain.

First to third services (Services 1~3) are transmitted to four RF bands (RF1 - RF4). However, this number of RF bands and this number of services have been disclosed for only illustrative purposes, such that other numbers may also be used as necessary. Two reference signals (i.e., a first pilot signal (P1) and a second pilot signal (P2)) are located at the beginning part of the signal frame. For example, in the case of the RF1 band, the first pilot signal (P1) and the second pilot signal (P2) are located at the beginning part of the signal frame. The RF1 band includes three slots associated with the Service 1, two slots associated with the Service 2, and a single slot associated with the Service 3. Slots associated with other services may also be located in other slots (Slots 4~17) located after the single slot associated with the Service 3.

The RF2 band includes a first pilot signal (P1), a second pilot signal (P2), and other slots 13 ~ 17. In addition, the RF2 band includes three slots associated with the Service 1, two slots associated with the Service 2, and a single slot associated with the Service 3.

The Services 1 ~ 3 are multiplexed, and are then transmitted to the RF3 and RF4 bands according to the time-frequency slicing (TFS) scheme. The modulation scheme for signal transmission may be based on an orthogonal frequency division multiplexing (OFDM) scheme.

In the signal frame, individual services are shifted to the RF bands (in the case that there is a plurality of the RF bands in the signal frame) and a time axis.

If signal frames equal to the above signal frame are successively arranged in time, a super-frame can be composed of several signal frames. A future extension frame may also be located among the several signal frames. If the future extension frame is located among the several signal frames, the super-frame may be terminated at the future extension frame.

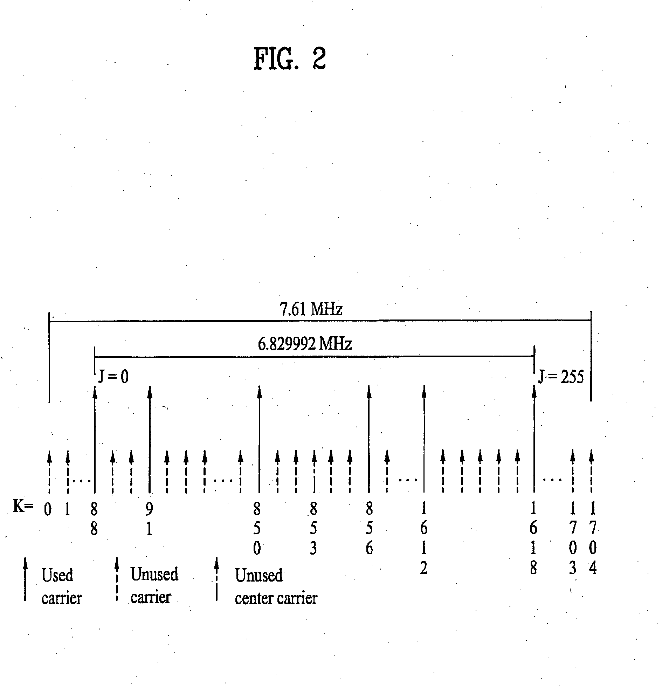

FIG. 2 shows a first pilot signal (P1) contained in the signal frame of FIG. 1 according to an embodiment of the present invention.

The first pilot signal P1 and the second pilot signal P2 are located at the beginning part of the signal frame. The first pilot signal P1 is modulated by a 2K FFT mode, and may be transmitted simultaneously while including a 1/4 guard interval. In FIG. 2, a band of 7.61 Mhz of the first pilot signal P1 includes a band of 6.82992Mhz. The first pilot signal uses 256 carriers from among 1705 active carriers. A single active carrier is used for every 6 carriers on average. Data-carrier intervals may be irregularly arranged in the order of 3, 6, and 9. In FIG. 2, a solid line indicates the location of a used carrier, a thin dotted line indicates the location of an unused carrier, and a chain line indicates a center location of the unused carrier. In the first pilot signal, the used carrier can be symbol-mapped by a binary phase shift keying (BPSK), and a pseudo-random bit sequence (PRBS) can be modulated. The size of a FFT used for the second pilot signal can be indicated by several PRBSs.

The signal reception apparatus detects a structure of a pilot signal, and recognizes a time-frequency slicing (TFS) using the detected structure. The signal reception apparatus acquires the FFT size of the second pilot signal, compensates for a coarse frequency offset of a reception signal, and acquires time synchronization.

In the first pilot signal, a signal transmission type and a transmission parameter may be set.

The second pilot signal P2 may be transmitted with a FFT size and a guard interval equal to those of the data symbol. In the second pilot signal, a single carrier is used as a pilot carrier at intervals of three carriers. The signal reception apparatus compensates for a fine frequency synchronization offset using the second pilot signal, and performs fine time synchronization. The second pilot signal transmits information of a first layer (L1) from among Open Systems Interconnection (OSI) layers. For example, the second pilot signal may include a physical parameter and frame construction information. The second pilot signal transmits a parameter value by which a receiver can access a Physical Layer Pipe (PLP) service stream.

L1 (Layer 1) information contained in the second pilot signal P2 is as follows.

The Layer-1 (L1) information includes a length indicator indicating the length of data including the L1 information, such that it can easily use the signaling channels of Layers 1 and 2 (L1 and L2). The Layer-1 (L1) information includes a frequency indicator, a guard-interval length, a maximum number of FEC (Forward Error Correction) blocks for each frame in association with individual physical channels, and the number of actual FEC blocks to be contained in the FEC block buffer associated with a current/previous frame in each physical channel. In this case, the frequency indicator indicates frequency information corresponding to the RF channel.

The Layer-1 (L1) information may include a variety of information in association with individual slots. For example, the Layer-1 (L1) information includes the number of frames associated with a service, a start address of a slot having the accuracy of an OFDM carrier contained in an OFDM symbol, a length of the slot, slots corresponding to the OFDM carrier, the number of bits padded in the last OFDM carrier, service modulation information, service mode rate information, and Multi-Input-Multi-Output (MIMO) scheme information.

The Layer-1 (L1) information may include a cell ID, a flag for service like notification message service(e.g., an emergency message), the number of current frames, and the number of additional bits for future use. In this case, the cell ID indicates a broadcast area transmitted by a broadcast transmitter

The second pilot signal P2 is adapted to perform channel estimation for decoding a symbol contained in the P2 signal. The second pilot signal P2 can be used as an initial value for channel estimation for the next data symbol. The second pilot signal P2 may also transmit Layer-2 (L2) information. For example, the second pilot signal is able to describe information associated with the transmission service in Layer-2 (L2) information. The signal transmission apparatus decodes the second pilot signal, such that it can acquire service information contained in the time-frequency slicing (TFS) frame and can effectively perform the channel scanning. Meanwhile, this Layer-2 (L2) information may be included in a specific PLP of the TFS frame. According to another instance, L2 information can be included in a specific PLP, and the service description information also can be transmitted in the specific PLP.

For example, the second pilot signal may include two OFDM symbols of the 8k FFT mode. Generally, the second pilot signal may be any one of a single OFDM symbol of the 32K FFT mode, a single OFDM symbol of the 16k FFT mode, two OFDM symbols of the 8k FFT mode, four OFDM symbols of the 4k FFT mode, and eight OFDM symbols of the 2k FFT mode.

In other words, a single OFDM symbol having the size of a large FFT or several OFDM symbols, each of which has the size of a small FFT, may be contained in the second pilot signal P2, such that capacity capable of being transmitted to the pilot can be maintained.

If information to be transmitted to the second pilot signal exceeds capacity of the OFDM symbol of the second pilot signal, OFDM symbols after the second pilot signal can be further used. L1 (Layer1) and L2 (Layer2) information contained in the second pilot signal is error-correction-coded and is then interleaved, such that data recovery is carried out although an impulse noise occurs.

As described the above, L2 information can also be included in a specific PLP conveying the service description information.

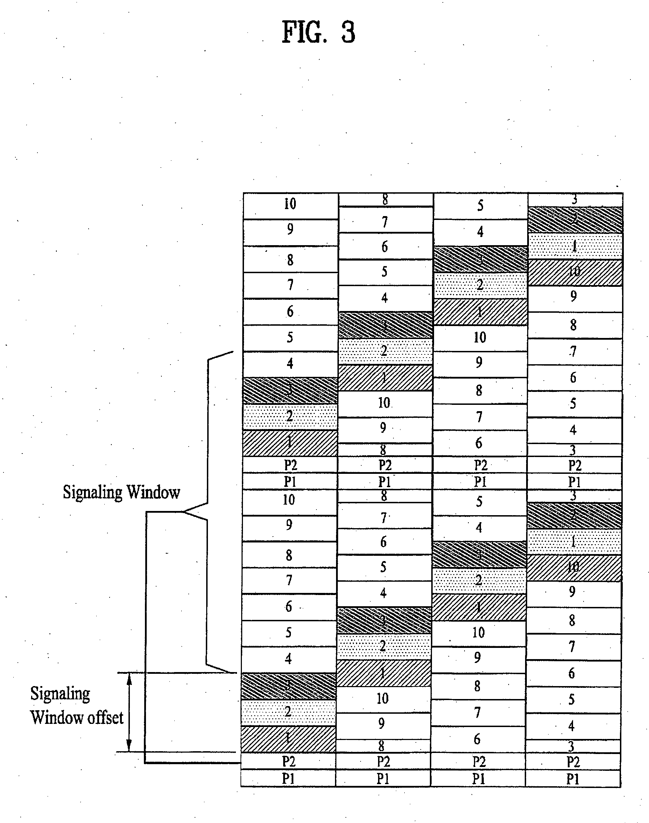

FIG. 3 shows a signaling window according to an embodiment of the present invention. The time-frequency slicing (TFS) frame shows an offset concept of the signaling information. Layer-1 (L1) information contained in the second pilot signal includes frame construction information and physical layer information required by the signal reception apparatus decoding the data symbol. Therefore, if information of the following data symbols located after the second pilot signal, is contained in the second pilot signal, and the resultant second pilot signal is transmitted, the signal reception apparatus may be unable to immediately decode the above following data symbols due to a decoding time of the second pilot signal.

Therefore, as shown in FIG. 3, the L1 information contained in the second pilot signal (P2) includes information of a single time-frequency slicing (TFS) frame size, and includes information contained in the signaling window at a location spaced apart from the second pilot signal by the signaling window offset.

In the meantime, in order to perform channel estimation of a data symbol constructing the service, the data symbol may include a scatter pilot and a continual pilot.

The signal transmission/reception system capable of transmitting/receiving signal frames shown in FIGS. 1 ~ 3 will hereinafter be described. Individual services can be transmitted and received over several RF channels. A path for transmitting each of the services or a stream transmitted via this path is called a PLP. The PLP may be distributed among the timely-divided slots in several RF channels or a single RF band. This signal frame can convey the timely-divided PLP in at least one RF channel. In other word, a single PLP can be transferred through at least one RF channel with timely-divided regions. Hereinafter the signal transmission/reception systems transmitting/receiving a signal frame via at least one RF band will be disclosed.

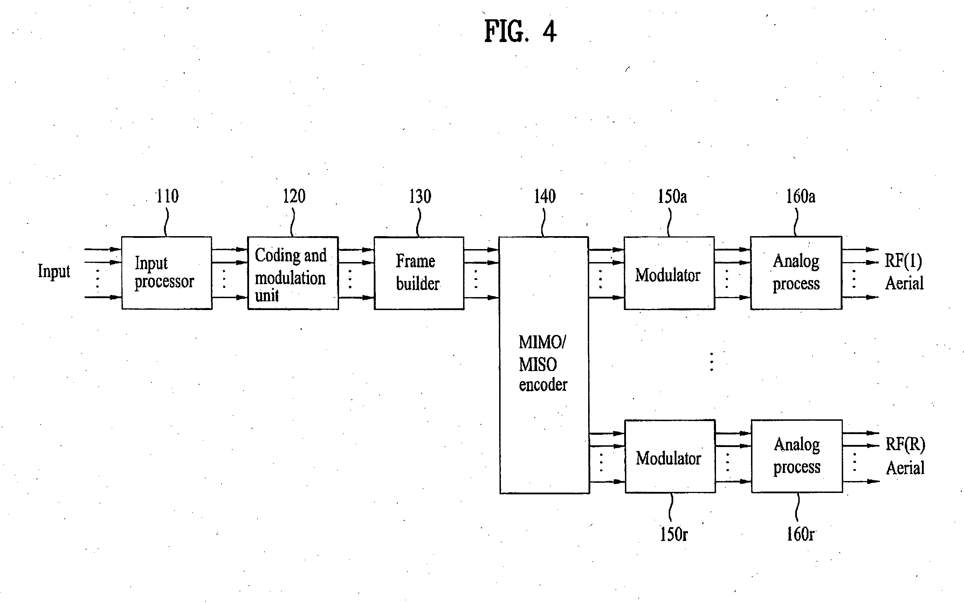

FIG. 4 is a block diagram illustrating an apparatus for transmitting a signal according to one embodiment of the present invention. Referring to FIG. 4, the signal transmission apparatus includes an input processor 110, a coding and modulation unit 120, a frame builder 130, a MIMO/MISO encoder 140, a plurality of modulators (150a, ..., 150r) of the MIMO/MISO encoder 140, and a plurality of analog processors (160a,...,160r).

The input processor 110 receives streams equipped with several services, generates P number of baseband frames (P is a natural number) which includes modulation- and coding- information corresponding to transmission paths of the individual services, and outputs the P number of baseband frames.

The coding and modulation unit 120 receives baseband frames from the input processor 110, performs the channel coding and interleaving on each of the baseband frames, and outputs the channel coding and interleaving result.

The frame builder 130 forms frames which transmit baseband frames contained in P number of PLPs to R number of RF channels (where R is a natural number), splits the formed frames, and outputs the split frames to paths corresponding to the R number of RF channels. Several services may be multiplexed in a single RF channel in time. The signal frames generated from the frame builder 140 may include a time-frequency slicing (TFS) structure in which the service is multiplexed in time- and frequency- domains.

The MIMO/MISO encoder 140 encodes signals to be transmitted to the R number of RF channels, and outputs the coded signals to paths corresponding to A number of antennas (where A is a natural number). The MIMO/MISO encoder 140 outputs the coded signal in which a single to be transmitted to a single RF channel is encoded to the A number of antennas, such that a signal is transmitted/received to/from a MIMO (Multi-Input-Multi-Output) or MISO (Multi-Input-Single-Output) structure.

The modulators (150a, ..., 150r) modulate frequency-domain signals entered via the path corresponding to each RF channel into time-domain signals. The modulators (150a, ..., 150r) modulate the input signals according to an orthogonal frequency division multiplexing (OFDM) scheme, and outputs the modulated signals.

The analog processors (160a, ..., 160r) converts the input signals into RF signals, such that the RF signals can be outputted to the RF channels.

The signal transmission apparatus according to this embodiment may include a predetermined number of modulators (150a,...150r) corresponding to the number of RF channels and a predetermined number of analog processors (160a,...,160r) corresponding to the number of RF channels. However, in the case of using the MIMO scheme, the number of analog processors must be equal to the product of R (i.e., the number of RF channels) and A (i.e., the number of antennas).

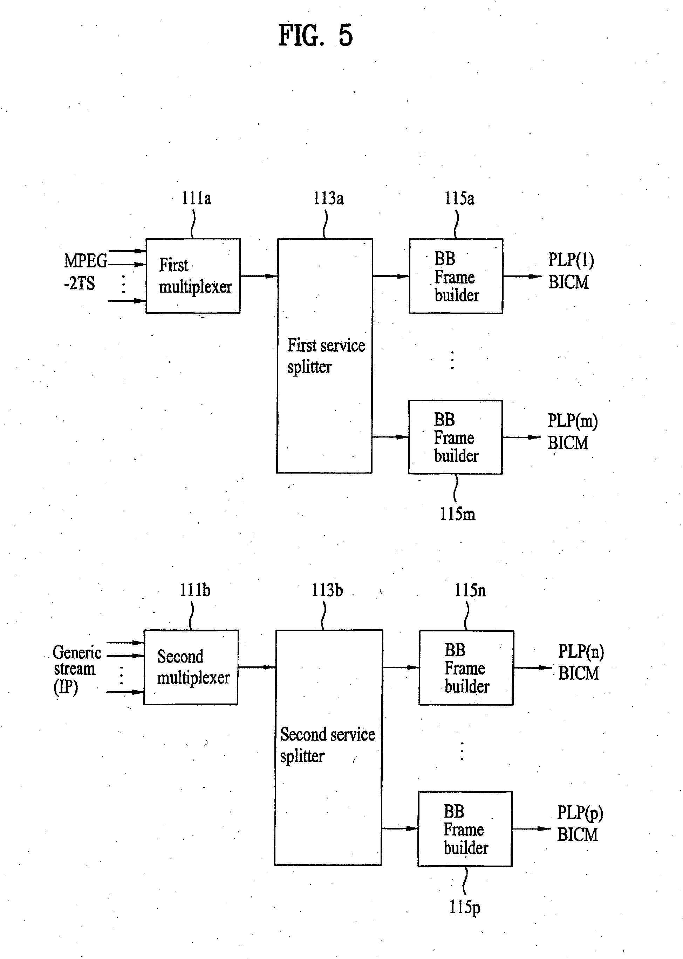

FIG. 5 is a block diagram illustrating an input processor 110 according to an embodiment of the present invention. Referring to FIG. 5, the input processor 110 includes the first stream multiplexer 111 a, the first service splitter 113a, and a plurality of first baseband (BB) frame builders (115a, ..., 115m). The input processor 110 includes a second stream multiplexer 111 b, a second service splitter 113b, and a plurality of second baseband (BB) frame builders (115n, ..., 115p).

For example, the first stream multiplexer 111a receives several MPEG-2 transport streams (TSs), multiplexes the received MPEG-2 TS streams, and outputs the multiplexed MPEG-2 TS streams. The first service splitter 113a receives the multiplexed streams, splits the input streams of individual services, and outputs the split streams. As described above, provided that the service transmitted via a physical-channel path is called a PLP, the first service splitter 113a splits the service to be transmitted to each PLP, and outputs the split service.

The first BB frame builders (115a, ..., 115m) build data contained in a service to be transmitted to each PLP in the form of a specific frame, and output the specific-frame-formatted data. The first BB frame builders (115a, ..., 115m) build a frame including a header and payload equipped with service data. The header of each frame may include mode information based on the modulation and encoding of the service data, and a counter value based on a clock rate of the modulator to synchronize input streams.

The second stream multiplexer 111b receives several streams, multiplexes input streams, and outputs the multiplexed streams. For example, the second stream multiplexer 111 b may multiplex Internet Protocol (IP) streams instead of the MPEG-2 TS streams. These streams may be encapsulated by a generic stream encapsulation (GSE) scheme. The streams multiplexed by the second stream multiplexer 111 b may be any one of streams. Therefore, the above-mentioned streams different from the MPEG-2 TS streams are called generic streams (GS streams).

The second service splitter 113b receives the multiplexed generic streams, splits the received generic streams according to individual services (i.e., PLP types), and outputs the split GS streams.

The second BB frame builders (115n, ..., 115p) build service data to be transmitted to individual PLPs in the form of a specific frame used as a signal processing unit, and output the resultant service data. The frame format built by the second BB frame builders (115n, ..., 115p) may be equal to that of the first BB frame builders (115a, ..., 115m) as necessary. If required, another embodiment may also be proposed. In another embodiment, the frame format built by the second BB frame builders (115n, ..., 115p) may be different from that of the first BB frame builders (115a, ...,

115m). The MPEG-2 TS header further includes a Packet Syncword which is not contained in the GS stream, resulting in the occurrence of different headers.

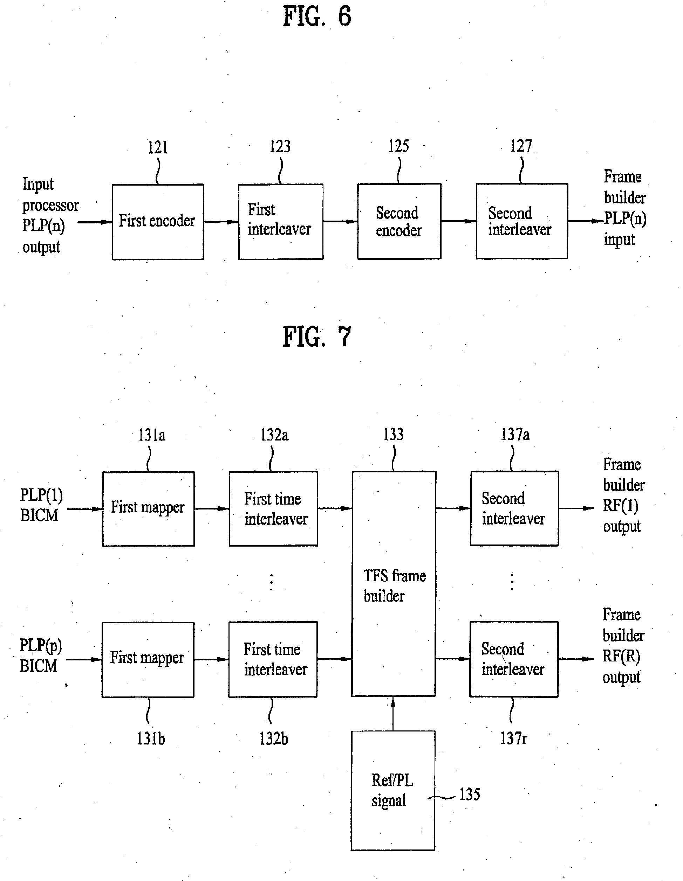

FIG. 6 is a block diagram illustrating a coding and modulation unit according to an embodiment of the present invention. The coding and modulation unit includes a first interleaver 123, a second encoder 125, and a second interleaver 127.

The first encoder 121 acts as an outer coder of the input baseband frame, and is able to perform the error correction encoding. The first encoder 121 performs the error correction encoding of the input baseband frame using a Bose- Chaudhuri-Hocquenghem (BCH) scheme. The first interleaver 123 performs interleaving of the encoded data, such that it prevents a burst error from being generated in a transmission signal. The first interleaver 123 may not be contained in the above-mentioned embodiment.

The second encoder 125 acts as an inner coder of either the output data of the first encoder 121 or the output data of the first interleaver 123, and is able to perform the error correction encoding. A low density parity bit (LDPC) scheme may be used as an error correction encoding scheme. The second interleaver 127 mixes the error-correction-encoded data generated from the second encoder 125, and outputs the mixed data. The first interleaver 123 and the second interleaver 127 are able to perform interleaving of data in units of a bit.

The coding and modulation unit 120 relates to a single PLP stream. The PLP stream is error-correction-encoded and modulated by the coding and modulation unit 120, and is then transmitted to the frame builder 130.

FIG. 7 is a block diagram illustrating a frame builder according to an embodiment of the present invention. Referring to FIG. 7, the frame builder 130 receives streams of several paths from the coding and modulation unit 120, and arranges the received streams in a single signal frame. For example, the frame builder may include a first mapper 131 a and a first time interleaver 132a in a first path, and may include a second mapper 131 b and a second time interleaver 132b in a second path. The number of input paths is equal to the number of PLPs for service transmission or the number of streams transmitted via each PLP.

The first mapper 131 a performs mapping of data contained in the input stream according to the first symbol mapping scheme. For example, the first mapper 131 a may perform mapping of the input data using a QAM scheme (e.g., 16 QAM, 64 QAM, and 256 QAM).

If the first mapper 131 a performs mapping of the symbol, the input data may be mapped to several kinds of symbols according to several symbol mapping schemes. For example, the first mapper 131 a classifies the input data into a baseband-frame unit and a baseband-frame sub-unit. Individual classified data may be hybrid-symbol-mapped by at least two QAM schemes (e.g., 16 QAM and 64 QAM). Therefore, data contained in a single service may be mapped to symbols based on different symbol mapping schemes in individual intervals.

The first time interleaver 132a receives a symbol sequence mapped by the first mapper 131 a, and is able to perform the interleaving in a time domain. The first mapper 131 a maps data, which is contained in the error-corrected frame unit received from the coding and modulation unit 120, into symbols. The first time interleaver 132a receives the symbol sequence mapped by the first mapper 131 a, and interleaves the received symbol sequence in units of the error-corrected frame.

In this way, the p-th mapper 131 p or the p-th time interleaver 132p receives service data to be transmitted to the p-th PLP, maps the service data into symbols according to the p-th symbol mapping scheme. The mapped symbols can be interleaved in a time domain. It should be noted that this symbol mapping scheme and this interleaving scheme are equal to those of the first time interleaver 132a and the first mapper 131 a.

The symbol mapping scheme of the first mapper 131 a may be equal to or different from that of the p-th mapper 131 p. The first mapper 131 a and the p-th mapper 131 p are able to map input data to individual symbols using the same or different hybrid symbol mapping schemes.

Data of the time interleavers located at individual paths (i.e., service data interleaved by the first time interleaver 132a and service data to be transmitted to R number of RF channels by the p-th time interleaver 132p) is interleaved, such that the physical channel allows the above data to be interleaved over several RF channels.

In association with streams received in as many paths as the number of PLPs, the TFS frame builder 133 builds the TFS signal frame such as the above-mentioned signal frame, such that the service is time-shifted according to RF channels. The TFS frame builder 133 splits service data received in any one of paths, and outputs the service data split into data of the R number of RF bands according to a signal scheduling scheme.

The TFS frame builder 133 receives the first pilot signal and the second pilot signal from the signaling information unit (denoted by Ref/PL signal) 135, arranges the first and second pilot signals in the signal frame, and inserts the signaling signal (L1 and L2) of the above-mentioned physical layer in the second pilot signal. In this case, the first and second pilot signals are used as the beginning signals of the signal frame contained in each RF channel from among the TFS signal frame received from the signaling information unit (Ref/PL signal) 135. As shown in FIG. 2, the first pilot signal may include a transmission type and basic transmission parameters, and the second pilot signal may include a physical parameter and frame construction information. Also, the second pilot signal includes a L1 (Layer 1) signaling signal and a L2 (Layer 2) signaling signal.

The R number of frequency interleavers (137a, ..., 137r) interleave service data, to be transmitted to corresponding RF channels of the TFS signal frame, in a frequency domain. The frequency interleavers (137a, ..., 137r) can interleave the service data at a level of data cells contained in an OFDM symbol.

Therefore, service data to be transmitted to each RF channel in the TFS signal frame is frequency-selective-fading-processed, such that it may not be lost in a specific frequency domain.

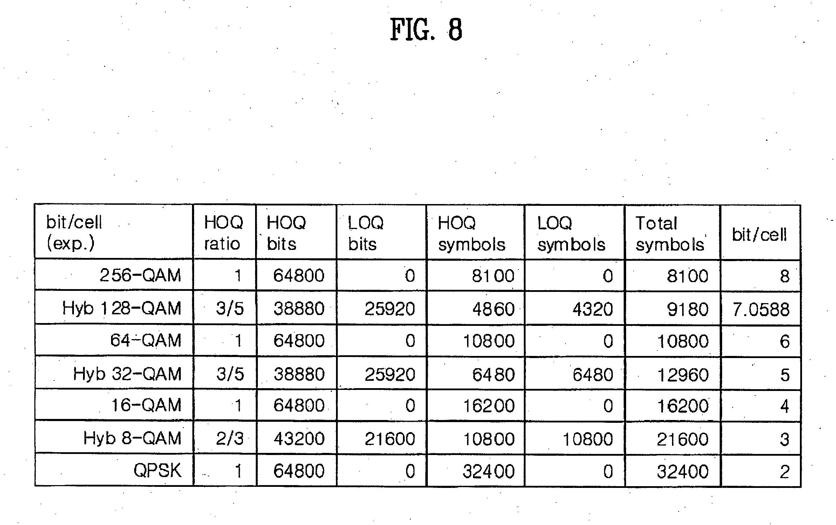

FIG. 8 is a view showing a first example of a ratio of symbols when the mappers 131 a and 131 b perform hybrid symbol mapping. This Figure shows the number of bits transmitted by one sub carrier (cell) if error correction coding is performed by the coding and modulation unit in a normal mode (the length of the error-correction-coded code is 64800 bits) of LDPC error correction coding mode.

For example, if the mappers 131 a and 131b perform symbol mapping using 256QAM, 64800 bits are mapped to 8100 symbols. If the mappers 131 a and 131 b perform hybrid symbol mapping (Hyb 128-QAM) using 256QAM and 64QAM with a ratio of 3:2, the number of symbols mapped by 256QAM is 4860 and the number of symbols mapped by 64QAM is 4320. The number of transmitted bits per sub carrier (cell) is 7.0588.

If a symbol mapping method of 64QAM is used, input data may be mapped to 10800 symbols and six bits per cell may be transmitted. If data is mapped to the symbols by a hybrid symbol mapping method of 64QAM and 16QAM (64QAM:16QAM=3:2, Hyb32-QAM), five bits may be transmitted by one sub carrier (cell).

If data is mapped to symbols by the 16QAM method, the data is mapped to 16200 symbols, each of which is used to transmit four bits.

Similarly, if data is mapped to symbols by a hybrid symbol mapping method of 16QAM and QPSK (16QAM: QPSK=2:3, Hyb8-QAM), three bits may be transmitted by one sub carrier (cell).

If data is mapped to symbols by a QPSK method, the data may be mapped to 32400 symbols, each of which is used to transmit two bits.

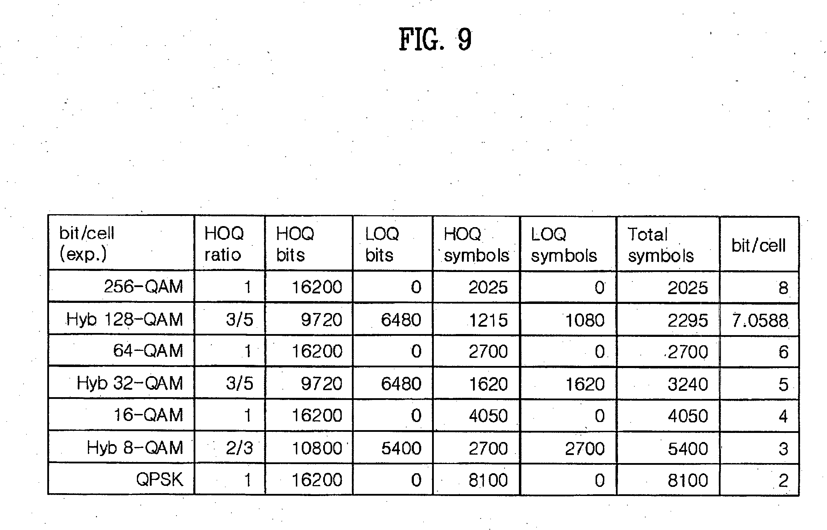

FIG. 9 shows symbol mapping methods of error-corrected data by LDPC error correction coding method of a short mode (the length of the error-correction-coded code is 16200 bits), which are equal to the symbol mapping methods of FIG. 8, and the numbers of bits per sub carrier according to the symbol mapping methods.

The numbers of bits transmitted by the sub carrier is equal to those of the normal mode (64800 bits) according to the symbol mapping methods such as 256QAM, Hyb 128-QAM, 64-QAM, Hyb 32-QAM, 16QAM, Hyb8-QAM and QPSK, but the total numbers of symbols transmitted are different from those of the normal mode. For example, 16200 bits are transmitted by 2025 symbols in 256QAM, 16200 bits are transmitted by 1215 symbols according to 256QAM and 1080 symbols according to 64QAM (total 2295 symbols) in Hyb 128-QAM.

Accordingly, a data transmission rate per sub carrier (cell) for each PLP may be adjusted according to a hybrid symbol mapping method or a single symbol mapping method.

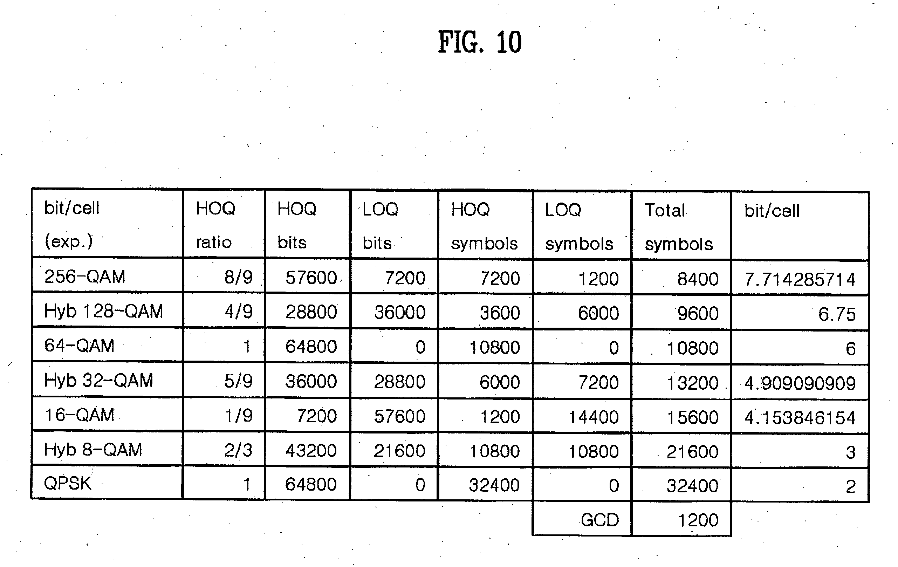

FIG. 10 is a view showing the number of symbols and bit number per cell word according to a symbol mapping method in an LDPC normal mode. If a TFS signal frame includes at least one RF channel, symbols configuring a specific PLP can be uniformly allocated to RF channels. The locations of the PLP symbols allocated to the RF channels can be more efficiently addressed. Accordingly, when the signal receiving apparatus selects the RF channels, the bits used for addressing the specific PLP can be reduced.

In this drawing, a symbol mapping method represented by 256-QAM indicates a method of mapping bits configuring a single error-correction-coded block to symbols with a ratio of 256QAM:64QAM=8:1. According to this symbol mapping method, the number of the bits in a single error-correction-coded block by the 256-QAM method is 57600, the number of the bits in a single error-correction- coded block by the 256-QAM method is 1200, the number of total symbols in the block is 8400, and the bit number per cell word is 7.714285714.

A symbol mapping method represented by Hyb 128-QAM indicates a method of mapping bits configuring a single error-correction-coded block to symbols with a ratio of 256QAM:64QAM=8:7. According to the Hyb 128-QAM symbol mapping method, the number of total symbols in a single error-correction-encoding block is 9600, and the bit number per cell word is 6.75.

According to a symbol mapping method represented by 64 QAM, the number of total symbols in a single error-correction-encoding block is 10800 and the bit number per cell word is 6.

A symbol mapping method represented by Hyb 32-QAM indicates a method of mapping bits configuring a single error-correction-coded block to symbols with a ratio of 64QAM:32QAM=5:4. According to the Hyb 32-QAM symbol mapping method, the number of total symbols in the error-correction-coded block is 13200, and the bit number per cell word is 4.9090909.

A symbol mapping method represented by 16 QAM indicates a method of mapping bits configuring a single error-correction- coded block to symbols with a ratio of 16QAM:QPSK=1:8. According to the 16 QAM symbol mapping method, the number of total symbols in one error-correction-coded block is 15600, and the bit number per cell word is 4.153846154.

A symbol mapping method represented by Hyb 8-QAM indicates a method of mapping bits configuring a single error-correction-coded block to symbols with a ratio of 16QAM:QPSK=2:1. According to the Hyb 8-QAM symbol mapping method, the number of total symbols in one error-correction-coded block is 21600, and the bit number per cell word is 3.

According to a symbol mapping method represented by QPSK, the number of total symbols in one error-correction-coded block is 32400 and the bit number per cell word is 2.

When the symbols configuring the PLP are allocated to the RF channels, the diversity gain of the frequency domain can be maximized when the numbers of the symbols allocated to the respective RF channels are equal. If a maximum of six RF channels is considered, the lowest common multiple of 1 to 6 is 60 and the greatest common divisor of the numbers of symbols mapped to one error correction coded block is 1200. Accordingly, if the integral multiple of 1200/60=20 symbols is allocated to each of the RF channels, the symbols can be uniformly allocated to all the RF channels. At this time, if 20 symbols are considered as one group and the group is addressed, the addressing overhead of log2(20)≈4.32 bits can be reduced compared with the case the symbols are addressed one by one.

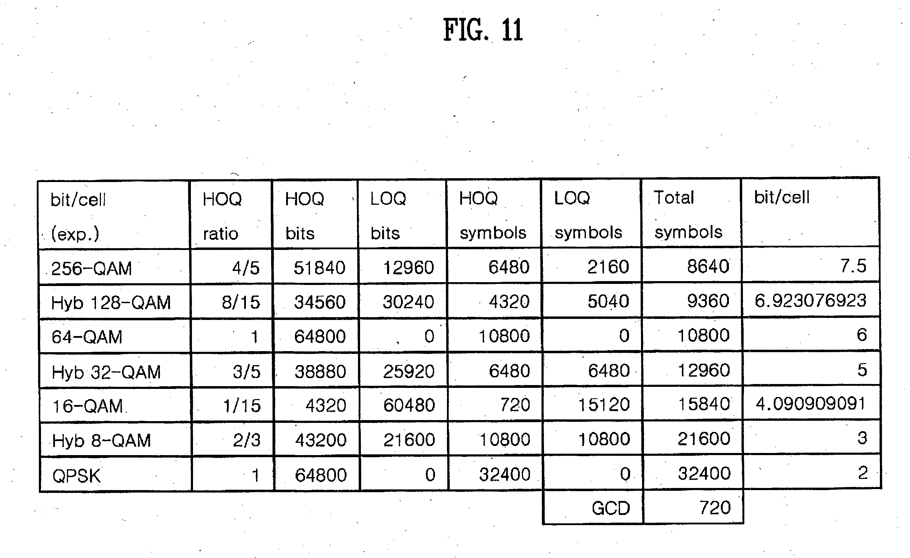

FIG. 11 is a view showing another example of the number of symbols according to a symbol mapping method in an LDPC normal mode. In the example of this drawing, a 256-QAM method using 256QAM and 64QAM symbols (256QAM:64QAM=4:1), a Hyb 128-QAM method using 256QAM and 64QAM symbol (256QAM:64QAM=8:7), a 64QAM method, a Hyb 32-QAM method using 64QAM and 8QAM symbols (64QAM:8QAM=3:2), a 16 QAM method using 16QAM and QPSK symbols (16QAM:QPSK=1:14), a Hyb 8-QAM method using 16QAM:QPSK=2:1 and a QPSK method were used as the symbol mapping method. The greatest common divisor (GCD) of the numbers of total symbols of an error correction coded block (normal mode) according to the symbol mapping methods is 720. Accordingly, if the integral multiple of 12(=720/60) symbols is allocated to each of the RF channels, the symbols can be uniformly allocated to all the RF channels. At this time, if 12 symbols are considered as one group and the group is addressed, the addressing overhead of log2(12)≈3.58 bits can be reduced compared with the case the symbols are addressed one by one. The signal receiving apparatus can collect the allocated PLP symbols by the addressing scheme and obtain a PLP service stream.

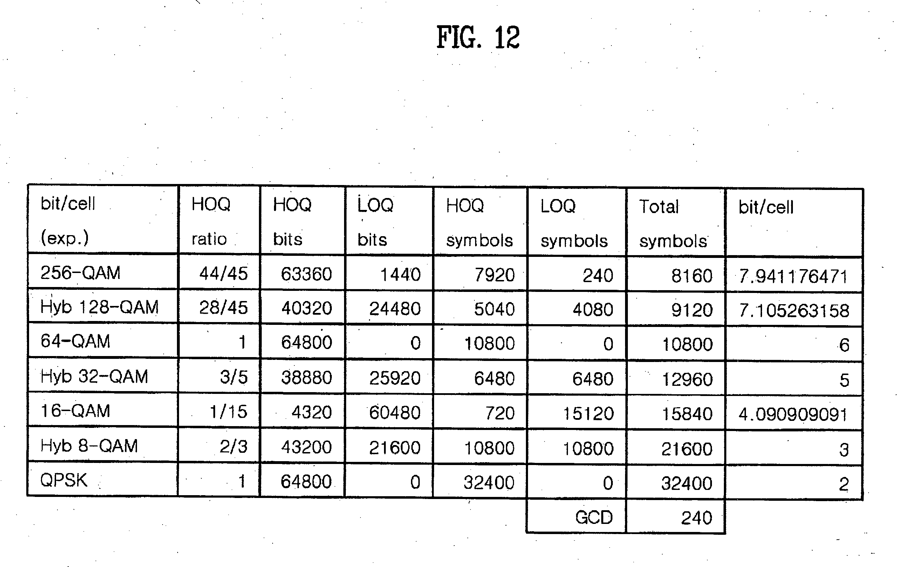

FIG. 12 is a view showing another example of the number of symbols according to a symbol mapping method in an LDPC normal mode. In the example of this drawing, a 256-QAM scheme, a Hyb 128-QAM scheme, a 64QAM scheme, a Hyb 32-QAM scheme, a 16 QAM scheme, a Hyb 8-QAM scheme and a QPSK scheme were used as the symbol mapping method. The 256QAM symbol mapping method uses 256QAM and 64QAM symbols (256QAM: 64QAM=44:1) and the Hyb 128-QAM symbol mapping method uses 256QAM and 64QAM symbols (256QAM: 64QAM=28:17). The Hyb 32-QAM method uses 64QAM and 8QAM symbols (64QAM:8QAM=3:2), the 16QAM symbol mapping method uses 16QAM and QPSK symbols (16QAM: QPSK=1:14), and the Hyb 8-QAM symbol mapping method uses 16QAM and QPSK symbols (16QAM:QPSK=2:1). The GCD of the numbers of total symbols of an error correction coded block (normal mode) according to the symbol mapping methods is 240. Accordingly, if the integral multiple of 240/60=4 symbols is allocated to each of the RF channels, the symbols can be uniformly allocated to all the RF channels. At this time, if four symbols are considered as one group and the group is addressed, the addressing overhead of log2(4)≈2 bits can be reduced compared with the case where the symbols are addressed one by one. Accordingly, even when the number of RF channels is any one of 1 to 6 in the signal frame, the PLP symbols can be uniformly allocated to the RF channels.

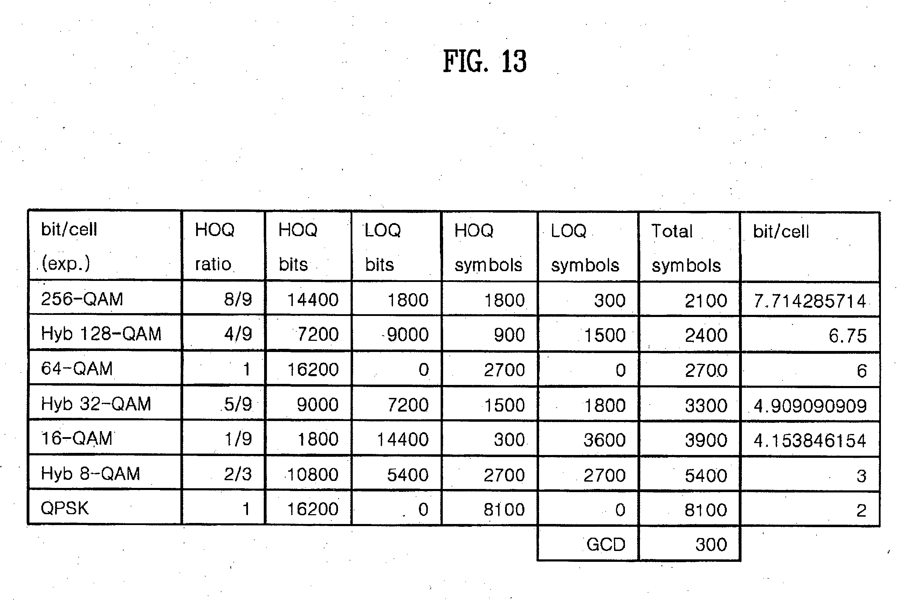

FIG. 13 is a view showing the number of symbols according to a symbol mapping method in an LDPC short mode. As described above, if symbol mapping is performed according to this example, the PLP symbols can be uniformly allocated to the RF channels and the overhead of the PLP symbol addressing can be reduced. The symbol mapping methods shown in this drawing are equal to those shown in FIG. 10. However, since the bit number of the LDPC short mode is different from that of the normal mode, the GCD of the numbers of total symbols of an error correction coded block (short mode) according to the symbol mapping methods is 300, unlike to FIG. 10. Accordingly, if the integral multiple of 300/60=5 symbols is allocated to each of the RF channels, the symbols can be uniformly allocated to all the RF channels. At this time, if five symbols are considered as one group and the group is addressed, the addressing overhead of log2(5) bits can be reduced compared with the case where the symbols are addressed one by one. Accordingly, in this embodiment, the addressing bits are saved by log2(5) bits when the divided PLP symbols are addressed.

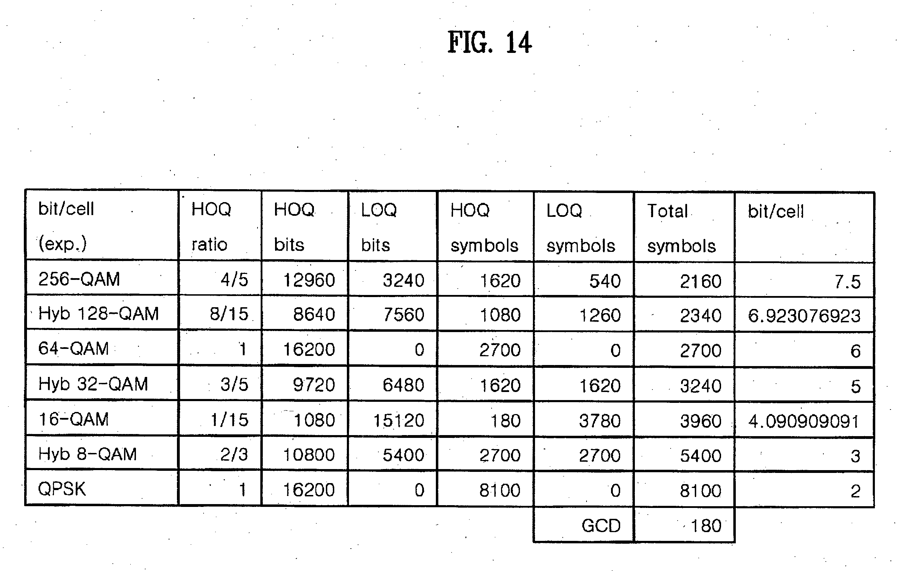

FIG. 14 is a view showing an example of the number of symbols according to a symbol mapping method in an LDPC short mode. The symbol mapping methods of this drawing are equal to those shown in FIG. 11. In this example, the GCD of the numbers of total symbols of an error correction coded block (short mode) according to the symbol mapping methods is 180, which may be used for PLP symbol allocation of one RF channel and the addressing of the allocated symbols. In this embodiment, the addressing bits are saved by log2(3) bits.

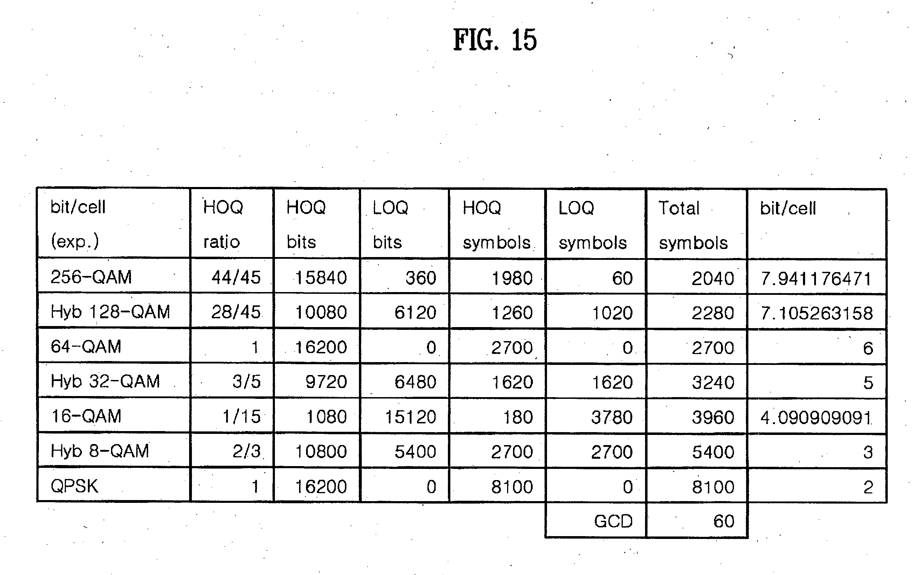

FIG. 15 is a view showing another example of the number of symbols according to a symbol mapping method in an LDPC short mode. The symbol mapping methods of this drawing are equal to those shown in FIG. 12. In this example, the GCD of the numbers of total symbols of an error correction coded block (short mode) according to the symbol mapping methods is 60. In this embodiment, the addressing bits are saved by log2(1) bits (that is, the addressing bit is not saved).

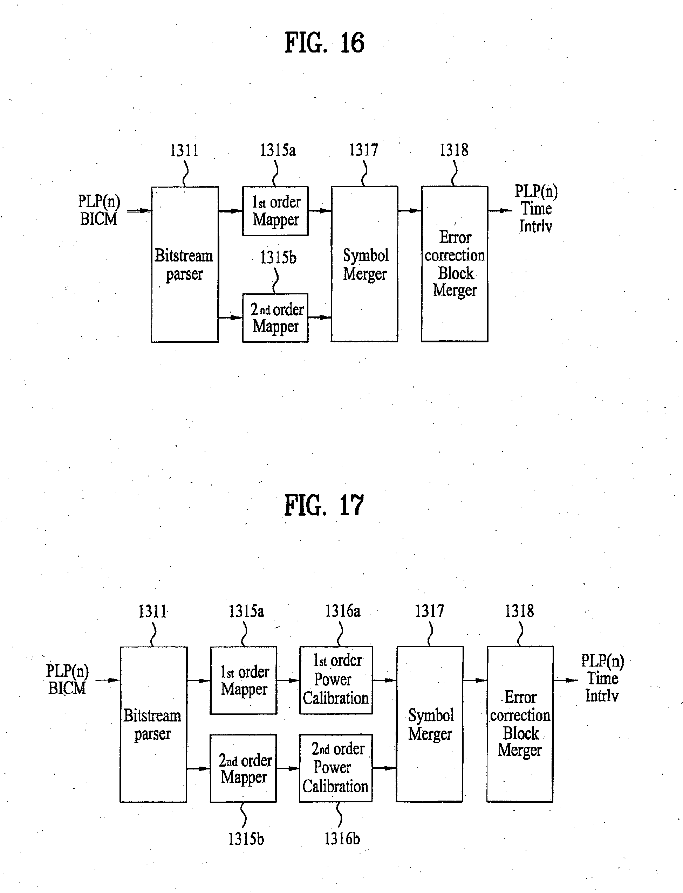

FIG. 16 is a view showing an example of each of the symbol mappers 131a and 131b shown in FIG. 7. Each of the symbol mappers 131 a and 131 b includes a first order mapper 1315a, a second order mapper 131 b, a symbol merger 1317 and an error correction block merger 1318.

The bit stream parser 1311 receives the PLP service stream from the coding and modulation unit and splits the received service stream.

The first order symbol mapper 1315a maps the bits of the service stream split by a higher order symbol mapping method to symbols. The second order symbol mapper 1315b maps the bits of the service stream split by a lower order symbol mapping method to symbols. For example, in the above example, the first order symbol mapper 1315a may map the bit stream to symbols according to 256QAM and the second order symbol mapper 1315b may map the bit stream to symbols according to 64QAM.

The symbol merger 1317 merges the symbols output from the symbol mappers 1315a and 1315b to one symbol stream and outputs the symbol stream. The symbol merger 1317 may output the symbol stream included in one PLP.

The error correction block merger 1318 may output one symbol stream merged by the symbol merger 1317 in the error-correction-coded code block unit. The error correction block merger 1318 may output a symbol block such that the error-correction-coded code blocks are uniformly allocated to at least one RF band of the TFS signal frame. The error correction block merger 1318 may output the symbol block such that the length of the symbol block of the error-correction-coded block of a normal mode is equal to that of the symbol block of the error-correction-coded block of a short mode. For example, four symbol blocks of the error-correction-coded block of the short mode may be merged to one symbol block.

The error correction block merger 1318 may split the symbol stream according to a common multiple of the number of RF bands such that signal frame builder uniformly arranges the symbols to the RF bands. If the maximum number of RF bands in the signal frame is 6, the error correction block merger 1318 outputs the symbol block such that the total number of symbols can be divided by 60 which is a common multiple of 1, 2, 3, 4, 5 and 6.

The symbols included in the output symbol block may be arranged to be uniformly allocated to the six RF bands. Accordingly, although an error correction mode according to a code rate and a symbol mapping method are combined, the symbols configuring the PLP are uniformly allocated to the RF bands.

FIG. 17 is a view showing another embodiment of each of the symbol mappers 131 a and 131 b. The embodiment of this drawing is similar to the embodiment of FIG. 16 except that a first order power calibration unit 1316a and a second order power calibration unit 1316b are further included.

The first order power calibration unit 1316a calibrates the power of the symbols mapped by the first order symbol mapper 1315a according to the size of the constellation and outputs the calibrated symbols. The second order power calibration unit 1316b calibrates the power of the symbols mapped by the second order symbol mapper 1315b according to the size of the constellation and outputs the calibrated symbols. Accordingly, although the symbol mapping method is changed in one PLP or is changed among a plurality of PLPs, if the power of the symbol by the symbol mapping method is adjusted according to the size of the constellation, signal reception performance of a receiver can be improved.

The symbol merger 1317 merges the symbols calibrated by the power calibration units 1316a and 1316b and outputs one symbol stream.

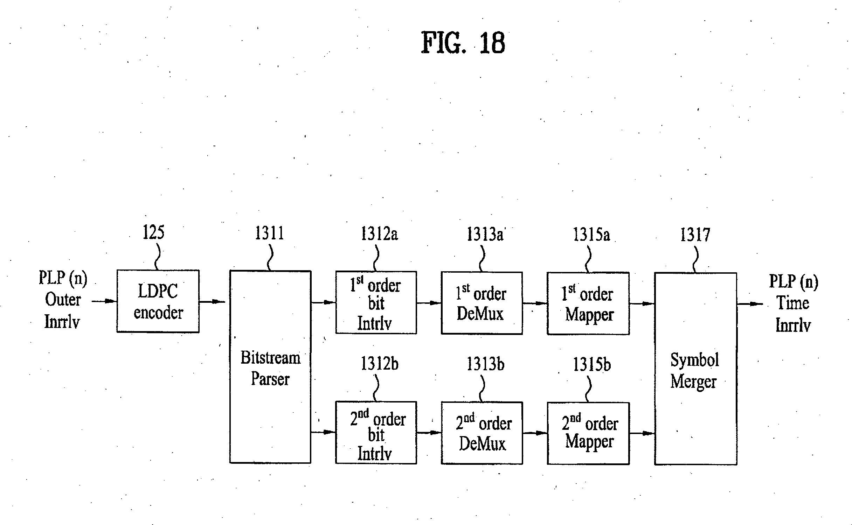

FIG. 18 is a view showing another embodiment of the symbol mapper. In the embodiment of this Figure, the symbol mapper includes the second encoder 125 and the second interleaver 127 included in the coding and modulation unit. That is, if this embodiment is used, the coding and modulation unit may include only the first encoder 121, the first interleaver 123 and the second encoder 125.

The embodiment of the symbol mapper includes a bit stream parser 1311, a first order bit interleaver 1312a, a second order bit interleaver 1312b, a first order demux 1313a, a second order demux 1313b, a first order symbol mapper 1315a, a second order symbol mapper 1315b and a symbol merger 1317.

When the second encoder 125 performs LDPC error correction coding, the length of the error-correction-coded block (e.g., the length of 64800 bits and the length of 16200 bits) may vary according to an LDPC mode. If the bits included in the error-correction-coded block are mapped to the symbols, the error correction capabilities of the bits included in a cell word configuring the symbol may vary according to the locations of the bits. For example, the cell word which is the symbol may be determined according to the code rate of the error correction coding and the symbol mapping method (whether the symbol mapping method is the higher order symbol mapping method or the lower order symbol mapping method). If the error-correction-code is the LDPC, the error correction capabilities of the bits vary according to the locations of the bits in the error-correction-coded block. For example, the reliabilities of the bits coded according to the characteristics of the H-matrix used in the irregular LDPC error correction coding method may vary according to the locations of the bits. Accordingly, the order of the bits configuring the cell word mapped to the symbol is changed such that the error correction capabilities of the bits which are weak against the error correction in the error-correction-coded block are adjusted and the robustness against the error in the bit level can be adjusted.

First, the second encoder 125, for example, performs the error correction coding with respect to the stream included in one PLP by the LDPC error correction coding method.

The bit stream parser 1311 receives the service stream according to the PLP and splits the received service stream.

The first order bit interleaver 1312a interleaves the bits included in a first bit stream of the split service streams. Similarly, the second order bit interleaver 1312b interleaves the bits included in a second bit stream of the split service streams.

The first order bit interleaver 1312a and the second order bit interleaver 1312b may correspond to the second interleaver 127 used as an inner interleaver. The interleaving method of the first order bit interleaver 1312a and the second order bit interleaver 1312b will be described later.

The first order demux 1313a and the second order demux 1313b demultiplex the bits of the bit streams interleaved by the first order bit interleaver 1312a and the second order bit interleaver 1312b. The demuxs 1313a and 1313b divide the input bit stream into sub bit streams which will be mapped to a real axis and an imaginary axis of a constellation and output the sub bit streams. The symbol mappers 1315a and 1315b map the sub bit streams demultiplexed by the demuxs 1313a and 1313b to the corresponding symbols.

The bit interleavers 1312a and 1312b and the demuxs 1313a and 1313b may combine the characteristics of the LDPC codeword and the characteristics of the constellation reliability of the symbol mapping according to the constellation. The detailed embodiment of the first order demuxs 1313a and 1313b will be described later.

The first order symbol mapper 1315a performs first order symbol mapping, for example, higher order symbol mapping, and the second order symbol mapper 1315b performs second order symbol mapping, for example, lower order symbol mapping. The first order symbol mapper 1315a maps the sub bit streams output from the first order demux 1313 to the symbols and the second order symbol mapper 1315b maps the sub bit streams output from the second order demux 1313b to the symbols.

The symbol merger 1317 merges the symbols mapped by the first order symbol mapper 1315a and the second order symbol mapper 1315b to one symbol stream and outputs the symbol stream.

As described above, in the LDPC, the error correction capabilities of the bits may be changed according to the locations of the bits in the error-correction-coded block. Accordingly, if the bit interleaver and the demux are controlled according to the characteristics of the LDPC encoder 125 so as to change the order of the bits configuring the cell word, the error correction capability in the bit level can be maximized.

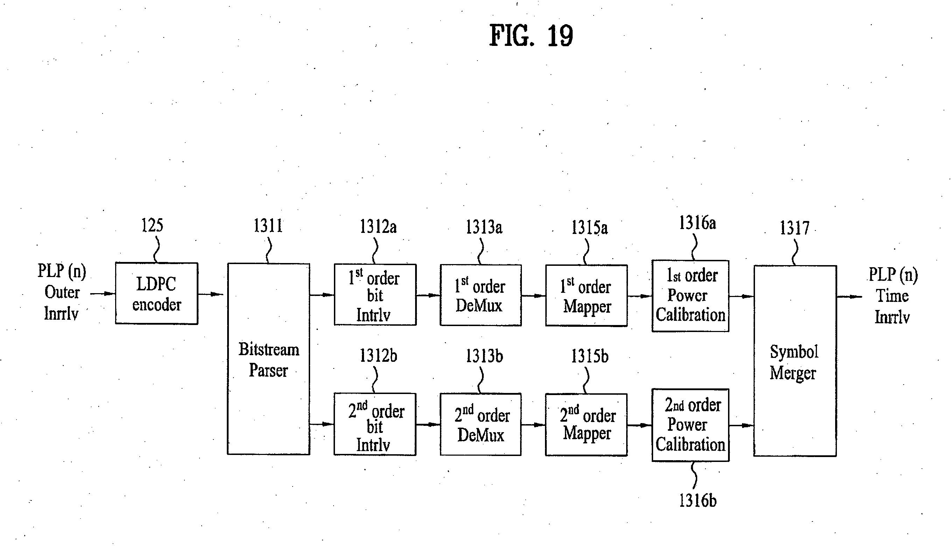

FIG. 19 is a view showing another embodiment of each of the symbol mappers 131 a and 131 b. The embodiment of this drawing is similar to the embodiment of FIG. 18 except that a first order power calibration unit 1316a and a second order power calibration unit 1316b are further included.

The first order power calibration unit 1316a calibrates the power of the symbols mapped by the first order symbol mapper 1315a according to the size of the constellation and outputs the calibrated symbols. The second order power calibration unit 1316b calibrates the power of the symbols mapped by the second order symbol mapper 1315b according to the size of the constellation and outputs the calibrated symbols. Accordingly, although the symbol mapping scheme is changed in one PLP or is changed among a plurality of PLPs, if the power of the symbol is adjusted according to the size of the constellation, signal reception performance can be improved.

The symbol merger 1317 merges the symbols calibrated by the power calibration units 1316a and 1316b and outputs one symbol stream.

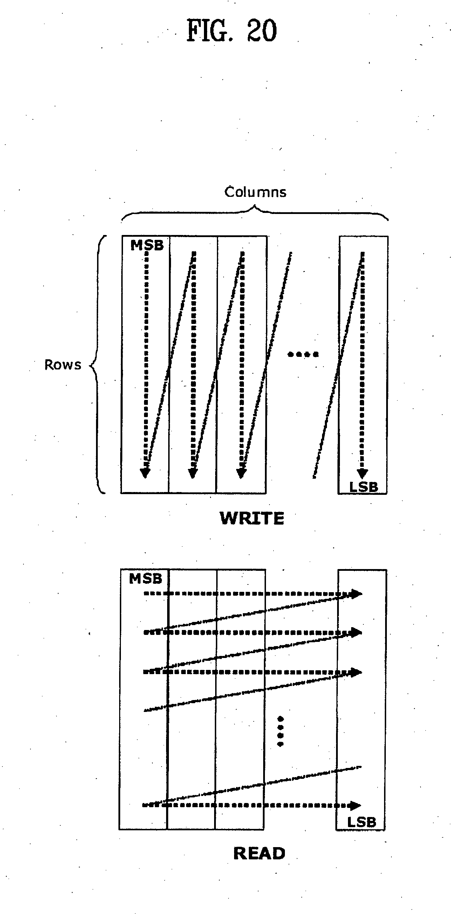

FIG. 20 is a view showing the concept of interleaving of bits by the bit interleavers 1312a and 1312b of FIGs. 18 and 19.

For example, input bits are stored in and read from a matrix-formed memory having a predetermined number of rows and columns. When the input bits are stored, first, the bits are stored in a first column in row direction, and, if the first column is filled up, the bits are stored in another column in row direction. When the stored bits are read, the bits are read in column direction and, if all the bits stored in a first row are read, the bits in another row are read in column direction. In other word, when the bits are stored, the bits are stored row-wise such that the columns are filled up serially. And when the stored bits are read, the stored bits are read column-wise from the first row to last row serially. In this Figure, MSB means a most significant bit and LSB means a least significant bit.

In order to map the LDPC-error-correction-coded bits to the symbols in the same length of error correction block unit at various code rates, the bit interleavers 1312a and 1312b may change the number of rows and columns of the memory according to the types of the symbol mappers 1315a and 1315b.

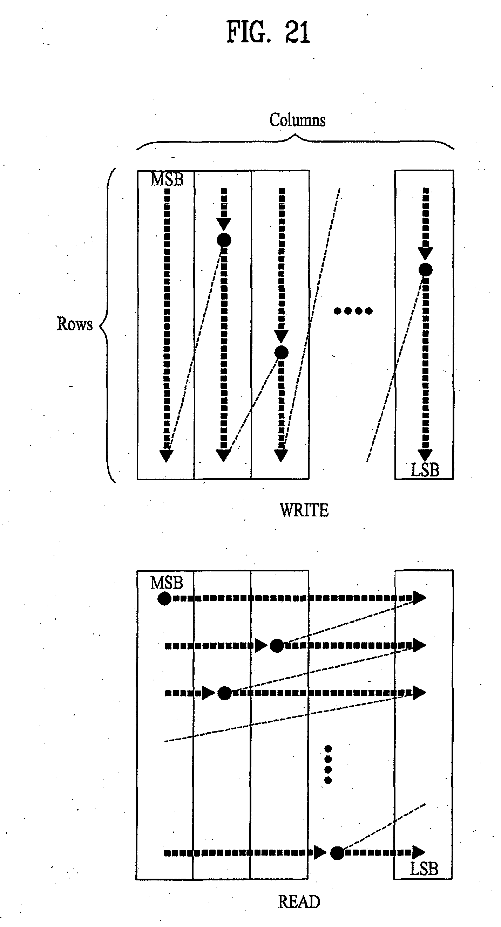

FIG. 21 illustrates another example of the bit interleavers which perform interleaving. If bit interleavers 1312a and 1312b store bits in units of column, they can store the bits to generate offset of the location where the bits are stored, in each column. If the bit interleavers 1312a and 1312b read the stored bits in units of row, they can store the bits as much as offset of the location where the bits are read, in each row.

In the example of FIG. 21, thick dots respectively represent the location of offset. For example, the bit interleavers store bits in units of column. In the first column, the bits are stored from the first row to the nth row (n is the number of rows of the memory) in due order. In the second column, the bits are stored from the row (referred to as r1 th row) with a thick dot to the nth row, and then the bits are stored from the first row to the r1-1th. In the third column, the bits are stored from the r2th row with a thick dot to the nth row, and then the bits are stored from the first row to the r2-1th. In this way, the bits are stored in each column in accordance with circular addressing of the rows from the row away as much as the offset of the stored location.

If the bit interleavers 1312a and 1312b read the bits stored therein, they read the bits from each row in accordance with circular addressing of the columns from the location away as much as the offset. For example, in the first row, the bit interleavers read the stored bits from the first column to the mth column (m is the number of columns of the memory) in due order. In the second row, the bit interleavers read the stored bits from the column (referred to as C1th column) with a thick dot to the mth column and then from the first column to the (C1-1)th column. In the third row, the bit interleavers read the stored bits from the column (referred to as C2th column) with a thick dot to the mth column, and read the bits from the first column to the (C2-1)th column in accordance with circular addressing of the columns.

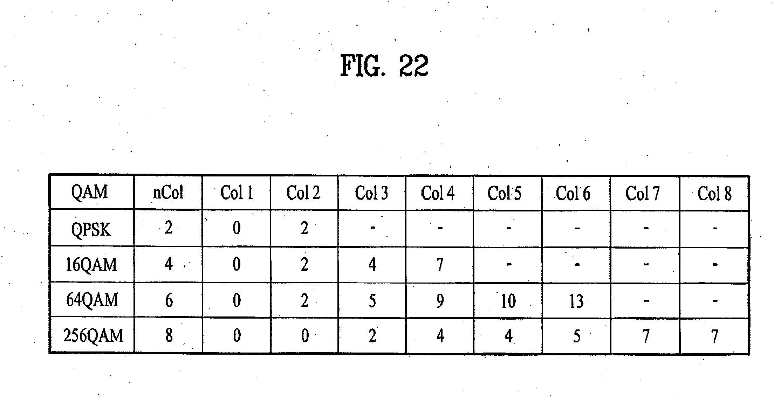

FIG. 22 illustrates offset used in bit interleaving in accordance with a symbol mapping method. nCo1 represents the number of columns of the memory of the bit interleaver. If the symbol mapping method is QPSK, the number of columns of the memory could be two (2). The bit interleaver can store and read the bits using offset corresponding to the second row in the second column Col2.

If the symbol mapping method is 16QAM, the number of columns of the memory could be four(4). The bit interleaver can store and read the bits in accordance with offset corresponding to the second row in the second column Col2, the fourth row in the third column Co13, and the seventh row in the fourth column Col4.

If the symbol mapping method is 64QAM, the number of columns of the memory could be six(6). The bit interleaver can store and read the bits in accordance with offset corresponding to the second row in the second column Col2, the fifth row in the third column Col3, the ninth row in the fourth column Col4, the tenth row in the fifth column Col5, and the thirteenth row in the sixth column Col6.

If the symbol mapping method is 256QAM, the number of columns of the memory could be eight(8). The bit interleaver can store and read the bits in accordance with offset corresponding to the second row in the third column Col3, the fourth row in the fourth column Col4, the fourth row in the fifth column Col5, the fifth row in the sixth column Col6, the seventh row in the seventh column Col7, and the seventh row in the eighth column Col8.

As described above, the number of columns in the memory of the bit interleaver is varied depending on the symbol mapping method, and the bit interleaver can store and read bits by varying offset depending on the number of columns. The number of bits included in one symbol according to the symbol mapping method could be identical with the number of columns. Accordingly, after reading bits, the bit interleaver can map the read bits with one symbol in accordance with the corresponding mapping method. In this case, the bits mapped with the symbol can be permuted. Also, even though error correction capability of bits in a specific location is lowered in accordance with an error correction symbol method, since the bits mapped with the symbol are permuted in the bit interleaver, the error correction capability of the error correction symbol method can be maximized.

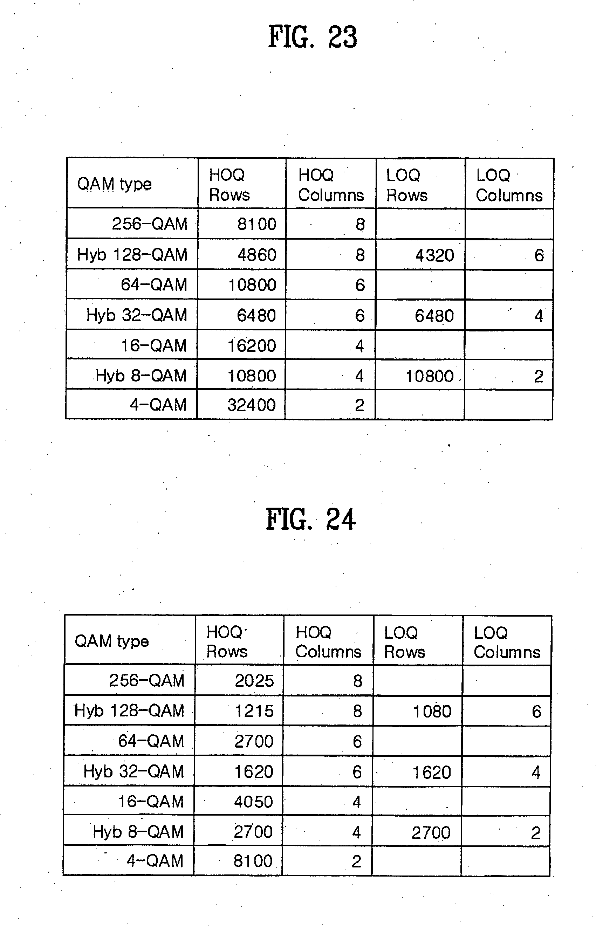

Fig. 23 is a view showing an example of the number of rows and columns of memories of the bit interleavers 1312a and 1312b according to the types of symbol mappers 1315a and 1315b, if the LDPC mode is the normal mode.

For example, if the symbol mapper 1315a maps the bits to 256QAM symbols, the first order interleaver 1312a interleaves the bits by a memory having 8100 rows and 8 columns. If the symbols are mapped by 64QAM, the first order interleaver 1312a interleaves the bits by a memory having 10800 rows and 6 columns. If the symbols are mapped by 16QAM, the first order interleaver 1312a interleaves the bits by a memory having 16200 rows and 4 columns.

For example, if the symbol mappers 1315a and 1315b map the bits to Hyb128-QAM symbols, the first order interleaver 1312a interleaves the bits using a memory having 4860 rows and 8 columns, and the second order interleaver 1312b interleaves the bits using a memory having 4320 rows and 6 columns.

Similarly, if the symbol mappers 1315a and 1315b map the symbols by Hyb32-QAM, the first order interleaver 1312a interleaves the bits using a memory having 6480 rows and 6 columns, and the second order interleaver 1312b interleaves the bits using a memory having 6480 rows and 4 columns.

Fig. 24 is a view showing an example of the number of rows and columns of the memories of the bit interleavers 1312a and 1312b according to the types of the symbol mappers 1315a and 1315b, if the LDPC mode is the short mode.

For example, if the symbol mapper 1315a maps the bits to 256QAM symbols, the first order interleaver 1312a interleaves the bits by a memory having 2025 rows and 8 columns. If the symbol mappers 1315a and 1315b map the symbols by Hyb128-QAM, the first order interleaver 1312a interleaves the bits using a memory having 1215 rows and 8 columns, and the second order interleaver 1312b interleaves the bits using a memory having 1080 rows and 6 columns.

If the bit interleaving is performed with respect to the error-correction-coded block, the locations of the bits in the error-correction-coded block may be changed.

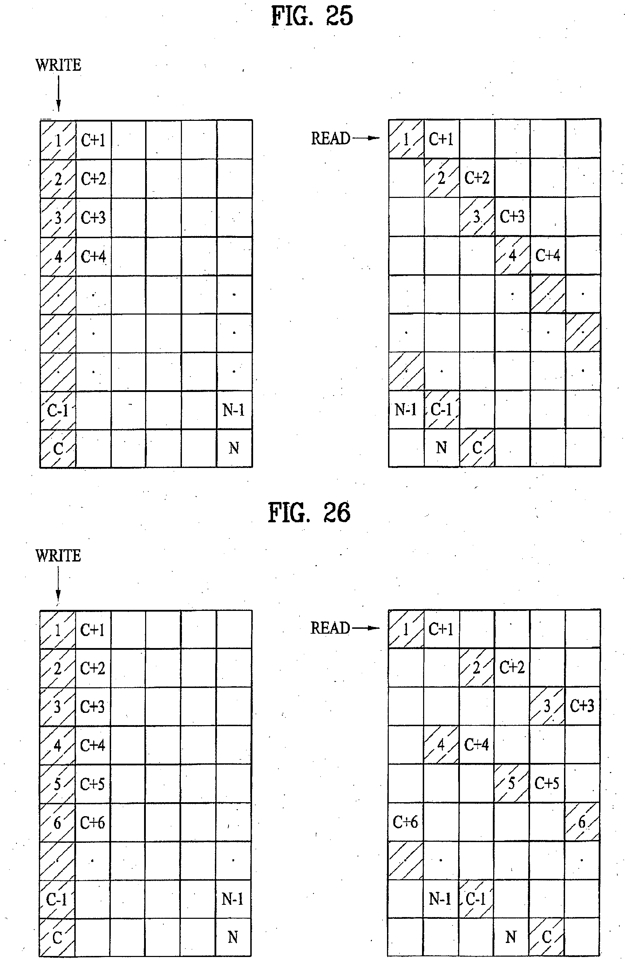

FIG. 25 is a diagram showing the concept of another embodiment of interleaving of a bit interleaver. In the embodiment shown in this drawing, when bits are written in a memory, the bits are written in a column direction. When the written bits are read, the bits of the circularly shifted locations are read in a row direction. In each row, the bits written in each row is circularly shifted. If the bits are written or read by a circular shift method with respect to the row or the column of the memory, this is called twisted bit interleaving. This embodiment relates to the twisted bit interleaving method using a method of reading the bits after the bits are shifted by one column in row direction. Instead of shifting the written bits in the memory, the point for reading bits in the memory or the point for writing bits in the memory can be shifted.

In this embodiment, N denotes the length of the error correction coded block and C denotes the length of the column. When the bits are written, the bits are written in a first column (represented by a shadow) in order of 1, 2, 3, 4, ..., and C and the bits are written in a second column in order of C+1, C+2, C+3, ....

The written bits are twisted in the row direction one column by one column.

If the written bits are read, the twisted bits are read in the row direction. For example, in this embodiment, the bits are read in a first row in order of 1, C+1, ... and the bits are read in a second row in order of X1, 2, C+2, ...(X1 is a bit in the first column of the second row). The bits are read by row by row and the circularly shifted bits are read. Of course, instead of shifting the written bits in the memory, the point for reading bits written in the memory can be shifted.

FIG. 26 is a view showing another embodiment of bit interleaving. In this embodiment, N denotes the length of the error correction coded block and C denotes the length of the column. When the bits are written, the bits are written in a first column in order of 1, 2, 3, 4, ..., C-1, and C and the bits are written in a second column in order of C+1, C+2, C+3, ....

The written bits are double-twisted in the row direction two columns by two columns. If the written bits are read, the bits circularly shifted by two columns are read in the column direction in every row. This method may be called a double twisted bit interleaving method.

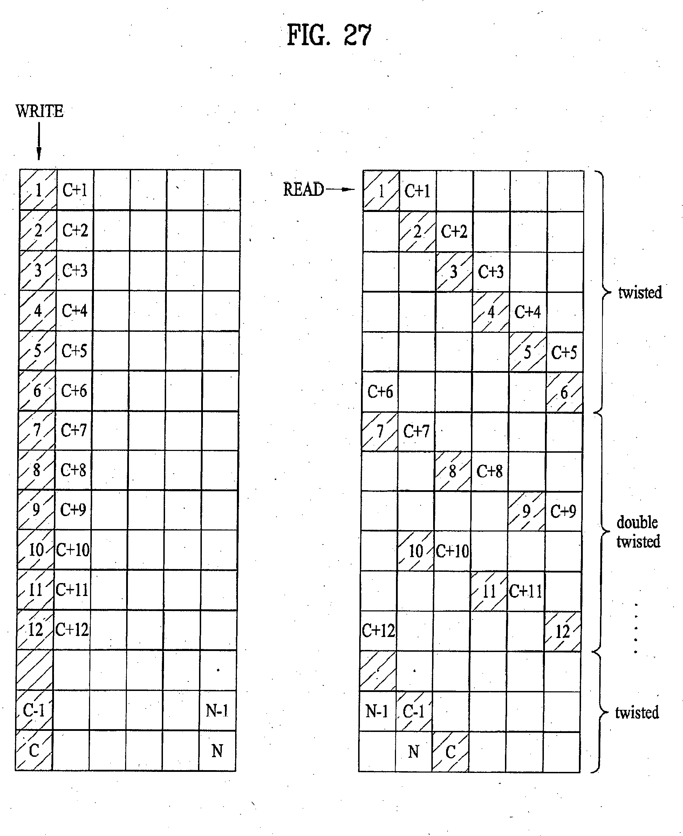

FIG. 27 is a view showing another embodiment of bit interleaving. In this embodiment, N denotes the length of the error correction coded block and C denotes the length of the column. The bits are written in a first column in order of 1, 2, 3, 4, ..., C-1, and C and the bits are written in a second column in order of C+1, C+2, C+3, ....

When the written bits are read, in a first region of the rows, the bits may be read by the twisted bit interleaving method.

In a second region of the rows, the bits may be read by the double twisted interleaving method.

In a third region of the rows, the bits may be read by the twisted bit interleaving method.

If the bits are interleaved by at least one of the twisted bit interleaving method and the double twisted interleaving method, the bits in the error correction coded block can be more randomly mixed.

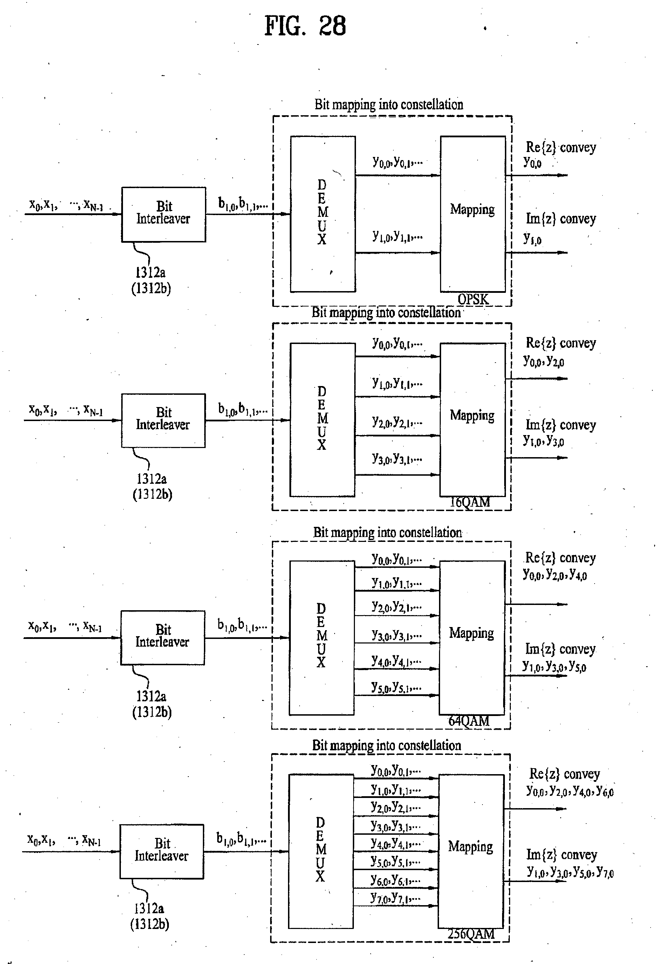

FIG. 28 is a view showing the concept of multiplexing of input bits of the demuxs 1313a and 1313b.

The bit interleavers 1312a and 1312b interleave the input bits x0, x1, ..., and xn-1 and output the interleaved bits. The interleaving method is already described above.

The demuxs 1313a and 1313b demultiplex the interleaved bit streams. The demultiplexing method may vary according to the code rate of the error correction coding method and the symbol mapping method of the symbol mapper. If the symbol method of the symbol mapper is QPSK, the input bits, for example, are interleaved to two sub streams and the symbol mapper maps the two sub streams to the symbols so as to correspond to the real axis and the imaginary axis of the constellation. For example, a first bit y0 of the demultiplexed first sub stream corresponds to the real axis and a first bit y1 of the demultiplexed second sub stream corresponds to the imaginary axis.

If the symbol method of the symbol mapper is 16QAM, the input bits, for example, are demultiplexed to four sub frames. The symbol mapper selects the bits included in the four sub streams and maps the selected bits to the symbols so as to correspond to the real axis and the imaginary axis of the constellation.

For example, the bits y0 and y2 of the demultiplexed first and third sub streams correspond to the real axis and the bits y1 and y3 of the demultiplexed second and fourth sub streams correspond to the imaginary axis.

Similarly, if the symbol method of the symbol mapper is 64QAM, the input bits may be demultiplexed to six bit streams. The symbol mapper maps the six sub streams to the symbols so as to correspond to the real axis and the imaginary axis of the constellation. For example, the demultiplexed first, third and fifth sub stream bits y0, y2 and y4 correspond to the real axis and the demultiplexed second, fourth and sixth sub stream bits y1, y3 and y6 correspond to the imaginary axis.

Similarly, if the symbol method of the symbol mapper is 256QAM, the input bits may be demultiplexed to eight bit streams. The symbol mapper maps the eight sub streams to the symbols so as to correspond to the real axis and the imaginary axis of the constellation. For example, first, the demultiplexed first, third fifth and seventh sub stream bits y0, y2, y4 and y6 correspond to the real axis and the demultiplexed second, fourth, sixth and eighth sub stream bits y1, y3, y6 and y7 correspond to the imaginary axis.

If the symbol mapper maps the symbols, the sub streams demultiplexed by the demux may be mapped to the bit streams of the real axis and the imaginary axis of the constellation.

The above-described bit interleaving method, demultiplexing method and symbol mapping method are exemplary and various methods may be used as the method of selecting the bits in the sub streams such that the sub streams demultiplexed by the demux may correspond to the real axis and the imaginary axis of the constellation.

The cell word mapped to the symbols may vary according to any one of the error-corrected bit streams according to the code rate, the method of interleaving the bit streams, the demultiplexing method and the symbol mapping method. The MSB of the cell word is higher than the LSB of the cell word in the reliability of the error correction decoding. Although the reliability of the bit of a specific location of the error-correction-coded block is low, the reliability of the bit can be improved by the symbol demapping process if the bit of the cell word is arranged on the MSB or close to the MSB.

Accordingly, although the reliability of the bit coded according to the characteristics of the H-matrix used in the irregular LDPC error correction coding method is changed, the bit can be robustly transmitted/received by the symbol mapping and demapping process and the system performance can be adjusted.

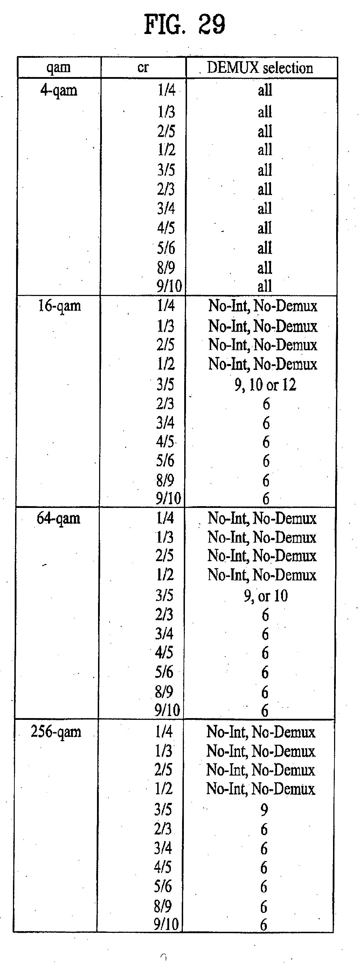

FIG. 29 is a view showing an embodiment of demultiplexing an input stream by the demux.

If the symbol mapping method is QPSK, two bits are mapped to one symbol and the two bits of one symbol unit are demultiplexed in order of the bit indexes (indexes 0 and 1 of b).

If the symbol mapping method is 16QAM, 4 bits are mapped to one symbol and the four bits of one symbol unit are demultiplexed according to the calculating result of the modulo-4 of bit indexes (indexes 0, 1, 2 and 3 of b).

If the symbol mapping method is 64QAM, 6 bits are mapped to one symbol and the six bits of one symbol unit are demultiplexed according to the calculating result of the modulo-6 of bit indexes (indexes 0, 1, 2, 3, 4 and 5 of b).

If the symbol mapping method is 256QAM, 8 bits are mapped to one symbol and the eight bits of one symbol unit are demultiplexed according to the calculating result of the modulo-8 of bit indexes (indexes 0, 1, 2, 3, 4, 5, 6 and 7 of b).

The demultiplexing order of the sub streams is exemplary and may be modified.

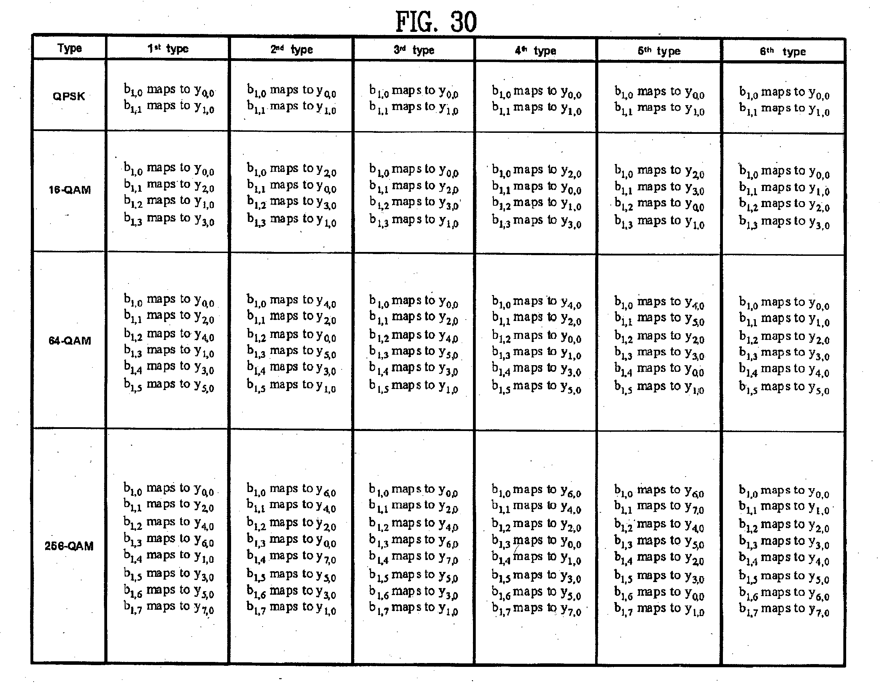

FIG. 30 is a view showing an example of a demultiplexing type according to a symbol mapping method. The symbol mapping method includes QPSK, 16QAM, 64QAM and 256QAM, and the demultiplexing type includes a first type to a sixth type.

The first type is an example in which the input bits sequentially correspond to even-numbered indexes (0, 2, 4, 8, ...) (or the real axis of the constellation) and sequentially correspond to odd-numbered indexes (1, 3, 5, 7, ...) (or the imaginary axis of the constellation). Hereinafter, the bit demultiplexing of the first type may be represented by a demultiplexing identifier 10 (a binary number of 1010; the location of 1 is the location of the MSB corresponding to the real axis and the imaginary axis of the constellation).

The second type is an example in which the demultiplexing is performed in reverse order of the first type, that is, the LSB of the input bits sequentially correspond to even-numbered indexes (6, 4, 2, 0) (or the real axis of the constellation) and odd-numbered indexes (1, 3, 5, 7, ...) (or the imaginary axis of the constellation). Hereinafter, the bit demultiplexing of the second type may be represented by a demultiplexing identifier 5 (a binary number of 0101).

The third type is an example in which the input bits are arranged such that the bits of the both ends of the codeword become the MSB. The input bits are rearranged so as to fill the code word from the both ends of the code word. Hereinafter, the bit demultiplexing of the third type may be represented by a demultiplexing identifier 9 (a binary number of 1001).

The fourth type is an example in which the input bits are arranged such that a middle bit of the code word becomes the MSB. A bit of the input bits is first filled in the middle location of the code word and the remaining bits are then rearranged toward the both ends of the code word in order of the input bits. Hereinafter, the bit demultiplexing of the fourth type may be represented by a demultiplexing identifier 6 (a binary number of 0110).

The fifth type is an example in which the bits are demultiplexed such that a last bit of the code word becomes the MSB and a first bit thereof becomes the LSB, and the sixth type is an example in which the bits are rearranged such that the first bit of the code word becomes the MSB and the last bit thereof becomes the LSB. Hereinafter, the bit demultiplexing of the fifth type may be represented by a demultiplexing identifier 3 (a binary number of 0011), and the bit demultiplexing of the sixth type may be represented by a demultiplexing identifier 12 (a binary number of 1100).

As described above, the demultiplexing type may vary according to the symbol mapping method or the code rate of the error correction coding method. That is, a different demultiplexing type may be used if the symbol mapping method or the code rate is changed.

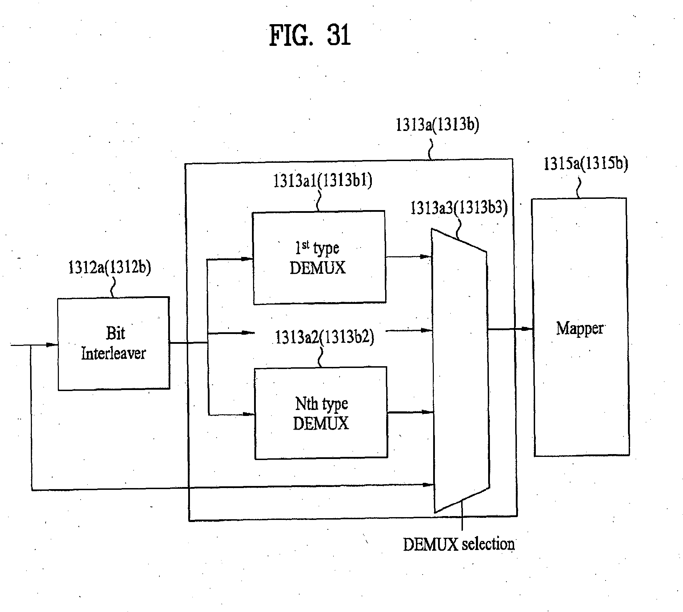

FIG. 31 is a view showing an embodiment of demultiplexing an input bit stream according to a demultiplexing type. This embodiment may include bit interleavers 1312a and 1312b, demuxs 1313a and 1313b and mappers 1315a and 1315b.

The bit interleavers 1312a and 1312b interleave the error-correction-coded PLP service streams. For example, the bit interleavers 1312a and 1312b may perform the bit interleaving in the error correction coding units according to the error correction coding mode. The bit interleaving method is already described above.

The demuxs 1313a and 1313b may include first type demuxs 1313a1 and 1313b1, ..., and $n^{th}$ type demuxs 1313a2 and 1313b2. Here, n is an integer. The methods of demultiplexing the bits by the n types of demuxs follow the types shown in FIG. 17. For example, the first type demuxs may correspond to the first type bit demultiplexing (1100) and the second type demux (not shown) may correspond to the second type bit demultiplexing (0011). The $n^{th}$ type demux 1313b demultiplexes the input bit stream according to the $n^{th}$ type bit multiplexing (e.g., the demultiplexing identifier 1100) and outputs the demultiplexed bit stream. Selectors 1313a3 and 1313b3 receive a demux selection signal of the demultiplexing type suitable for the input bits and output the demultiplexed bit stream according to any one of the first type to the $n^{th}$ type and the demux selection signal. The demux selection signal may vary according to the code rate of the error correction coding and the symbol mapping method of the constellation. Accordingly, the demultiplexing type may be determined according to the code rate of the error correction coding method or/and the symbol mapping method of the constellation. The detailed example according to the symbols mapped to the constellation or/and the code rate of the error correction coding according to the demux selection signal will be described later.

The mappers 1315a and 1315b may map the demultiplexed sub bit streams to the symbols according to the demux selection signal and output the mapped symbols.

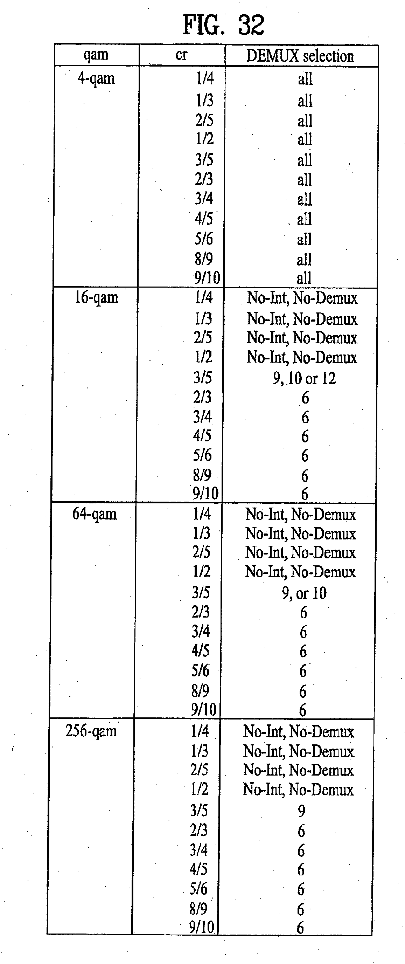

FIG. 32 is a view showing a demultiplexing type which is determined according to a code rate of the error correction coding and the symbol mapping method.

In the 4QAM symbol mapping method, even when the code rate cr of the LDPC error correction coding method is any one of 1/4, 1/3, 2/5, 1/2, 3/5, 2/3, 3/4, 4/5, 5/6, 8/9 and 9/10, the bit stream can be demultiplexed according to all the demultiplexing types (denoted by all).

In the 16QAM symbol mapping method, if the code rate of the LDPC error correction coding method is 1/4, 1/3, 2/5 and 1/2, the symbols can be mapped without performing the bit interleaving and the bit demultiplexing (denoted by No-Int and No-Demux). If the code rate of the error correction coding is 3/5, the bit can be demultiplexed according to any one of the demultiplexing identifiers 9, 10 and 12. If the code rate of the error correction coding is 2/3, 3/4, 4/5, 5/6, 8/9 and 9/10, the input bit stream can be demultiplexed according to the demultiplexing identifier 6.

In the 64QAM symbol mapping method, if the code rate of the LDPC error correction coding is 1/4, 1/3, 2/5 and 1/2, the symbols can be mapped without performing the bit interleaving and the bit demultiplexing. If the code rate is 3/5, the bits can be demultiplexed according to any one of the demultiplexing identifiers 9 and 10. If the code rate is 2/3, 3/4, 4/5, 5/6, 8/9 and 3/10, the bits can be demultiplexed according to the demultiplexing identifier 6.

In the 256QAM symbol mapping method, if the code rate of the LDPC error correction coding is 1/4, 1/3, 2/5 and 1/2, the symbols can be mapped without performing the bit interleaving and the bit demultiplexing. If the code rate is 3/5, the bits can be demultiplexed according to the demultiplexing identifier 9. If the code rate is 2/3, 3/4, 4/5, 5/6, 8/9 and 9/10, the bits can be demultiplexed according to the demultiplexing identifier 6.

As described above, the bit demultiplexing type may vary according to the code rate used for the error correction coding and the symbol mapping method. Accordingly, the error correction capability of a bit located on a specific location of the error-correction-coded block may be adjusted by mapping the demultiplexed sub streams to the symbols. Accordingly it is possible to optimize the robustness in the bit level.

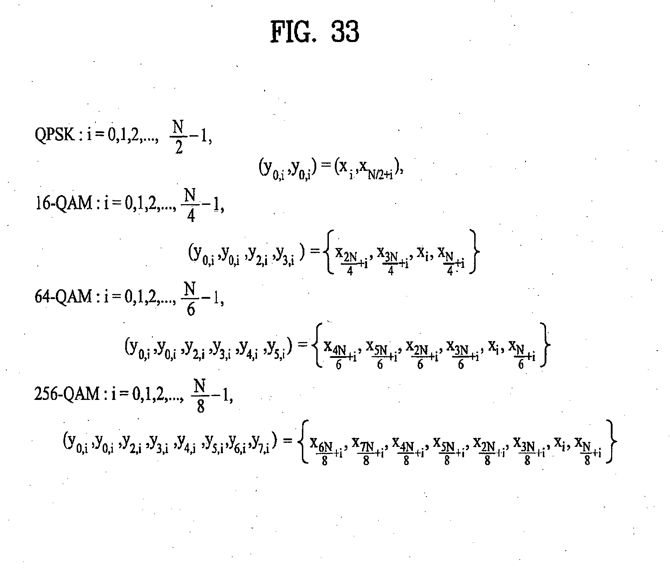

FIG. 33 is a view showing an example of expressing the demultiplexing method by an equation. For example, if the symbol mapping method is QPSK, the input bits $(x_i, x_{N/2+i})$ correspond to the demultiplexed bits y0 and y1. If the symbol mapping method is 16QAM, the input bits $\left( x_{\frac{2N}{4}+i}, x_{\frac{3N}{4}+i}, x_i, x_{\frac{n}{4}+i} \right)$ correspond to the demultiplexed bits y0, y1, y2 and y3.

If the symbol mapping method is 64QAM, the input bits $\left( x_{\frac{4N}{6}+i}, x_{\frac{5N}{6}+i}, x_{\frac{2N}{6}+i}, x_{\frac{3N}{6}+i}, x_i, x_{\frac{N}{6}+i} \right)$ correspond to the demultiplexed bits y0, y1, y2, y3, y4 and y5.

If the symbol mapping method is 256QAM, the input bits $\left( x_{\frac{6N}{8}+i}, x_{\frac{7N}{8}+i}, x_{\frac{4N}{8}+i}, x_{\frac{5N}{8}+i}, x_{\frac{2N}{8}+i}, x_{\frac{3N}{8}+i}, x_i, x_{\frac{N}{8}+i} \right)$ correspond to the demultiplexed bits y0, y1, y2, y3, y4, y5, y6 and y7.

Here, N denotes the number of bits mapped to the symbols with respect to the input of the bit interleaver.

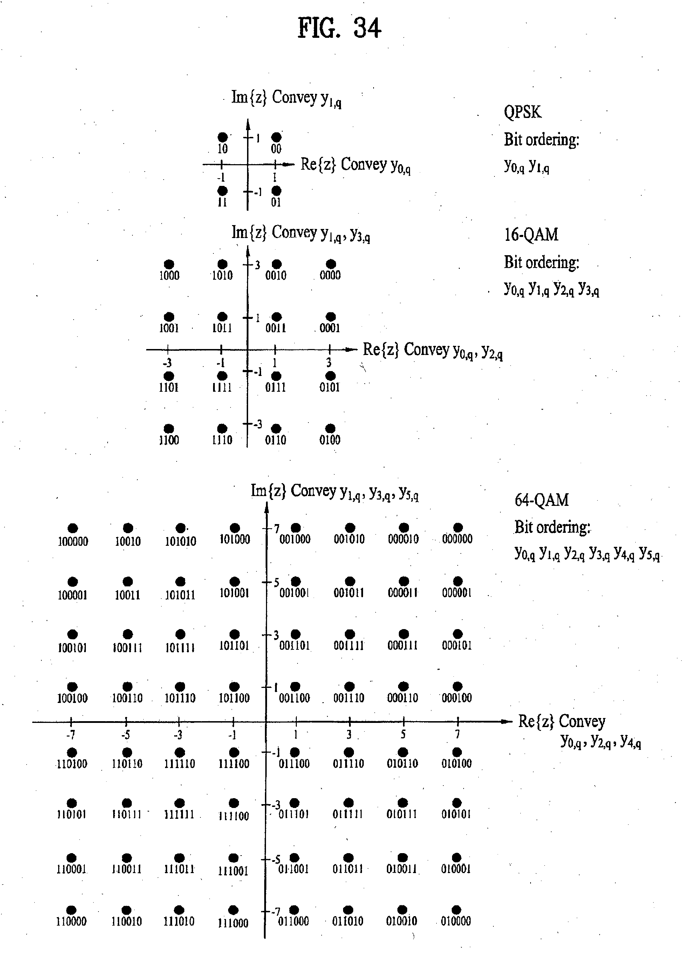

FIG. 34 is a view showing an example of mapping a symbol by a symbol mapper. For example, in the QPSK symbol mapping method, the symbols on the constellation correspond to the value of the bit y0 of the demultiplexed first sub stream and the value of the bit y1 of the demultiplexed second sub stream.

In the 16QAM, the real axis of the symbols on the constellation corresponds to the bits of the demultiplexed first and third sub streams (bits separated from the location of the MSB by 0 and 2) and the imaginary axis thereof corresponds to the bits of the demultiplexed second and fourth sub streams (bits separated from the location of the MSB by 1 and 3).

In the 64QAM, the real axis of the symbols on the constellation corresponds to the bits of the demultiplexed first, third, and fifth sub streams (bits separated from the location of the MSB by 0, 2 and 4) and the imaginary axis thereof corresponds to the bits of the demultiplexed second, fourth and sixth sub streams (bits separated from the location of the MSB by 1, 3 and 5).

Accordingly, the bits configuring the symbol may be mapped to the cell word in the demultiplexing order. If the bits configuring the cell word are demultiplexed, the MSB and the LSB of the cell word are changed and the robustness of the bits can be adjusted although the reliabilities of the LDPC error-correction-coded bits vary according to the locations.

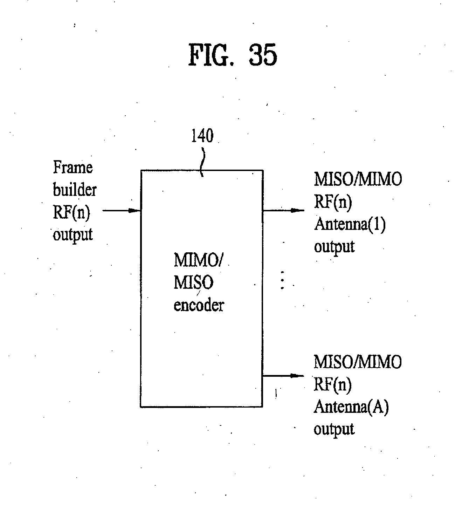

FIG. 35 is a block diagram illustrating a MIMO/MISO encoder according to an embodiment of the present invention. The MIMO/MISO encoder encodes the input data using the MIMO/MISO encoding scheme, and outputs the encoded data to several paths. If a signal reception end receives the signal transmitted to the several paths from one or more paths, it is able to acquire a gain (also called a diversity gain, a payload gain, or a multiplexing gain).

The MIMO/MISO encoder 140 encodes service data of each path generated from the frame builder 130, and outputs the encoded data to the A number of paths corresponding to the number of output antennas.

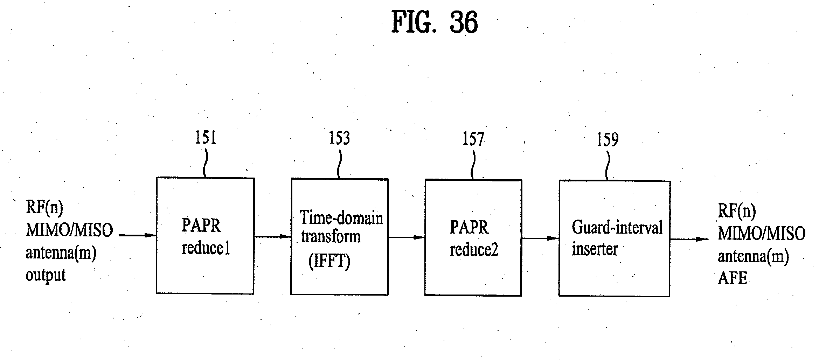

FIG. 36 is a block diagram illustrating a modulator according to an embodiment of the present invention. The modulator includes a first power controller (PAPR Reduce1) 151, a time-domain transform unit (IFFT) 153, a second power controller (PAPR Reduce2) 157, and a guard-interval inserter 159.

The first power controller 151 reduces a PAPR (Peak-to-Average Power Ratio) of data transmitted to the R number of signal paths in the frequency domain.

The time-domain transform (IFFT) unit 153 converts the received frequency-domain signals into time-domain signals. For example, the frequency-domain signals may be converted into the time-domain signals according to the IFFT algorithm. Therefore, the frequency-domain data may be modulated according to the OFDM scheme.

The second power controller (PAPR Reduce2) 157 reduces a PAPR (Peak-to-Average Power Ratio) of channel data transmitted to the R number of signal paths in the time domain. In this case, a tone reservation scheme, and an active constellation extension (ACE) scheme for extending symbol constellation can be used.

The guard-interval inserter 159 inserts the guard interval into the output OFDM symbol, and outputs the inserted result. As described above, the above-mentioned embodiment can be carried out in each signal of the R number of paths.

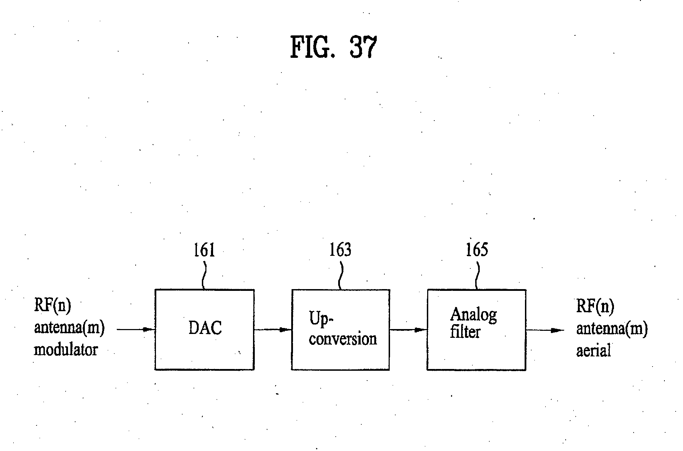

FIG. 37 is a block diagram illustrating an analog processor 160 according to an embodiment of the present invention. The analog processor 160 includes a digital-to-analog converter (DAC) 161, an up-conversion unit 163, and an analog filter 165.

The DAC 161 converts the input data into an analog signal, and outputs the analog signal. The up-conversion unit 163 converts a frequency domain of the analog signal into an RF area. The analog filter 165 filters the RF-area signal, and outputs the filtered RF signal.

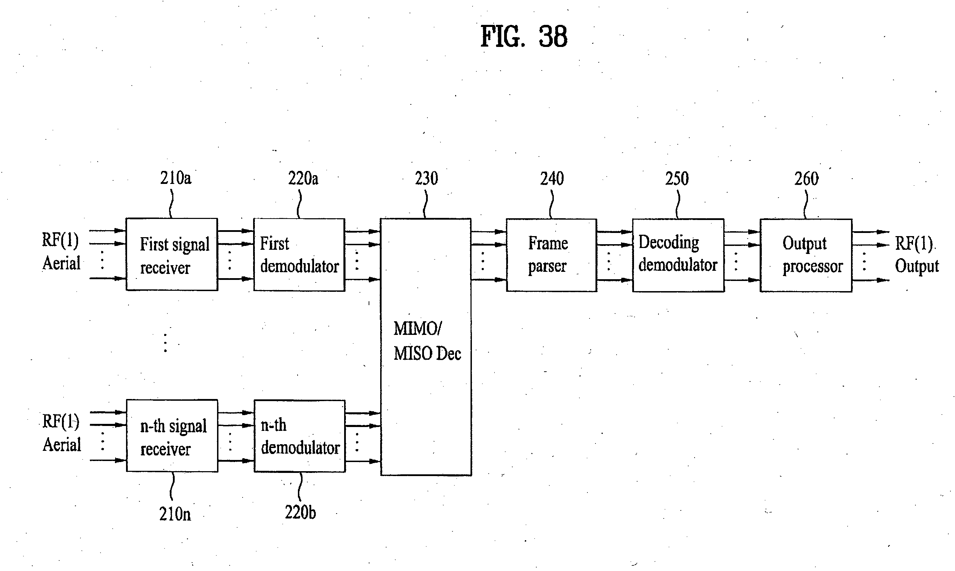

FIG. 38 is a block diagram illustrating an apparatus for receiving a signal according to an embodiment of the present invention. The signal reception apparatus includes a first signal receiver 210a, an n-th signal receiver 210n, a first demodulator 220a, an n-th demodulator 220n, a MIMO/MISO decoder 230, a frame parser 240, and a decoding demodulator 250, and an output processor 260.

In the case of a reception signal according to the TFS signal frame structure, several services are multiplexed to R channels, and are then time-shifted, such that the time-shifted result is transmitted.

The receiver may include at least one signal receiver for receiving a service transmitted over at least one RF channel. The TFS signal frame transmitted to the R (where R is a natural number) number of RF channels can be transmitted to a multi-path via the A number of antennas. The A antennas have been used for the R RF channels, such that a total number of antennas is R x A.

The first signal receiver 210a is able to receive service data transmitted via at least one path from among overall service data transmitted via several RF channels. For example, the first signal receiver 210a can receive the transmission signal processed by the MIMO/MISO scheme via several paths.

The first signal receiver 210a and the n-th signal receiver 210n can receive several service data units transmitted over n number of RF channels from among several RF channels, as a single PLP. Namely, this embodiment shows the signal reception apparatus capable of simultaneously receiving data of the R number of RF channels. Therefore, if this embodiment receives a single RF channel, only the first receiver 210a is needed.

The first demodulator 220a and the n-th demodulator 220n demodulate signals received in the first and n-th signal receivers 210a and 210n according to the OFDM scheme, and output the demodulated signals.

The MIMO/MISO decoder 230 decodes service data received via several transmission paths according to the MIMO/MISO decoding scheme, and outputs the decoded service data to a single transmission path. If the number R of services transmitted over several transmission paths are received, the MIMO/MISO decoder 230 can output single PLP service data contained in each of R services corresponding to the number of R channels. If P number of services are transmitted via the R number of RF channels, and signals of individual RF channels are received via the A number of antennas, the receiver decodes the P number of services using a total of (R x A) reception antennas.

The frame parser 240 parses the TFS signal frame including several services, and outputs the parsed service data.

The decoding demodulator 250 performs the error correction decoding on the service data contained in the parsed frame, demaps the decoded symbol data into bit data, and outputs the demapping-processed result.

The output processor 260 decodes a stream including the demapped bit data, and outputs the decoded stream.

In the above-mentioned description, each of the frame parser 240, and the decoding demodulator 250, and the output processor 260 receives several service data units as many as the number of PLPs, and performs signal processing on the received service data.

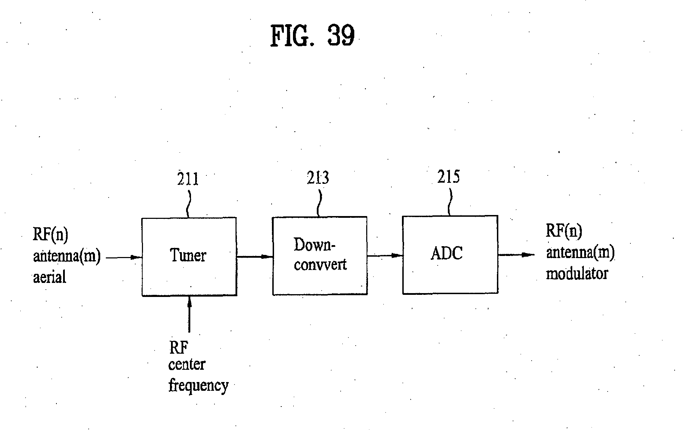

FIG. 39 is a block diagram illustrating a signal receiver according to an embodiment of the present invention. The signal receiver may include a tuner 211, a down-converter 213, and an analog-to-digital converter (ADC) 215.

The tuner 211 performs hopping of some RF channels capable of transmitting user-selected services in all RF channels when the PLP is included in several RF channels, and outputs the hopping result. The tuner 211 performs hopping of RF channels contained in the TFS signal frame according to input RF center frequencies, and at the same time tunes corresponding frequency signals, such that it outputs the tuned signals. If a signal is transmitted to A number of multi-paths, the tuner 211 performs the tuning to a corresponding RF channel, and receives reception signals via the A number of antennas.

The down converter 213 performs down conversion of the RF frequency of the signal tuned by the tuner 211, and outputs the downconversion result. The ADC 215 converts an analog signal into a digital signal.

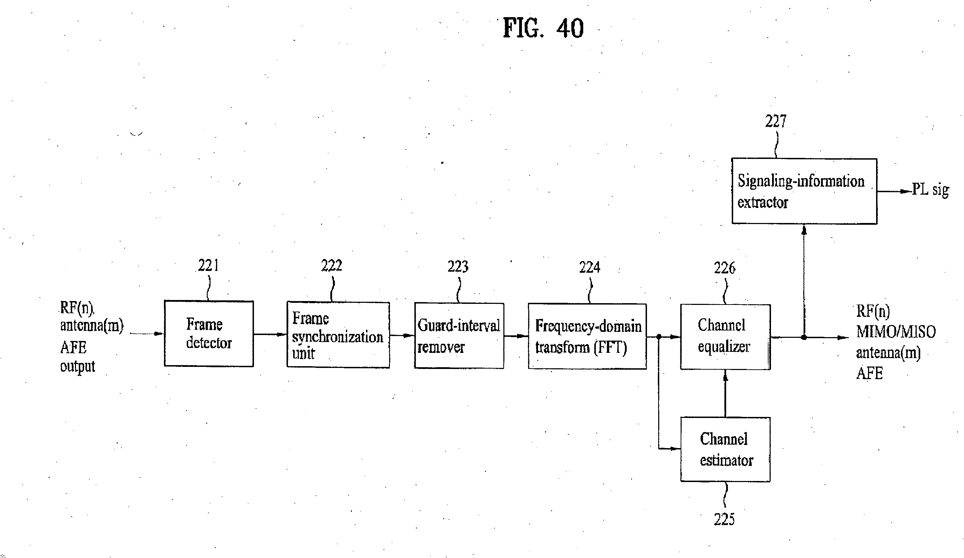

FIG. 40 is a block diagram illustrating a demodulator according to an embodiment of the present invention. The demodulator includes a frame detector 221, a frame synchronization unit 222, a guard-interval remover 223, a frequency-domain transform unit (FFT) 224, a channel estimator 225, a channel equalizer 226, and a signaling-information extractor 227.

If the demodulator acquires service data transmitted to a single PLP stream, the following signal demodulation will be carried out. A detailed description thereof will hereinafter be described.

The frame detector 221 identifies a delivery system of a reception signal. For example, the frame detector 221 determines whether the reception signal is a DVB-TS signal or not. And, the frame detector 221 may also determine whether a reception signal is a TFS signal frame or not. The frame synchronization unit 222 acquires time- and frequency-domain synchronization of the TFS signal frame.

The guide interval controller 223 removes a guard interval located between OFDM symbols from the time domain. The frequency-domain converter (FFT) 224 converts a reception signal into a frequency-domain signal using the FFT algorithm, such that it acquires frequency-domain symbol data.

The channel estimator 225 performs channel estimation of a reception channel using a pilot symbol contained in symbol data of the frequency domain. The channel equalizer 226 performs channel equalization of reception data using channel information estimated by the channel estimator 225.

The signaling information extractor 227 can extract the signaling information of a physical layer established in the first and second pilot signals contained in channel-equalized reception data.

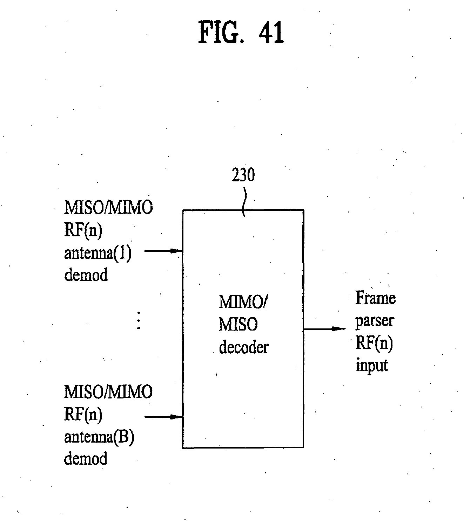

FIG. 41 is a block diagram illustrating a MIMO/MISO decoder according to an embodiment of the present invention. The signal receiver and the demodulator are designed to process a signal received in a single path. If the signal receiver and the demodulator receive PLP service data providing a single service via several paths of several antennas, and demodulate the PLP service data, the MIMO/MIMO decoder 230 outputs the signal received in several paths as service data transmitted to a single PLP. Therefore, the MIMO/MISO decoder 230 can acquire a diversity gain and a multiplexing gain from service data received in a corresponding PLP.

The MIMO/MISO decoder 230 receives a multi-path transmission signal from several antennas, and is able to decode a signal using a MIMO scheme capable of recovering each reception signal in the form of a single signal. Otherwise, the MIMO/MISO decoder 230 is able to recover a signal using a MIMO scheme which receives the multi-path transmission signal from a single antenna and recovers the received multi-path transmission signal.

Therefore, if the signal is transmitted via the R number of RF channels (where R is a natural number), the MIMO/MISO decoder 230 can decode signals received via the A number of antennas of individual RF channels. If the A value is equal to "1 ", the signals can be decoded by the MISO scheme. If the A value is higher than "1 ", the signals can be decoded by the MIMO scheme.

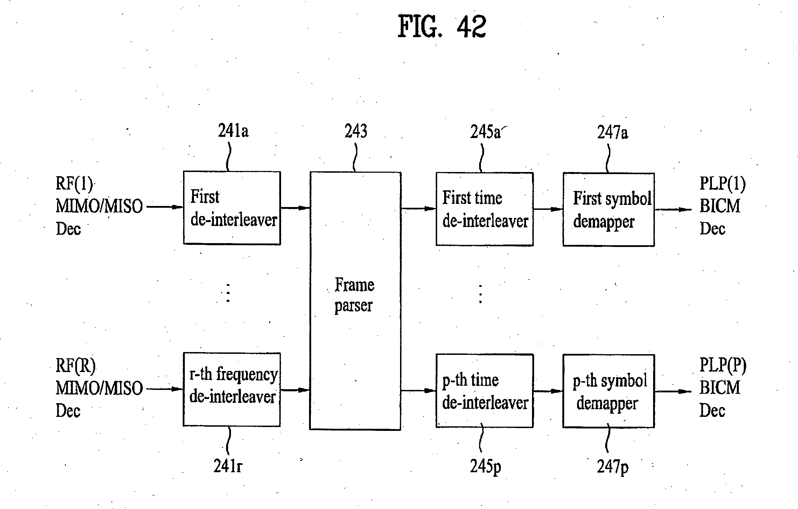

FIG. 42 is a block diagram illustrating a frame parser according to an embodiment of the present invention. The frame parser includes a first frequency de-interleaver 241 a, a r-th frequency de-interleaver 241 r, a frame parser 243, a first time de-interleaver 245a, a p-th time de-interleaver 245p, a first symbol demapper 247a, and a p-th symbol demapper. The value of "r" can be decided by the number of RF channels, and the value of "p" can be decided by the number of streams transmitting PLP service data generated from the frame parser 243.

Therefore, if p number of services are transmitted to p number of PLP streams over R number of RF channels, the frame parser includes the r number of frequency de-interleavers, the p number of time de-interleavers, and the p number of symbol demappers.

In association with a first RF channel, the first frequency interleaver 241 a performs de-interleaving of frequency-domain input data, and outputs the de-interleaving result.

The frame parser 243 parses the TFS signal frame transmitted to several RF channels using scheduling information of the TFS signal frame, and parses PLP service data contained in the slot of a specific RF channel including a desired service. The frame parser 243 parses the TFS signal frame to receive specific service data distributed to several RF channels according to the TFS signal frame structure, and outputs first-path PLP service data.

The first time de-interleaver 245a performs de-interleaving of the parsed first-path PLP service data in the time domain. The first symbol demapper 247a determines service data mapped to the symbol to be bit data, such that it can output a PLP stream associated with the first-path PLP service data.

Provided that symbol data is converted into bit data, and each symbol data includes symbols based on the hybrid symbol-mapping scheme, the p number of symbol demappers, each of which includes the first symbol demapper, can determine the symbol data to be bit data using different symbol-demapping schemes in individual intervals of the input symbol data.

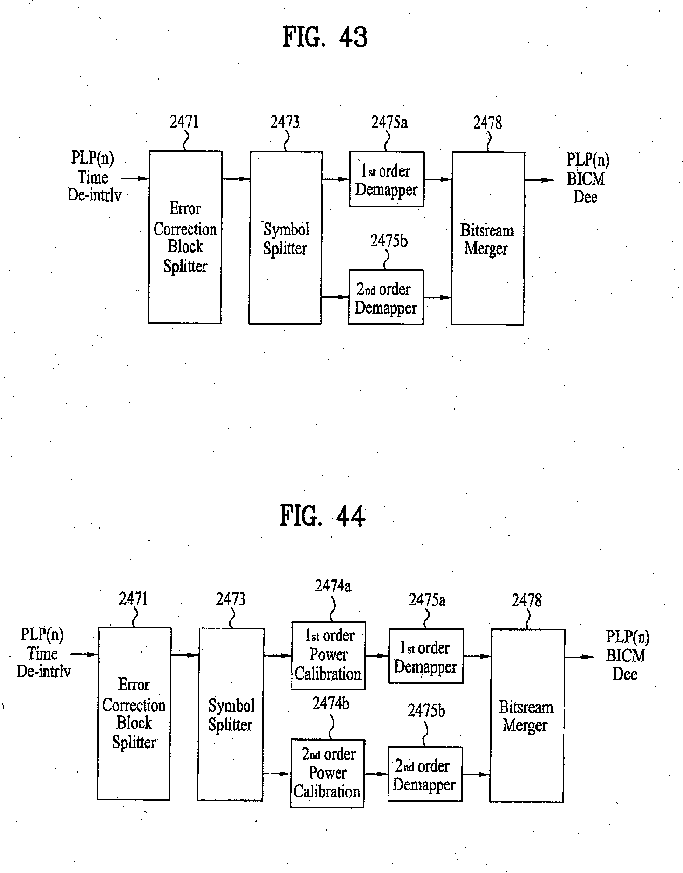

FIG. 43 is a view showing an embodiment of each of symbol demappers 247a and 247p. The symbol demappers receive the streams corresponding to the PLPs from the time interleavers 245a and 245p respectively corresponding to the symbol demappers.

Each of the symbol demappers 247a and 247p may include an error correction block splitter 2471, a symbol splitter 2473, a first order demapper 2475a, a second order demapper 2475b and a bit stream merger 2478.

The error correction block splitter 2471 may split the PLP stream received from the corresponding one of the time interleavers 245a and 245p in the error correction block units. The error correction block splitter 2471 may split the service stream in the normal mode LDPC block unit. In this case, the service stream may be split in a state in which four blocks according to the short mode (the block having the length of 16200 bits) are treated as the error correction block of one block according to the normal mode (the block having the length of 64800 bits).

The symbol splitter 2473 may split the symbol stream in the split error correction block according to the symbol mapping method of the symbol stream.

For example, the first order demapper 2475a converts the symbols according to the higher order symbol mapping method into the bits. The second order demapper 2475b converts the symbols according to the lower order symbol mapping method into the bits.

The bit stream merger 2478 may receive the converted bits and output one bit stream.

FIG. 44 is a view showing another embodiment of each of the symbol demappers 247a and 247p. The embodiment of this drawing is similar to the embodiment of FIG. 43 except that a first order power calibration unit 2474a and a second order power calibration unit 2474b are further included.

The first order power calibration unit 2474a receives the symbols split by the symbol splitter 2473, calibrates the power of the received symbols according to the symbol mapping schemes, and outputs the calibrated symbols. The power of the received symbols may have the power calibrated according to the size of the constellation based on the symbol mapping methods. The first order power calibration unit 2474a converts the power calibrated in accordance with the into the original symbol power of the constellation. The first order demapper 2475a may demap the symbols, of which the power is calibrated by the first order power calibration unit, to the bits.

Similarly, the second order power calibration unit 2474b receives the symbols split by the symbol splitter 2473, modified the calibrated power of the received symbols to the original power according to the size of the constellation, and outputs the modified symbols.

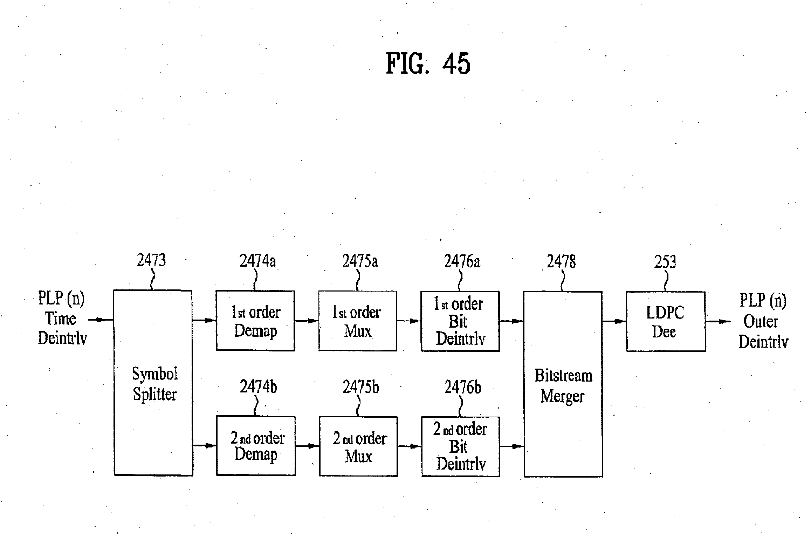

FIG. 45 is a view showing another embodiment of each of the symbol demappers 247a and 247p. Each of the symbol demappers 247a and 247p may include a symbol splitter 2473, a first order demapper 2474a, a second order demapper 2474b, a first order mux 2475a, a second order mux 2475b, a first order bit deinterleaver 2476a, a second order bit deinterleaver 2476b and a bit stream merger 2478. By this embodiment, the embodiment of the decoding and demodulation unit of FIG. 35 includes a first decoder 253, a first deinterleaver 255 and a second decoder 257.

The symbol splitter 2473 may split the symbol stream of the PLP according to the method corresponding to the symbol mapping method.

The first order demapper 2474a and the second order demapper 2474b convert the split symbol streams into bits. For example, the first order demapper 2474a performs the symbol demapping of the higher order QAM and the second order demapper 2474b performs the symbol demapping of the lower order QAM. For example, the first order demapper 2474a may perform the symbol demapping of 256QAM and the second order demapper 2474b may perform the symbol demapping of 64QAM.

The first order mux 2475a and the second order mux 2475b multiplex the symbol-mapped bits. The multiplexing methods may correspond to the demultiplexing methods described with reference to FIGs. 15 to 18. Accordingly, the demultiplexed sub streams may be converted into one bit stream.

The first order bit deinterleaver 2476a deinterleaves the bit streams multiplexed by the first order mux 2475a. The second order bit deinterleaver 2476b deinterleaves the bits multiplexed by the first order mux 2475a. The deinterleaving method corresponds to the bit interleaving method. The bit interleaving method is shown in FIG. 12.

The bit stream merger 2478 may merge the bit streams deinterleaved by the bit interleavers 2476a and 2476b to one bit stream.

The first decoder 253 of the decoding and demodulation unit may error correction decode the output bit stream according to the normal mode or the short mode and the code rate according to the modes.

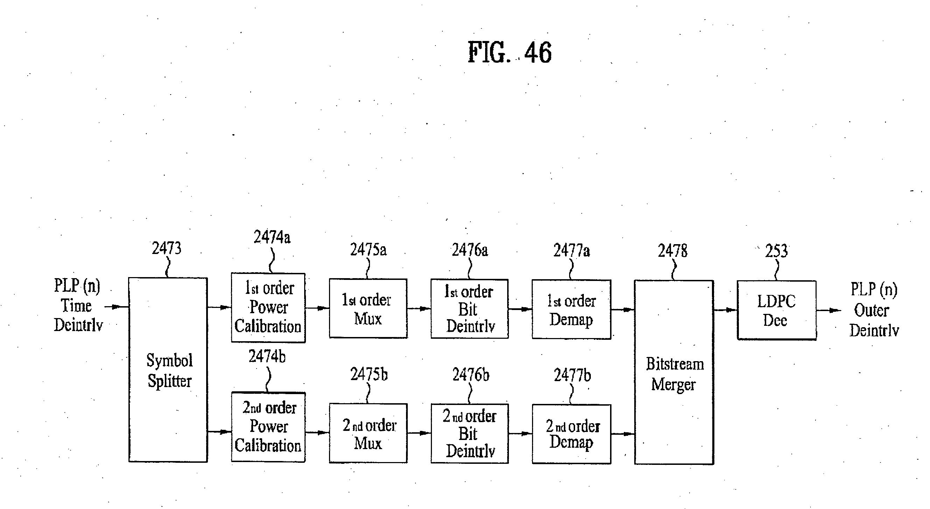

FIG. 46 is a view showing another embodiment of each of the symbol demappers 247a and 247p. The embodiment of this drawing is similar to the embodiment of FIG. 45 except that a first order power calibration unit 2474a and a second order power calibration unit 2474b are further included. The first order power calibration unit 2474a and the second order power calibration unit 2474b modify the calibrated powers of the symbols according to the symbol mapping methods and output the modified symbols to the symbol demappers 2475a and 2475b.

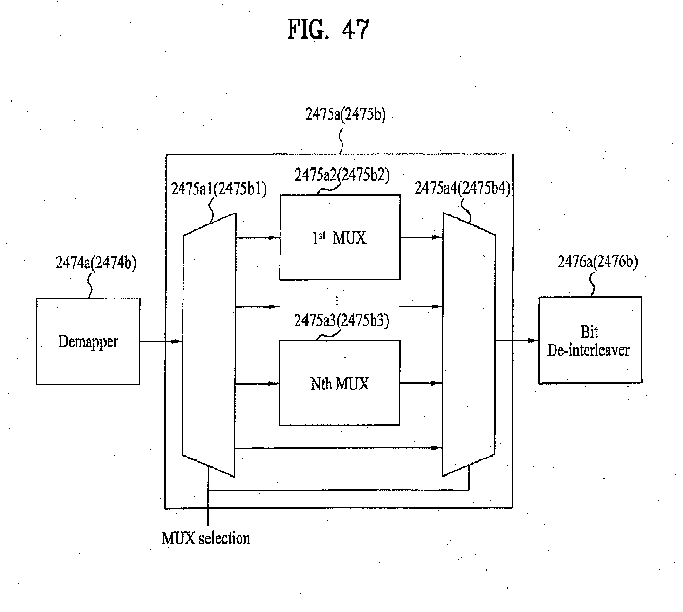

FIG. 47 is a view showing an embodiment of multiplexing the demultiplexed sub stream. In this embodiment, the demappers 2474a and 2474b decide the cell words including the bits. The muxs 2475a and 2475b multiplex the decided cell words according to the mux selection signal. The demultiplexed cell words are input to any one of first muxs 2475a2 and 2475b2 to nth muxs 2475a3 and 2475b3.

The first muxs 2475a2 and 2475b2 to the nth muxs 2475a3 and 2475b3 change the order of the bits in the cell words input according to the mux selection signal. The mux selection signal may be changed according to the code rate of the error correction coding or the symbol mapping method. In order to generate one stream and the bit streams delivered to the muxs, the order of selecting the sub stream may be changed according to the mux selection signal.

The first demuxs 2475a1 and 2475b1 output the symbol-demapped bit streams to any one of the first muxs 2475a2 and 2475b2 to the nth muxs 2475a3 and 2475b3 according to the mux selection signal. The first sub muxs 2475a1 and 2475b1 may receive the sub streams multiplexed by the first muxs 2475a2 and 2475b2 to the nth muxs 2475a3 and 2475b3 and output one stream, according to the mux selection signal.

The cell words including the changed bits are input to the bit interleavers 2476a and 2476b, and the bit deinterleavers 2476a and 2476b deinterleave the input bits and output the deinterleaved bits.

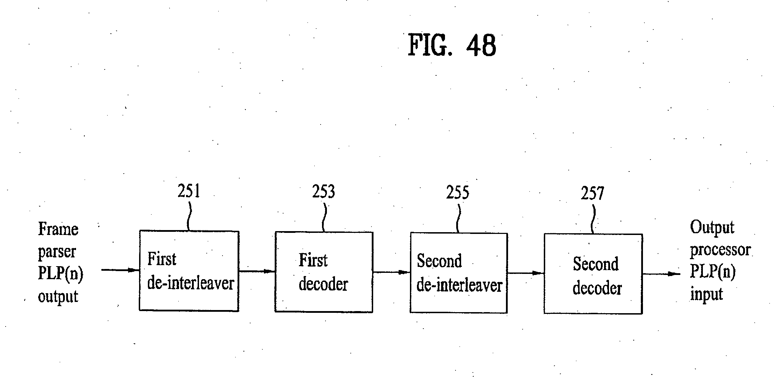

FIG. 48 is a block diagram illustrating a decoding demodulator according to an embodiment of the present invention. The decoding demodulator may include several function blocks corresponding to the coding and modulation unit. In this embodiment, the decoding demodulator of FIG. 16 may include a first de-interleaver 251, a first decoder 253, a second de-interleaver 255, and a second decoder 257. The second de-interleaver 255 can be selectively contained in the decoding demodulator.

The first de-interleaver 251 acts as an inner de-interleaver, and is able to perform de-interleaving of the p-th PLP stream generated from the frame parser.

The first decoder 253 acts as an inner decoder, can perform error correction of the de-interleaved data, and can use an error correction decoding algorithm based on the LDPC scheme.

The second de-interleaver 255 acts as an outer interleaver, and can perform de-interleaving of the error-correction-decoded data.

The second decoder 257 acts as an outer decoder. Data de-interleaved by the second de-interleaver 255 or error-corrected by the first decoder 253 is error-corrected again, such that the second decoder 257 outputs the re- error-corrected data. The second decoder 257 decodes data using the error correction decoding algorithm based on the BCH scheme, such that it outputs the decoded data.

The first de-interleaver 251 and the second de-interleaver 255 are able to convert the burst error generated in data contained in the PLP stream into a random error. The first decoder 253 and the second decoder 257 can correct errors contained in data.

The decoding demodulator shows operation processes associated with a single PLP stream. If the p number of streams exist, the p number of decoding demodulators are needed, or the decoding demodulator may repeatedly decode input data p times.

The first deinterleaver 251 or the second deinterleaver 255 can perform bit interleaving by varying the directions where the input bits are stored in and read from the memory. For bit interleaving, the first deinterleaver 251 or the second deinterleaver 255 can vary the number of columns of the memory in accordance with the symbol mapping method, and can allow offset to be respectively generated in the location where the bits are stored in each column and the location where the bits are read from each column. Considering offset of the bit interleaving illustrated in FIG. 22, offset is given to each column, and the input bits are stored and read in accordance with circular addressing. Therefore, the first deinterleaver 251 or the second deinterleaver 255 can deinterleave data in an inverse procedure of the methods illustrated in FIG. 21 and FIG. 22.

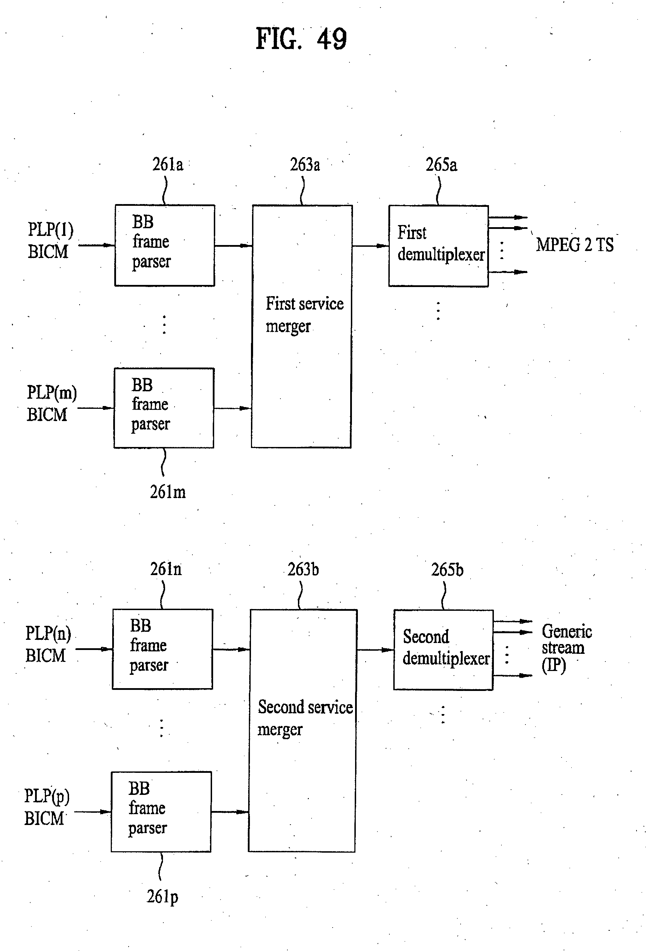

FIG. 49 is a block diagram illustrating an output processor according to an embodiment of the present invention. The output processor may include p number of baseband (BB) frame parsers (251 a, ..., 261 p), a first service merger 263a, a second service merger 263b, a first demultiplexer 265a, and a second demultiplexer 265b.

The BB frame parsers (261 a, ..., 261 p) remove BB frame headers from the first to p-th PLP streams according to the received PLP paths, and output the removed result. This embodiment shows that service data is transmitted to at least two streams. A first stream is an MPEG-2 TS stream, and a second stream is a GS stream.

The first service merger 263a calculates the sum of service data contained in payload of at least one BB frame, such that it outputs the sum of service data as a single service stream. The first demultiplexer 255a may demultiplex the service stream, and output the demultiplexed result.

In this way, the second service merger 263b calculates the sum of service data contained in payload of at least one BB frame, such that it can output another service stream. The second demultiplexer 255b may demultiplex the GS-format service stream, and output the demultiplexed service stream.

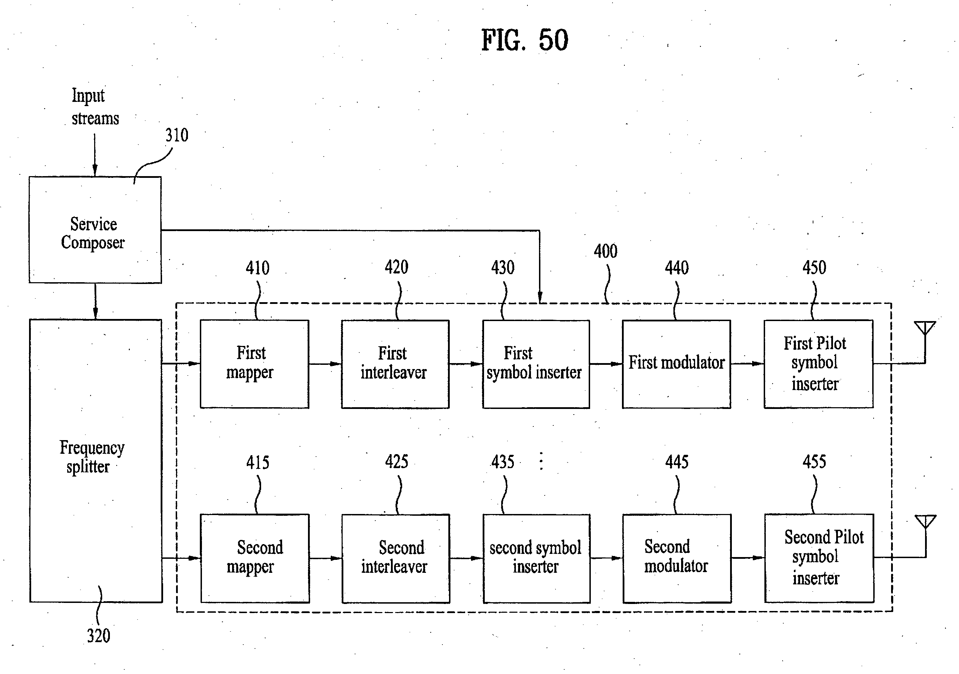

FIG. 50 is a block diagram illustrating an apparatus for transmitting a signal according to another embodiment of the present invention. The signal transmission apparatus includes a service composer 310, a frequency splitter 320, and a transmitter 400. The transmitter 400 encodes or modulates a signal including a service stream to be transmitted to each RF band.

The service composer 310 receives several service streams, multiplexes several service streams to be transmitted to individual RF channels, and outputs the multiplexed service streams. The service composer 310 outputs scheduling information, such that it controls the transmitter 400 using the scheduling information, when the transmitter 400 transmits the PLP via several RF channels. By this scheduling information, the service composer 310 modulates several service frames to be transmitted to the several RF channels by the transmitter 400, and transmits the modulated service frames.

The frequency splitter 320 receives a service stream to be transmitted to each RF band, and splits each service stream into several sub-streams, such that the individual RF frequency bands can be allocated to the sub-streams.

The transmitter 400 processes the service streams to be transmitted to individual frequency bands, and outputs the processed resultant streams. For example, in association with a specific service stream to be transmitted to the first RF channel, the first mapper 410 maps the input service stream data into symbols. The first interleaver 420 interleaves the mapped symbols to prevent the burst error.

The first symbol inserter 430 can insert a signal frame equipped with a pilot signal (e.g., a scatter pilot signal or a continual pilot signal) into the modulated signal.

The first modulator 440 modulates the data interleaved by the signal modulation scheme. For example, the first modulator 440 can modulate signals using the OFDM scheme.

The first pilot symbol inserter 450 inserts the first pilot signal and the second pilot signal in the signal frame, and is able to transmit the TFS signal frame.

Service stream data transmitted to the second RF channel is transmitted to the TFS signal frame via several blocks 415, 425, 435, 445, and 455 of different paths shown in the transmitter of FIG. 18.

The number of signal processing paths transmitted from the transmitter 400 may be equal to the number of RF channels contained in the TFS signal frame.

The first mapper 410 and the second mapper may respectively include the demultiplexers 1313a and 1313b, and allow the locations of the MSB and the LSB to be changed in the symbol-mapped cell word.

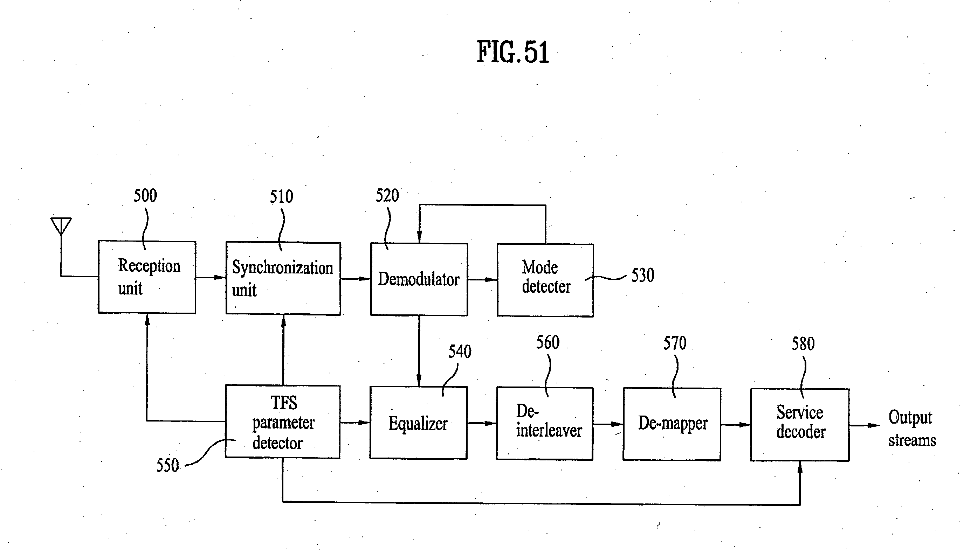

FIG. 51 is a block diagram illustrating an apparatus for receiving a signal according to another embodiment of the present invention. The signal reception apparatus may include a reception unit 510, a synchronization unit 520, a mode detector 530, an equalizer 540, a parameter detector 550, a de-interleaver 560, a demapper 570, and a service decoder 580.

The reception unit 500 is able to receive signals of a first RF channel selected by a user from among the signal frame. If the signal frame includes several RF channels, the reception unit 500 performs hopping of the several RF channels, and at the same time can receive a signal including the selected service frame.

The synchronization unit 510 acquires synchronization of a reception signal, and outputs the synchronized reception signal. The demodulator 520 is able to demodulate the synchronization-acquired signal. The mode detector 530 can acquire a FFT mode (e.g., 2k, 4k, 8k FFT operation length) of the second pilot signal using the first pilot signal of the signal frame.

The demodulator 520 demodulates the reception signal under the FFT mode of the second pilot signal. The equalizer 540 performs channel estimation of the reception signal, and outputs the channel-estimation resultant signal. The de-interleaver 560 de-interleaves the channel-equalized reception signal. The demapper 570 demaps the interleaved symbol using the symbol demapping scheme corresponding to the transmission-signal symbol mapping scheme (e.g., QAM).

The parameter detector 550 acquires physical parameter information (e.g., Layer-1 (L1) information) contained in the second pilot signal from the output signal of the equalizer 540, and transmits the acquired physical parameter information to the reception unit 500 and the synchronization unit 510. The reception unit 500 is able to change the RF channel to another channel using network information detected by the parameter detector 550.

The parameter detector 550 outputs service-associated information, service decider 580 decodes service data of the reception signal according to the service-associated information from the parameter detector 550, and outputs the decoded service data.

The demapper 570 may include the muxs 2475a and 2475b and output the bit stream obtained by restoring the order of the bits of which the locations of the MSB and the LSB are changed according to the code rate of the error correction coding and the symbol mapping method.

Hereinafter, a method for modulating a first pilot signal of a signal frame having at least one RF band and a method and apparatus for receiving the modulated first pilot signal will be described.

The time-interleaved PLP symbols are transmitted via regions, which are temporally divided in the signal frame. The time-interleaved PLP symbols may be transmitted via regions, which are divided in the frequency domain, if a plurality of RF bands exists. Accordingly, if the PLP is transmitted or received, a diversity gain can be obtained. An error correction mode and a symbol mapping method may be changed according to services corresponding to transport streams or may be changed in the service.

A first pilot signal and a second pilot signal are arranged at the start location of the signal frame having such characteristics, as a preamble signal.

As described above, the first pilot signal included in the signal frame may include an identifier for identifying the signal frame having the above-described structure. The first pilot signal may include information about the transmission structure indicating whether or not the signal frame is transmitted via multiple paths and information about an FFT mode of a signal following the first pilot signal. The receiver can detect the signal frame from the first pilot signal and obtain the information about the integral carrier frequency offset estimation and information about the FFT mode of the data symbol.

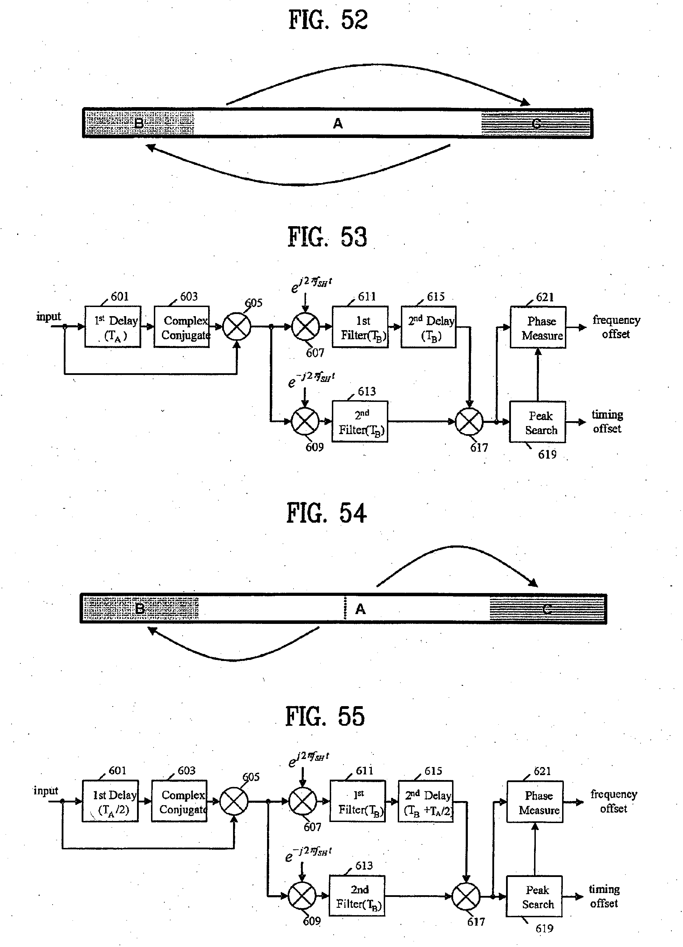

FIG. 52 is a view showing an embodiment of the structure of a first pilot signal. A portion denoted by A is a valid portion of the first pilot signal. B denotes the same cyclic prefix as a first portion of the portion A in the time domain and C denotes the same cyclic suffix as a second portion of the portion A in the time region. The first portion may be duplicated from the second half of the portion A and the second portion may be duplicated from the first half of the portion A.

B and C can be respectively obtained by duplicating the first portion and the second portion and frequency shifting the duplicated portions. A relationship between B or C and A is as follows.

[Equation 1]

$$B = onepart(A) \cdot e^{j2\pi f_{SH}t}$$

$$C = anotherpart(A) \cdot e^{j2\pi f_{SH}t}$$

In the above equation, SH denotes a shift unit of the frequency shift. Accordingly, the frequency shift values of the portions B and C may be inversely proportional to the lengths of the portions B and C.

If the first pilot signal is configured by frequency shifting the cyclic prefix (B) and the cyclic suffix (C), the probability that the data symbol is erroneously detected to the preamble is low and the probability that the preamble is erroneously detected is reduced, although the data symbols configuring the PLP and the symbols configuring the preamble are modulated in the same FFT mode.

If continuous wave (CW) interference is included like an analog TV signal, the probability that the preamble is erroneously detected due to a noise DC component generated in a correlation process, is reduced. In addition, if the size of the FFT applied to the data symbols configuring the PLP is larger than that of the FFT applied to the preamble, preamble detection performance can be improved even in a delay spread channel having a length equal to or greater than that of the valid symbol portion A of the preamble. Since both the cyclic prefix (B) and the cyclic suffix (C) are used in the preamble, the fractional carrier frequency offset can be estimated by the correlation process.

FIG. 53 is a view showing an embodiment of detecting a preamble signal shown in FIG. 52 and estimating a timing offset and a frequency offset. This embodiment may be included in the frame detector 221 or the frame synchronization unit 222.

This embodiment may include a first delay unit 601, a complex conjugate calculation unit 603, a first multiplier 605, a second multiplier 607, a first filter 611, a second delay unit 615, a third multiplier 609, a second filter 613, a fourth multiplier 617, a peak search unit 619, and a phase measurement unit 621.

The first delay unit 601 may delay a received signal. For example, the first delay unit 601 may delay the received signal by the length of the valid symbol portion (A) of the first pilot signal.

The complex conjugate calculation unit 603 may calculate the complex conjugate of the delayed first pilot signal and output the calculated signal.

The first multiplier 605 may multiply the signal output from the complex conjugate calculation unit 603 by the received signal and output the multiplied signal.

Since the first pilot signal includes the portions B and C obtained by frequency-shifting the valid portion A, the respective correlation values are obtained by shifting the received signals by the respective frequency shift amounts. In the first pilot signal, the portion B is a portion which is frequency-shifted up or frequency-shifted down from the portion A, and C is a portion which is frequency-shifted up or frequency-shifted down from the portion A.

For example, if the output of the complex conjugate calculation unit 603 is used, the output of the first multiplier 605 may include the correlation result of B (or the complex conjugate of B) and A (or the complex conjugate of A).

The second multiplier 607 may multiply the signal output from the first multiplier 605 by the frequency shift amount (denoted by $ej\pi f_{SH}t$) applied to the portion B and output the multiplied signal.

The first filter 611 performs a moving average during a predetermined period with respect to the signal output from the second multiplier 607. The moving average portion may be the length of the cyclic prefix (B) or the length of the cyclic suffix (C). In this embodiment, the first filter 611 may calculate an average of the signal included in the length of the portion B. Then, in the result output from the first filter 611, the correlation value of the portions A and C included in the portion, of which the average is calculated, substantially becomes zero and the correlation result of the portions B and A remains. Since the signal of the portion B is multiplied by the frequency shift value by the second multiplier 607, it is equal to the signal obtained by duplicating the second half of the portion A.

The third multiplier 609 may multiply the signal output from the first multiplier 605 by the frequency shift amount (denoted by $-ej\pi f_{SH}t$) applied to the portion C and output the multiplied signal.

The second filter 613 performs a moving average during a predetermined period with respect to the signal output from the third multiplier 609. The moving average portion may be the length of the cyclic prefix (B) or the length of the cyclic suffix (C). In this embodiment, the second filter 613 may calculate the average of the signal included in the length of the portion C. Then, in the result output from the second filter 613, the correlation value of the portions A and B included in the portion, of which the average is calculated, substantially becomes zero and the correlation result of the portions C and A remains. Since the signal of the portion C is multiplied by the frequency shift value by the third multiplier 609, it is equal to the signal obtained by duplicating the first half of the portion A.

The length $T_B$ of the portion of which the moving average is performed by the first filter 611 and the second filter 613 is expressed as follows.

[Equation 2]

$$T_B = k \, / \, f_{SH} \, ,$$

where, k denotes an integer. In other words, the unit $f_{SH}$ of the frequency shift used in the portions B and C may be decided by k/TB.

The second delay unit 615 may delay the signal output from the first filter 611. For example, the second delay unit 615 delays the signal filtered by the first filter 611 by the length of the portion B and outputs the delayed signal.

The fourth multiplier 617 multiplies the signal delayed by the second delay unit 615 by the signal filtered by the second filter 613 and outputs the multiplied signal.

The peak search unit 619 searches for the location where a peak value is generated from the multiplied signal output from the fourth multiplier 617 and outputs the searched location to the phase measurement unit 621. The peak value and the location may be used for the timing offset estimation.

The phase measurement unit 621 may measure the changed phase using the peak value and the location output from the peak search unit 619 and output the measured phase. The phase value may be used for the fractional carrier frequency offset estimation.

Meanwhile, an oscillator for generating the frequency used for performing the frequency shift by the second multiplier 607 and the third multiplier 609 may generate any phase error.

Even in this case, the fourth multiplier 617 can eliminate the phase error of the oscillator. The results output from the first filter 611 and the second filter 613 and the result output from the fourth multiplier 617 may be expressed by the following equation.

## [Equation 3]

$$y_{MAF1} = \left\| a_1(n) \right\|^2 \cdot e^{j2\pi\Delta_f + \theta}$$

$$y_{MAF2} = \left\| a_2(n) \right\|^2 \cdot e^{j2\pi\Delta_f - \theta}$$

$$y_{prod} = \left\| a_1(n) \right\|^2 \cdot \left\| a_2(n) \right\|^2 \cdot e^{j2\pi \cdot 2\Delta_f}$$

where, $y_{MAF1}$ and $y_{MAF2}$ respectively denote the outputs of the first filter 611 and the second filter 613, and $y_{Prod}$ denotes the output of the fourth multiplier 617. In addition, a1 and a2 respectively denote the levels of the correlation results and $\Delta f$ and $\theta$ respectively denote the frequency offset and the phase error of the oscillator.

Accordingly, $y_{MAF1}$ and $y_{MAF2}$ may include the phase errors of the oscillator having different signs, but the phase error of the oscillator is eliminated in the result of the fourth multiplier 617. Accordingly, the frequency offset $\Delta f$ can be estimated regardless of the phase error of the oscillator of the signal receiving apparatus.

The estimated frequency offset may be expressed by the following equation.

## [Equation 4]

$$f_B = \angle y_{prod} / 4\pi$$

where, the estimated frequency offset $\Delta f$ is $0 <= \Delta f < 0.5$.

FIG. 54 is a view showing another embodiment of the structure of the first pilot signal. In the first pilot signal, the frequency shift of the first half of the valid portion A is the cyclic prefix (B) and the frequency shift of the second shift of the valid portion A is the cyclic suffix (C). The lengths of the valid portion A for generating the portions B and C may be, for example, 1/2 of the length of the portion A, and the lengths of B and C may be different.

FIG. 55 is a view showing an embodiment of detecting the first pilot signal shown in FIG. 54 and measuring a timing offset and a frequency offset using the detected result. In this embodiment, for convenience of description, B and C respectively denote the cyclic prefix and the cyclic suffix obtained by frequency-shifting 1/2 of the length of the portion A.

This embodiment includes a first delay unit 601, a complex conjugate calculation unit 603, a first multiplier 605, a second multiplier 607, a first filter 611, a second delay unit 615, a third multiplier 609, a second filter 613, a fourth multiplier 617, a peak search unit 619, and a phase measurement unit 621. That is, this embodiment is equal to the embodiment of FIG. 53, but the features of the components may be changed according to the length of the portion A by which the portions B and C are generated. B denotes a portion frequency-shifted down from the portion A, and C denotes a portion frequency-shifted up from the portion A.

The first delay unit 601 may delay a received signal. For example, the first delay unit 601 may delay the received signal by 1/2 of the length of the valid symbol portion A of the first pilot signal.

The complex conjugate calculation unit 603 may calculate the complex conjugate of the delayed first pilot signal and output the calculated signal.

The first multiplier 605 may multiply the signal output from the complex conjugate calculation unit 603 by the received signal and output the multiplied signal.

The second multiplier 607 may multiply the signal output from the first multiplier 605 by the frequency shift amount (denoted by ej$\pi$f$_{SH}$t) applied to the portion B and output the multiplied signal.

The first filter 611 performs a moving average during a predetermined period with respect to the signal output from the second multiplier 607. The moving average portion may be the length of the cyclic prefix (B). In this embodiment, the first filter 611 may calculate the average of the signal included in the length of the portion B. Then, in the result output from the first filter 611, the correlation value of the portions A and C included in the portion, of which the average is calculated, substantially becomes zero and the correlation result of the portions B and A remains. Since the signal of the portion B is multiplied by the frequency shift value by the second multiplier 607, it is equal to the signal obtained by duplicating the second half of the portion A.

The third multiplier 609 may multiply the signal output from the first multiplier 605 by the frequency shift amount (denoted by -ej$\pi$f$_{SH}$t) applied to the portion C and output the multiplied signal.

The second filter 613 performs a moving average during a predetermined period with respect to the signal output from the third multiplier 609. The moving average portion may be the length of the cyclic suffix (C). In this embodiment, the second filter 613 may calculate the average of the signal included in the length of the portion C. Then, in the result output from the second filter 613, the correlation value of A and B included in the portion, of which the average is calculated, substantially becomes zero and the correlation result of the portions C and A remains. Since the signal of the portion C is multiplied by the frequency shift value by the third multiplier 609, it is equal to the signal obtained by duplicating the first half of the portion A.

The second delay unit 615 may delay the signal output from the first filter 611. For example, the second delay unit 615 delays the signal filtered by the first filter 611 by the length of the portion B + 1/2A and outputs the delayed signal.

The fourth multiplier 617 multiplies the signal delayed by the second delay unit 615 by the signal filtered by the second filter 613 and outputs the multiplied signal.

The peak search unit 619 searches for the location where a peak value is generated from the multiplied signal output from the fourth multiplier 617 and outputs the searched location to the phase measurement unit 621. The peak value and the location may be used for the timing offset estimation.

The phase measurement unit 621 may measure the changed phase using the peak value and the location output from the peak search unit 619 and output the measured phase. The phase value may be used for the fractional carrier frequency offset estimation.

As described above, an oscillator for generating the frequency used for performing the frequency shift by the second multiplier 607 and the third multiplier 609 may generate any phase error. However, even in this embodiment, the fourth multiplier 617 can eliminate the phase error of the oscillator.

The results output from the first filter 611 and the second filter 613 and the result output from the fourth multiplier 617 may be expressed by the following equation.

[Equation 5]

$$y_{MAF1} = \left\| a_1(n) \right\|^2 \cdot e^{j2\pi\Delta_f + \theta}$$

$$y_{MAF2} = \left\| a_2(n) \right\|^2 \cdot e^{j2\pi\Delta_f - \theta}$$

$$y_{prod} = \left\| a_1(n) \right\|^2 \cdot \left\| a_2(n) \right\|^2 \cdot e^{j2\pi \cdot 2\Delta_f}$$

where, y$_{MAF1}$ and y$_{MAF2}$ respectively denote the outputs of the first filter 611 and the second filter 613, and y$_{Prood}$ denotes the output of the fourth multiplier 617. In addition, a1 and a2 respectively denote the levels of the correlation results and $\Delta$t and $\theta$ respectively denote the frequency offset and the phase error of the oscillator.

Accordingly, y$_{MAF1}$ and y$_{MAF2}$ may include the phase errors of the oscillator having different signs, but the phase error of the oscillator is eliminated in the result of the fourth multiplier 617. Accordingly, the frequency offset $\Delta$f can be estimated regardless of the phase error of the oscillator of the signal receiving apparatus.

The estimated frequency offset may be expressed by the following equation.

$$f_B = \angle y_{prod} / 2\pi$$

where, the estimated frequency offset $\Delta$f is 0<=$\Delta$f<1.

That is, phase aliasing may be generated in a range of 0.5<=$\Delta$f <1 in the frequency offset estimated in [Equation 4], but phase aliasing is not generated in the frequency offset estimated in [Equation 6]. Accordingly, the frequency offset can be more accurately measured. The structure of the first pilot signal may be used in the data symbol and the second frequency signal. If such a structure is used, offset estimation performance such as CW interference can be improved and the reception performance of the receiver can be improved.

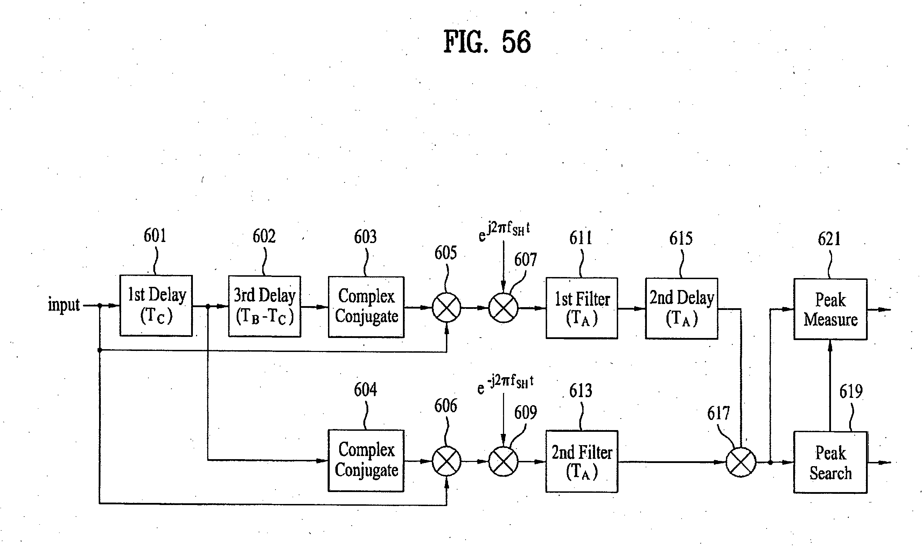

FIG. 56 is a view showing an embodiment of detecting the first pilot signal and measuring a timing offset and a frequency offset using the detected result.

This embodiment includes a first delay unit 601, a third delay unit 602, a first complex conjugate calculation unit 603, a second complex conjugate calculation unit 604, a first multiplier 605, a fifth multiplier 606, a second multiplier 607, a first filter 611, a second delay unit 615, a third multiplier 609, a second filter 613, a fourth multiplier 617, a peak search unit 619, and a phase measurement unit 621.

In this embodiment, the first delay unit 601 may delay a received signal. For example, the first delay unit 601 may delay the received signal by the length of the cyclic suffix.

The third delay unit 602 may delay the signal delayed by the first delay unit 601. For example, the third delay unit 602 further delays the signal by a difference between the length of the cyclic prefix and the length of the cyclic suffix.

The first complex conjugate calculation unit 603 may calculate the complex conjugate of the signal delayed by the third delay unit 602 and output the calculated signal. The second complex conjugate calculation unit 604 may calculate the complex conjugate of the signal delayed by the first delay unit 601 and output the calculated signal.

The first multiplier 605 may multiply the signal output from the first complex conjugate calculation unit 603 by the received signal and output the multiplied signal. The fifth multiplier 606 may multiply the complex conjugate calculated by the second complex conjugate calculation unit 604 by the received signal and output the multiplied signal.

The second multiplier 607 may multiply the signal output from the first multiplier 605 by the frequency shift amount (denoted by ejπfSHt) applied to the portion B and output the multiplied signal.

The first filter 611 performs a moving average during a predetermined period with respect to the signal output from the second multiplier 607. The moving average portion may be the length of the valid portion (A) of the first pilot signal.

The third multiplier 609 may multiply the signal output from the second multiplier 604 by the frequency shift amount (denoted by - ejπfSHt) applied to the portion C and output the multiplied signal.

The second filter 613 performs a moving average during a predetermined period with respect to the signal output from the third multiplier 609. The moving average portion may be the length of the valid portion A of the first pilot signal.

The second delay unit 615 may delay the signal output from the first filter 611. For example, the second delay unit 615 delays the signal filtered by the first filter 611 by the length of the valid portion (A) of the first pilot signal and outputs the delayed signal.

The fourth multiplier 617 multiplies the signal delayed by the second delay unit 615 by the signal filtered by the second filter 613 and outputs the multiplied signal. The fourth multiplier 617 may eliminate the phase error of the oscillator.

The operations of the peak search unit 619 and the phase measurement unit 621 are equal to those of the above-described embodiment. The peak search unit 619 searches for the location where a peak value is generated from the multiplied signal output from the fourth multiplier 617 and outputs the searched location to the phase measurement unit 621. The peak value and the location may be used for the timing offset estimation.

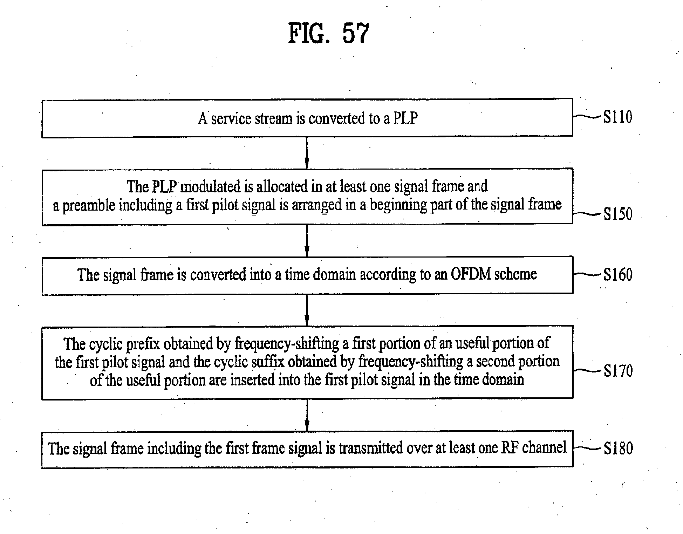

FIG. 57 is a view showing an embodiment of a method of transmitting a signal.\

A transport stream transferring a service is error-correction-coded (S110). An error correction coding scheme may be changed according to the transport streams.

An LDPC error correction coding scheme may be used as the error correction coding scheme and the error correction coding may be performed at various code rates. The bits which are error-correction-coded according to a specific error correction code rate may be included in an error correction coded block according to the error correction coding mode. If the error correction coding scheme is the LDPC, a normal mode (64800 bits) and a short mode (16200 bits) may be used.

The error-correction-coded transport stream is interleaved (S120). The interleaving may be performed by differentiating the directions for writing and reading the bits included in the error correction coded block in and from a memory. The number of rows and the number of columns of the memory may be changed according to the error correction coding mode. The interleaving may be performed in the unit of the error correction coded blocks.

The interleaved bits are mapped to symbols (S130). A symbol mapping method may be changed according to transport streams or in the transport stream. For example, as the symbol mapping method, a higher order symbol mapping method and a lower order symbol mapping method may be used. When the symbols are mapped, the interleaved bit stream may be demultiplexed according to the symbol mapping method or the code rate of the error correction code, and the symbols may be mapped using the bits included in the demultiplexed sub streams. Then, the sequence of the bits in the cell word mapped to the symbols may be changed.

The mapped symbols are interleaved (S140). The mapped symbols may be interleaved in the unit of error correction coded blocks. Time interleavers 132a and 132b may interleave the symbols in the unit of error correction coded blocks. That is, the transport stream is interleaved again in the symbol level.

The interleaved symbols of the transport stream are split, the split symbols are allocated to a signal frame having at least one frequency band and including slots which are temporally split in the frequency bands, and a preamble including a first pilot signal and a second pilot signal is arranged in a start portion of the signal frame (S150). The interleaved symbols of the transport stream may configure the PLP with respect to the transport stream for providing the service. The streams configuring the PLP may be split and allocated to the signal frame. The PLP may be allocated to the signal frame having at least one frequency band. If a plurality of frequency bands is arranged, the symbols configuring the PLP may be arranged in the slots shifted between the frequency bands. The bits included in the service stream may be arranged in the signal frame in the unit of interleaved error correction coded blocks.

The signal frame is converted into a time domain according to an OFDM scheme (S160).

The cyclic prefix obtained by frequency-shifting a first portion of a valid portion of the first pilot signal and the cyclic suffix obtained by frequency-shifting a second portion of the valid portion are inserted into the OFDM symbols including the first pilot signal in the time domain (S170). If the preamble is not inserted in the frequency domain, the preamble including the first pilot signal and the second pilot signal may be inserted in the time domain. The first pilot signal of the time domain may include the valid portion, the cyclic prefix of the first portion of the valid portion and the cyclic suffix of the second portion of the valid portion. The first portion may be a backmost portion or the foremost portion of the valid portion. The second portion may be the foremost portion or the backmost portion of the valid portion.

The signal frame including the first frame signal is transmitted by an RF signal (S180).

Since the valid portion of the first pilot signal includes the frequency-shifted cyclic prefix and cyclic suffix, the signal frame can be clearly identified as the structure of the first pilot signal. The timing offset or the frequency offset may be estimated and compensated for using the structure of the first pilot signal.

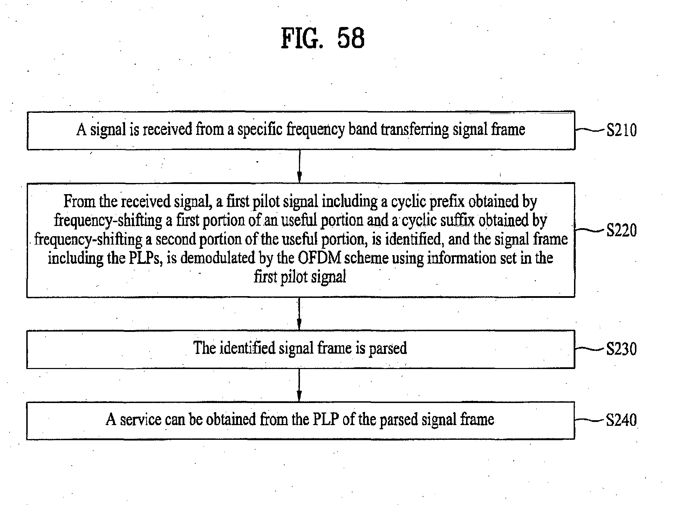

FIG. 58 is a view showing an embodiment of a method of receiving a signal.

A signal is received from a specific frequency band included in a signal frame (S210). The signal frame may have at least one frequency band. The signal may be received from a specific frequency band

From the received signal, a first pilot signal including a cyclic prefix obtained by frequency-shifting a first portion of a valid portion and a cyclic suffix obtained by frequency-shifting a second portion of the valid portion is identified, and the signal frame in which blocks including the symbols of the transport stream are allocated to a plurality of time-domain slots is demodulated by the OFDM scheme using the first pilot signal (S220). The demodulating process using the first pilot signal will be described in detail later.

The identified signal frame is parsed (S230). The signal frame may include at least one frequency band. In the signal frame, the error correction coded blocks including the symbols, to which the transport stream is mapped, may be allocated to OFDM symbols together with the error correction coded blocks of another transport stream. If the signal frame includes a plurality of frequency bands, the error correction coded blocks may be allocated to the OFDM symbols which are temporally shifted in the plurality of frequency bands.

The symbols, to which the transport stream is mapped, are deinterleaved from the parsed signal frame (S240). The deinterleaving may be performed in the symbol level which the transport stream is mapped to. For example, the time deinterleavers 245a and 245b may deinterleave the error correction coded blocks including the symbols, to which the transport stream is mapped.

Then, the deinterleaved symbols are demapped so as to obtain the transport stream (S250). When the symbols are demapped, a plurality of sub streams obtained by demapping the symbols may be output, the output sub streams may be multiplexed, and the error-correction-coded transport stream may be output. The multiplexing scheme may be changed according to the symbol mapping method and the error correction code rate. The symbol demapping method may be changed in one transport stream or according to transport streams.

The transport stream is deinterleaved and the deinterleaved transport stream is error-correction-coded (S260).

According to an apparatus for transmitting and receiving a signal and a method for transmitting and receiving a signal of an embodiment of the present invention, it is possible to readily detect and restore a transmitted signal. In addition, it is possible to improve the signal transmission/reception performance of the transmitting/receiving system.

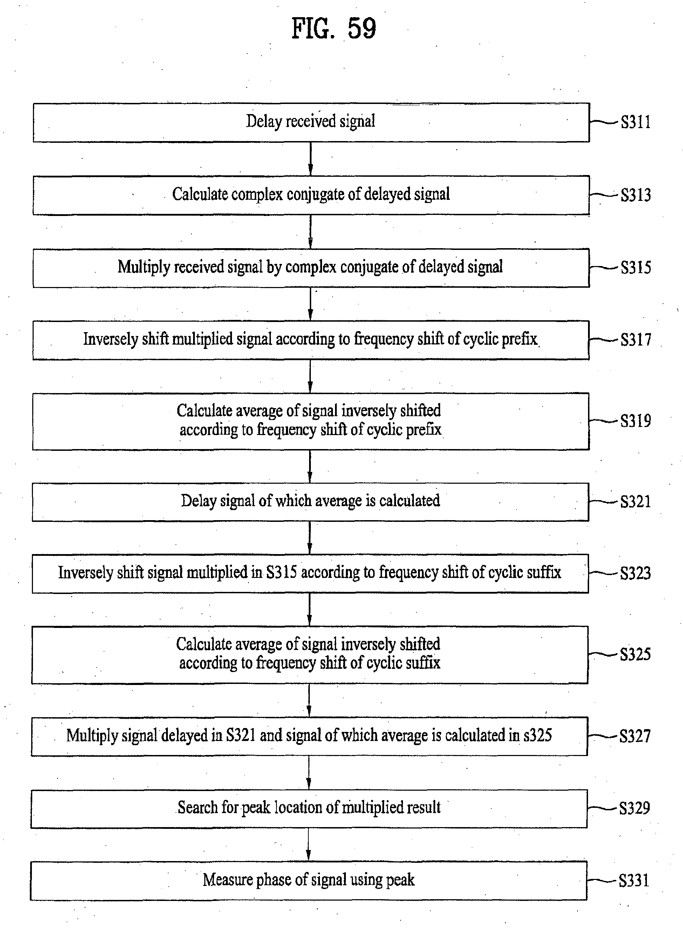

FIG. 59 is a flowchart illustrating an embodiment of identifying a first pilot signal and estimating an offset in a demodulating process.

The first pilot signal includes the cyclic prefix obtained by frequency-shifting the first portion of the valid portion thereof and the cyclic suffix obtained by frequency-shifting the second portion of the valid portion thereof. The timing offset and the frequency offset may be calculated using the first pilot signal as follows.

The received signal is delayed (S311). For example, the delay portion may be the valid portion of the first pilot signal or 1/2 of the valid portion. Alternatively, the delay portion may be the length of the cyclic prefix or the length of the cyclic suffix.

The complex conjugate of the delayed signal is calculated (S313).

The complex conjugate of the received signal and the delayed signal are multiplied (S315). The delayed signal multiplied by the complex conjugate may be the signal having the above-described length. If the delay signal is the length of the cyclic prefix or the cyclic suffix, the complex conjugate of the delayed signal may be calculated.

The signal multiplied by the complex conjugate is inversely shifted according to the frequency shift of the cyclic prefix (S317). That is, the signal multiplied by the complex conjugate is shifted by the inverse shift amount of the frequency shift amount of the cyclic prefix signal. That is, a signal which is frequency shifted up is frequency shifted down (or the signal which is frequency shifted down is frequency shifted up).

Then, an average of the signal which is inversely shifted according to the frequency shift of the cyclic prefix, is calculated (S319). The portion of the signal over which the average is calculated may be the length of the cyclic prefix or the length of the valid portion A of the first pilot signal depending on the embodiment. Since the average is calculated with respect to the signal having the same length along with the received signal, the moving average value may be output along with the received signal.

The signal of which the average is calculated is delayed (S321). The delay portion may be the sum of the length of the cyclic prefix and the length of 1/2 of the valid period, the length of the cyclic prefix, or the length of the valid portion A of the first pilot signal, according to the embodiment.

The signal multiplied in the step S315 is inversely shifted according to the frequency shift of the cyclic suffix (S323). The signal multiplied by the complex conjugate is shifted by the inverse shift amount of the frequency shift amount of the cyclic suffix signal. That is, a signal which is frequency shifted up is frequency shifted down (or the signal which is frequency shifted down is frequency shifted up).

An average is calculated with respect to the signal which is inversely shifted according to the frequency shift of the cyclic suffix (S325). The moving average is performed with respect to the signal corresponding to the length of the calculated cyclic suffix or the length of the valid portion of the first pilot signal according to the embodiments.

The signal delayed in the step S321 and the signal of which the average is calculated in the step S325 are multiplied (S327).

A peak location of the multiplied result is searched for (S329) and the phase of the signal is measured using the peak (S331). The searched peak may be used for estimating the timing offset and the measured phase may be used for estimating the frequency offset.

In this flowchart, the length of the cyclic suffix, the length of the cyclic prefix and the frequency inverse shift amount may be changed.

According to the apparatus for transmitting and receiving the signal and the method for transmitting and receiving the signal of the invention, if the data symbol configuring the PLP and the symbols configuring the preamble are modulated in the same FFT mode, the probability that the data symbol is detected by the preamble is low and the probability that the preamble is erroneously detected is reduced. If continuous wave (CW) interference is included like the analog TV signal, the probability that the preamble is erroneously detected by a noise DC component generated at the time of correlation is reduced.

According to the apparatus for transmitting and receiving the signal and the method for transmitting and receiving the signal of the invention, if the size of the FFT applied to the data symbol configuring the PLP is larger than that of the FFT applied to the preamble, the preamble detecting performance may be improved even in a delay spread channel having a length equal to or greater than that of the valid symbol portion A of the preamble. Since both the cyclic prefix (B) and the cyclic suffix (C) are used in the preamble, the fractional carrier frequency offset can be estimated.

Hereinafter, an example of a method of transmitting and receiving signals in accordance with the aforementioned bit interleaving method will be described.

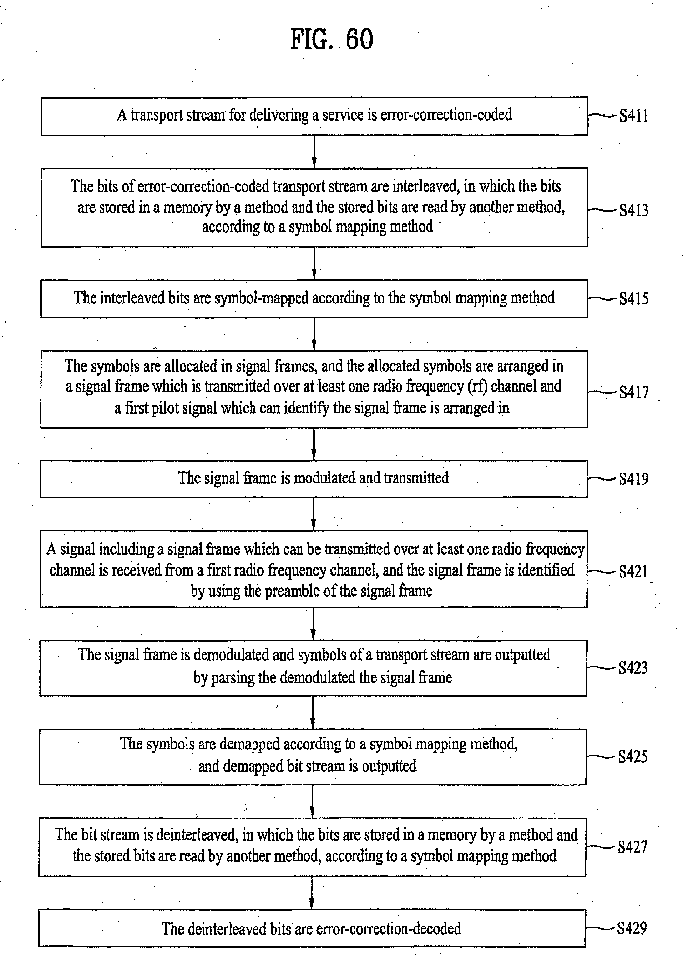

FIG. 60 illustrates another example of a method of transmitting and receiving signals in accordance with the present invention.

Transport streams including service are error-correction-coded (S411).

Bits of the error-correction-coded transport streams are interleaved by varying a method of storing the bits in the memory and a method of reading the bits from the memory in accordance with the symbol mapping method (S413). In this case, bit interleaving is performed in such a manner that the bits are stored in the memory in units of column, wherein the memory has a plurality of rows and columns in accordance with the symbol mapping method, offset is generated between locations of the first bits stored in each column in accordance with the symbol mapping method, and in each column, the bits are stored from the location where the first bits are stored to the location where the bits are stored in accordance with circular addressing.

If the stored bits are read, the bits stored in the memory in accordance with the symbol mapping method are read in units of row. In this case, offset should be generated in locations of the first bits read from each row in accordance with the symbol mapping method, and in each column, the bits are read from the location where the first bits are read in accordance with circular addressing.

The interleaved bits are symbol-mapped in accordance with the above symbol mapping method (S415).

The mapped symbols are allocated to signal frames transmitted to at least one RF channel, and a preamble, which includes a first pilot signal that can identify the signal frames from one another, is arranged in the signal frames (S417).

The signal frames are modulated and then transmitted (S419).

A method of receiving and processing the above signal will be described below.

A receiving signal which includes signal frames transmitted to at least one RF channel is received from the first RF channel, and the signal frames are identified from the first pilot signal of the preamble of the signal frames (S421).

The signal frames are demodulated, and the demodulated signal frames are parsed, so that symbols of the first transport stream among a plurality of time slots are output (S423).

The symbols are demapped in accordance with the symbol mapping method to output bit streams (S425).

The output bit streams are deinterleaved by varying the method of storing the bits in the memory and the method of reading the bits from the memory (S427). Bit interleaving corresponding to the step S413 is used. The bits are stored in the memory in units of column, wherein the memory has a plurality of rows and columns in accordance with the symbol mapping method. In this case, the bits should be stored in the memory so that offset is generated between locations of the first bits stored in each column in accordance with the symbol mapping method, and in each column, the bits are stored from the location where the first bits are stored to the location where the bits are stored in accordance with circular addressing.

If the stored bits are read, the bits stored in the memory in accordance with the symbol mapping method are read in units of row. In this case, offset should be generated in locations of the first bits read from each row in accordance with the symbol mapping method, and in each column, the bits are read from the location where the first bits are read, in accordance with circular addressing.

The deinterleaved bits are error-correction-decoded. (S429).

Hereinafter, a signaling method for identifying and receiving a PLP included in a signal frame will be described.

As described above, one PLP may be allocated to and arranged in signal frames transmitted via at least one channel. The PLP may be a conceptual path to which a transport stream including a service is transmitted. Accordingly, the PLP may have the concept between a physical channel and a logical channel. A method for identifying a PLP and receiving a PLP including a desired service is disclosed

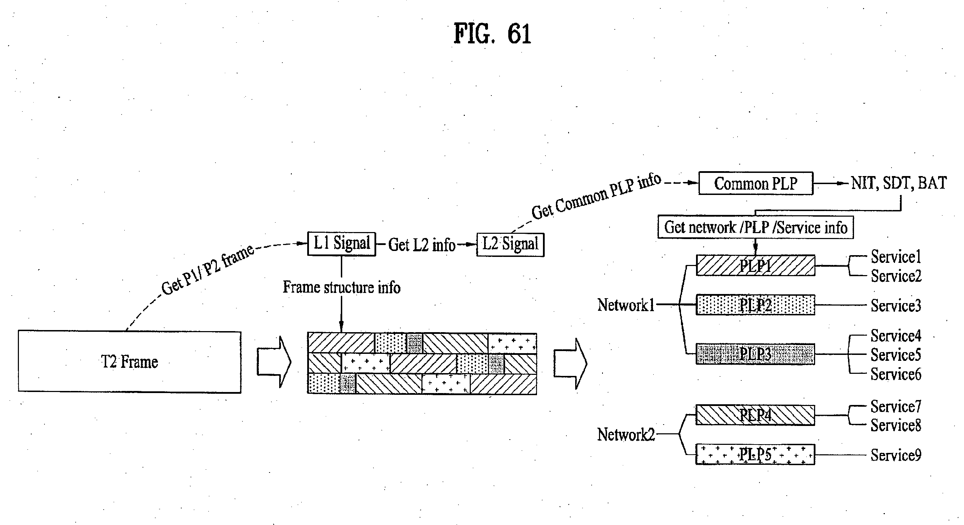

FIG. 61 is a conceptual diagram showing a relationship between a PLP and a service. The left portion of this drawing shows a signal frame. The signal frame may have a preamble including a first pilot signal and a second pilot signal.

The signal frame may include at least one RF channel (that is, the signal frame may be transmitted via at least one RF channel) as shown in the central portion of this drawing. At least one RF channel includes regions which are temporally divided and the PLP is divided and allocated to the regions which are temporally divided.

The first pilot signal includes information which identifies the signal frame and indicates whether the signal frame is transmitted/received via multiple paths. The second pilot signal may include layer-1 information L1 which accesses the PLP from the identified signal frame. The layer-1 information includes structure information of the signal frame, that is, information about the whole PLP configuration in the signal frame. For example, the layer-1 information includes a parameter about the structure of all the PLPs and the number of all PLPs included in the signal frame.

In addition, information which can obtain layer-2 information L2 describing the PLP mediating between a network and a service can be obtained using the layer-1 information.

From the right portion of this drawing, the layer-2 information L2 may include a common PLP which is commonly included in the signal frames. The common PLP may include a network information table (NIT) which is information describing a network for transmitting the signal frame, a service description table (SDT) which is information describing a service included in the PLP, and service table information such as a SDT describing a service package. The service table information may include information transmitted in the form of a section, such as program specification information/service information (PSI/SI).

The PLP may be mediation information mediating between network identifier information and a service identifier. The relationship among the network, the PLP and the service may be described in the common PLP. In the example of this drawing, a network 1 transmits PLP1, PLP2 and PLP3. A network 2 includes PLP4 and PLP5.

The PLP1 includes a service 1 and a service 2 and the PLP2 includes a service 3. The PLP3 includes services 4, 5 and 6. In the network 2, the PLP4 delivers services 7 and 8 and the PLP5 includes a service 9.

Information about the PLP for transmitting the service identified by the service identifier and the network for transmitting the PLP may be included in the layer-2 information (common PLP).

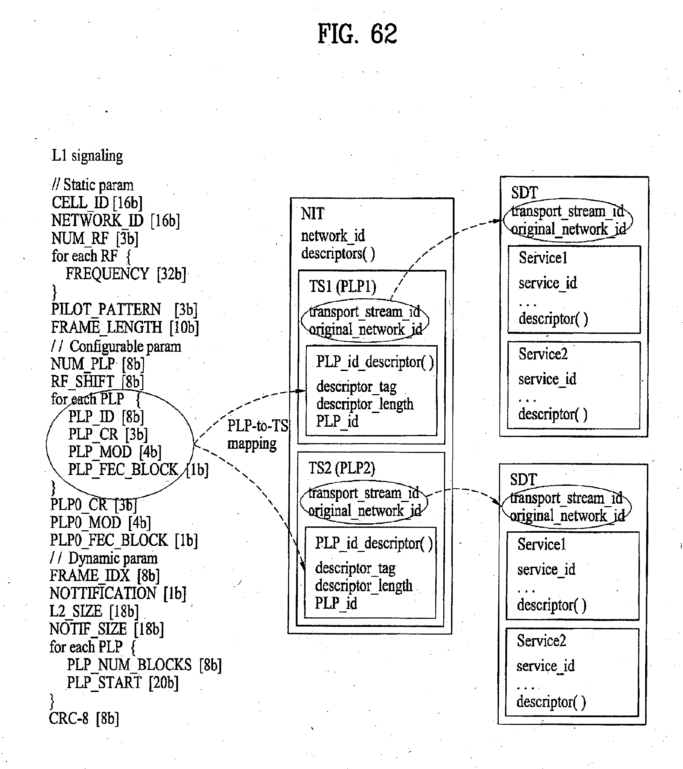

FIG. 62 is a view showing an example of mapping a PLP and a service. The left portion of this drawing shows the layer-1 information for identifying the PLP. The central portion of this drawing shows network information which may be included in the common PLP. The right portion of this drawing shows information describing the service.

The layer-1 information includes a static parameter, a configurable parameter and a dynamic parameter as shown in this embodiment.

The static parameter of the layer-1 information is as follows.

A CELL_ID (16 bits) indicates an identifier of a cell to which the signal frame is transmitted. A NETWORK_ID (16 bits) indicates an identifier of a network for transmitting the signal frame. An NUM_RF (16 bits) indicates the number of RF channels included in the signal frame. In addition, a FREQUENCY (32 bits) indicates a central frequency of each of the RF channels. A PILOT_PATTERN (3 bits) indicates the pattern of a scattered pilot included in an OFDM symbol included in the signal frame. A FRAME_LENGTH (10 bits) indicates the length of the signal frame.

The configurable parameter of the layer-1 information is as follows.

An NUM_PLP (8 bits) indicates the number of PLPs transmitted by the signal frame. An RF_SHIFT (8 bits) indicates the number of OFDM symbols which should be shifted in the neighboring RF channels of a current RF channel in order to obtain sub-PLPs belonging to the same PLP as sub-PLPs received from the current RF channel.

A PLP_ID (8 bits) indicates an identifier of each of the PLPs included in the signal frame. A PLP_CR (3 bits) indicates the value of a code rate of error correction encoding of the PLP.

A PLP_MOD (4 bits) indicates a symbol mapping scheme used in symbol mapping of the PLP. A PLP_FEC_BLOCK (1 bit) indicates whether the error correction encoding of the PLP is a normal mode or a short mode.

The common PLP included in the signal frame may be denoted by PLP0. A PLP0_CR (3 bits) indicates a code rate used in an error correction encoding scheme of the PLP0. A PLP0_MOD (4 bits) indicates a symbol mapping scheme used in symbol mapping of the PLP0. A PLP0_FEC_BLOCK (1 bit) indicates whether the error correction encoding of the PLP0 is a normal mode or a short mode.

The dynamic parameter of the layer-1 information is as follows.

A FRAME_IDX (8 bits) indicates an index of the signal frame in the super frame. A NOTIFICATION (1 bit) indicates whether or not the signal frame includes a NOTIFICATION message indicating an emergency or service change. An L2_SIZE (18 bits) indicates the size of layer-2 information included in the signal frame. A NOTIF_SIZE (18 bits) indicates the size of the NOTIFICATION message.

With respect to each of the PLPs included in the signal frame, a PLP_NUM_BLOCKS (8 bits) indicates the number of error correction coded blocks included in each of the PLPs. A PLP_START (20 bits) indicates the number of a start slot, in which each of the PLPs is started, of the slots of the time domain of a frequency.

If the PLP_ID, the PLP_CR, the PLP_MOD and the PLP_FEC_BLOCK included in the layer-1 information are used, the PLPs included in the signal frame may be identified. The identified PLPs may correspond to the PLPs of the NIT included in the layer-2 information.

The NIT included in the layer-2 information includes network-related information of the PLPs for transmitting the transport streams. For example, a network_id indicates an identifier of a network for transmitting the signal frame and a transport_stream_id indicates an identifier of a transport stream for transmitting at least one service. An original_network_id indicates an identifier of a signal transmission system (delivery system) for transmitting an original signal.

The NIT includes the identifier of the network for transmitting the signal frame and includes fields TS1 and TS2 describing the transport streams. If the transport streams are described, information about PLP identifiers PLP_id corresponding to the transport streams may be included. This example discloses an example in which the PLP identifiers are included in the form of a descriptor. In other words, the transport streams (TSs) may correspond to the PLPs, and information describing the transport streams may include the information about the PLP identifiers.

Accordingly, the PLPs identified in the layer-1 information may correspond to the PLP identifiers of the information describing the transport streams in the information describing the network of the layer-2 information.

The NIT will now be described in detail.

The SDT is service description information describing services. The SDT may allow the transport streams to correspond to the services. For example, the SDT may include the identifier transport_stream_id of the transport stream for transmitting the service and the identifier original_network_id of the delivery system for transmitting the original service. The SDT may include a field service_id describing the services.

Meanwhile, the two fields transport_stream_id and original_network_id of the SDT may correspond to the transport_stream_id and the original_network_id of the NIT. Accordingly, the PLP identifier in the network information described by the NIT may correspond to the service description information described by the SDT. That is, the transport stream described in the network information may correspond to the service of the service description information.

Accordingly, if the layer-1 information, the network information and the service description information are obtained, the PLPs are identified and the transport streams and the service table information of the transport streams can be obtained by the PLPs, such that the receiver finds a PLP including a desired service.

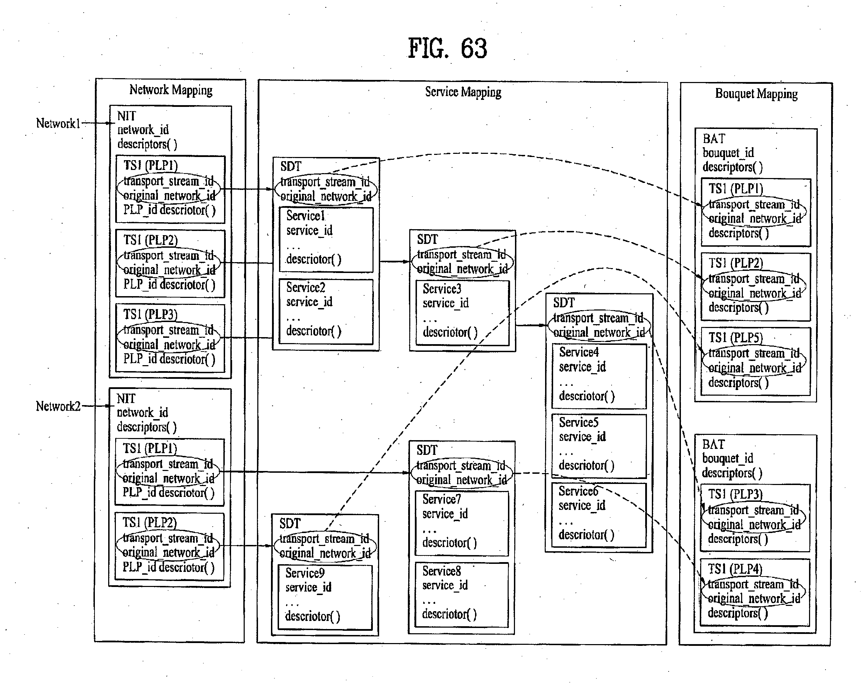

FIG. 63 is a view showing an example of mapping a PLP and a service package. The information about PLP identifiers can be obtained from the layer-1 information included in the preamble of the signal frame.

It can be checked to which transport stream a PLP corresponds, by the network information (NIT) included in the common PLP.

In this example, the network 1 transmits a transport stream 1 (TS1), a transport stream 2 (TS2) and a transport stream 3 (TS3). The network 2 transmits a transport stream 4 (TS4) and a transport stream 5 (TS5).

The NIT describing the network 1 may include the information about the identifiers of the PLPs respectively corresponding to the transport stream 1 (TS1), the transport stream 2 (TS2) and the transport stream 3 (TS3). Accordingly, the identifiers of the PLP1, PLP2 and PLP3 respectively corresponding to the transport stream 1 (TS1), the transport stream 2 (TS2) and the transport stream 3 (TS3) can be obtained from the network information of the common PLP. Similarly, the NIT describing the network 2 may include information about the identifiers of the PLPs corresponding to the transport stream 4 (TS4) and the transport stream 5 (TS5). Accordingly, the identifiers of the PLP4 and PLP5 respectively corresponding to the transport stream 4 (TS4) and the transport stream 5 (TS5) can be obtained from the network information of the common PLP.

The common PLP may include the service description information (SDT), and the correspondence between the transport streams and the services can be obtained from the service description information.

In this example, the network 1 transmits the transport stream 1, the transport stream 2 and the transport stream 3. The transport stream 1 corresponds to the PLP1. If the identifiers transport_stream_id of the transport streams and the identifiers original_network_id of the original delivery systems of the NIT and the SDT use the same relationship, the transport stream 1 includes a service 1 and a service 2. Accordingly, the PLP1 corresponds to the service 1 and the service 2.

The transport stream 2 corresponds to the PLP2. If the identifiers transport_stream_id of the transport streams and the identifiers original_network_id of the original delivery systems of the NIT and the SDT use the same relationship, the transport stream 2 transmits a service 3. Accordingly, the PLP2 corresponds to the service 3.

The transport stream 3 corresponds to the PLP3. If the identifiers transport_stream_id of the transport streams and the identifiers original_network_id of the original delivery systems of the NIT and the SDT use the same relationship, the transport stream 3 transmits a service 3, a service 4 and a service 5. Accordingly, the PLP3 corresponds to the service 3, the service 4 and the service 5.

The network 2 transmits the transport stream 4 and the transport stream 5. The transport stream 4 corresponds to the PLP4. From the identifiers transport_stream_id of the transport streams and the identifiers original_network_id of the original delivery systems of the NIT and the SDT, the transport stream 4 transmits a service 7 and a service 8. Accordingly, the PLP4 corresponds to the service 7 and the service 8.

The transport stream 5 corresponds to the PLP5. From the identifiers transport_stream_id of the transport streams and the identifiers original_network_id of the original delivery systems of the NIT and the SDT, the transport stream 5 transmits a service 9. Accordingly, the PLP5 corresponds to the service 9.

A bouquet association table (BAT) is included in the common PLP and describes a package of services transmitted via the network. The BAT may describe the transport streams included in a service package identifier bouquet_id.

Each service package may include at least one transport stream according to the service package identifier bouquet_id. In this example, from the identifiers transport_stream_id of the transport streams and the identifiers original_network_id of the original delivery systems of the SDT and the BAT, a first service package (bouquet) includes a transport stream 1, a transport stream 2 and a transport stream 5. A second service package (bouquet) includes a transport stream 3 and a transport stream 4.

Since the transport streams correspond to the PLPs, the service package corresponding to a PLP can be obtained if the SDT and the BAT are used. Accordingly, the receiver can find a PLP associated with a service package selected by the user.

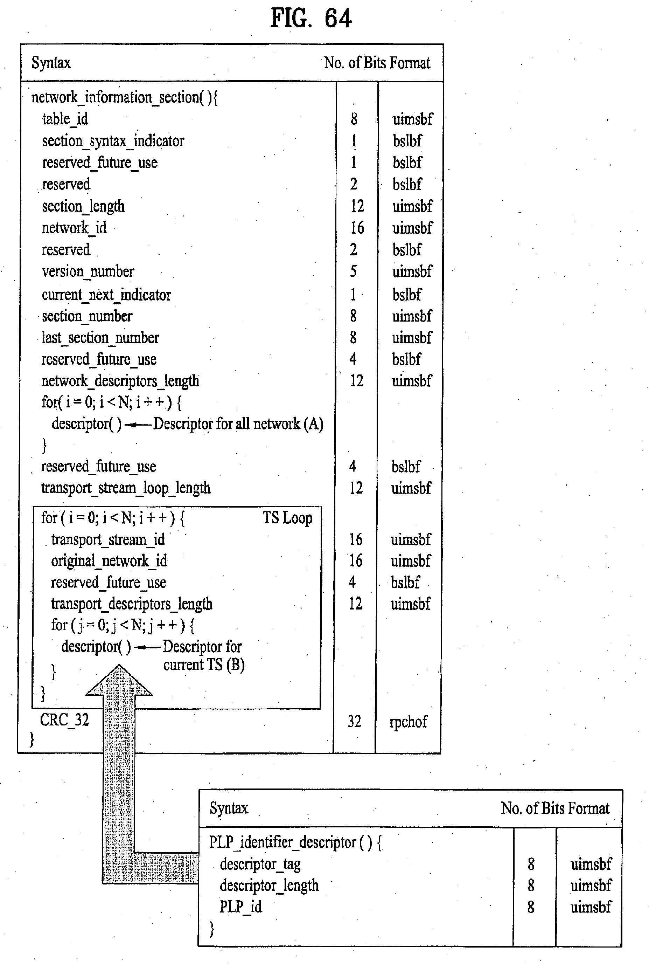

FIG. 64 is a view showing an NIT as service table information.

A table_id field indicates an identifier for identifying the NIT. A section_syntax_indicator field may be set to 1 and may have a long-form format of the MPEG. A reserved_future_use field and a reserved field are reserved regions and may be set to, for example, to 1 and 11, respectively. A section_length field indicates the length of a section.

A network_id field indicates an identifier for identifying a delivery system for transmitting a service stream and includes, for example, an identifier of a broadcast transmitter. A version_number field indicates the version of a section or a sub table. A current_next_indicator field indicates whether or not the following information is applied to a current section. A section_number field indicates the serial number of a section. A last_section_number field indicates the number of a last section.

A reserved_future_use field indicates a reserved region, and a network_descriptors_length field indicates the length of a descriptor A included in the following and may include the descriptor A including information describing all networks.

After the reserved_future_use field, a transport_stream_loop_length field indicates the length of the following transport stream loop.

In this drawing, a dotted line indicates a loop including information describing a transport stream. A transport_stream_id field indicates a transport stream identifier for distinguishing a transport stream of a delivery system for transmitting a current signal from a transport stream of another delivery system.

An original_network_id field indicates an identifier for identifying a network identifier of an original delivery system. After the reserved_future_use field, a descriptor B describing a transport stream according to a transport stream identifier and a field indicating the length of the descriptor are included.

In this example, the descriptor B may include a descriptor including a PLP identifier. The descriptor including the PLP identifier is called PLP identifier descriptor(). In a descriptor tag and a descriptor length, the identifier and the length of the PLP_identifier descriptor() are set. In addition, the PLP_identifier_descriptor() may include a PLP identifier PLP_id. Although, in this example, the PLP identifier is included in the descriptor, the PLP identifier PLP_id may be set in the field included in the NIT. Although one transport stream corresponds to one PLP in this example, at least one transport stream may correspond to one PLP. The NIT may include information about the PLP identifier corresponding to at least one transport stream.

**EP 2 079 183 B1**

An embodiment of a signal transmitting apparatus for transmitting information for allowing the PLPs to correspond to the services will be described with reference to the above-described drawings. The network information including the information about the PLP identifier may be included in the common PLP including the service description information.

Referring to FIG. 4 again, the frame builder 140 may arrange the layer-2 information including at least one of the network information indicating the relationship between the transport streams and the PLPs, the service description information describing the service included in the transport stream corresponding to the PLP, and the service package description information in the preamble of the signal frame. The common PLP including the layer-2 information may be arranged in the signal frame. The modulators 150a and 150r may modulate the signal frame and the analog processors 160a and 160r may transmit the modulated signal frame via at least one RF channel.

Referring to FIG. 7 again, the signaling information unit 135 generates the layer-2 information including the network information including the information about the PLP identifier. In addition, the signal frame parser 133 receives at least one of the network information in which the PLP identifier corresponding to the transport stream is set, the service description information and the service package description information from the signaling information unit 135. The signal frame parser 133 arranges a second pilot signal including the network information in the preamble of the signal frame.

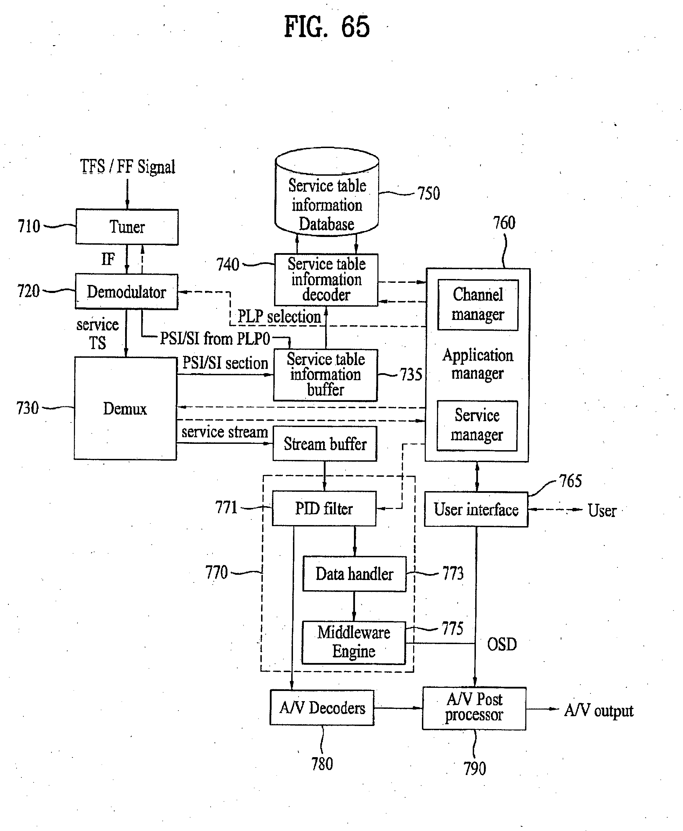

FIG. 65 is a view showing another embodiment of an apparatus for receiving a signal. An embodiment of obtaining a PLP and a service or mediation information of a service package, which is included in a common PLP will now be described.

The signal receiving apparatus includes a tuner 710, a demodulator 720, a demultiplexer 730, a service table information buffer 735, a stream buffer 737, a service table information decoder 740, a service table information memory 750, a manager 760, an interface 765, a data processor 770, a decoder 780 and a postprocessor 790.

The tuner 710 may receive the signal frame and tune RF channels included in the received signal frame. The signal frame may be transmitted via at least one RF channel. If the signal frame is transmitted via a plurality of RF channels, the tuner 710 may receive a PLP included in the plurality of RF channels while hopping the RF channels included in the signal frame, in order to receive the PLP.

The demodulator 720 may identify the TFS signal frame using a first pilot signal P1 in a preamble included in the signal frame. In addition, the PLP configuration information according to a PLP identifier in the signal frame can be obtained using layer-2 information in a second pilot signal. Accordingly, the demodulator 720 can obtain the PLP included in a signal which is currently received. The PLP may correspond to the transport stream transmitted by the signal frame.

The demodulator 720 may obtain the layer-2 information using the layer-1 information. The layer-2 information may be included in the common PLP (PLPO) including the mediation information describing the relationship between a service (or a service package) and the PLP.

The demodulator 720 may output the service table information from the common PLP (PLP0). The service table information may include the NIT indicating the network information, the SDT describing the service, and the BAT describing the service package.

The service table information buffer 735 may temporally store the service table information output from the demodulator 720.

The service table information decoder 749 decodes the service table information stored in the service table information buffer 735 and stores the network information, the service description information and the service package description information included in the decoded service table information in the service table information memory 750. According to the embodiment, the demodulator 720 may parse and decode the service table information included in the common PLP, for example, the NIT indicating the network information, the SDT describing the service, and the BAT describing the service package.

The network information may include the transport streams included in networks identified by network identifiers and information about the identifiers of PLPs for transmitting the transport streams.

The service description information may describe the relationship between the transport streams and the services of the information included in the network information using the transport stream identifier transport_stream_id and the original network identifier original_network_id included in the network information. The service description information may describe the services. The service package description information may describe the transport streams included in the service package.

Since the transport streams may correspond to the PLPs and may be transmitted in a state of being included in the PLPs, if the service table information decoder 749 decodes the service table information, the relationship between the services/service packages and the PLPs for delivering the transport streams can be obtained.

The interface 765 outputs a control signal such as a channel selection command received from the user to the manager 760. The interface 760 may output the control signal from the user to the postprocessor 790.

The manager 760 may receive information about the channel and service selection from the interface 765 and control the functional blocks shown in this drawing in order to execute the received information.

The manager 760 obtains information indicating to which PLP the channel or the service selected by the user is transmitted by referring to the decoded service table information, and outputs the information to the demodulator 720.

The manager 760 may include a service manager for selecting and managing a service and a channel manager for managing a channel map. The channel manager may control the tuner 710 and the demodulator 720 such that a channel included in a service stream of the signal frame is hopped, if the service is selected. The service manager controls an audio/video signal included in the service stream to be output in order to provide the service and controls data included in the service stream to be output. In addition, the manager 760 may operate various applications for outputting a broadcast.

The demodulator 720 obtains a PLP for delivering the service selected by the user from the signal frame. The transport stream included in the selected PLP obtained by the demodulator 720 is output to the demultiplexer 730.

The demultiplexer 730 outputs service table information included in the transport stream to the service table information buffer 735 and outputs the service stream to the stream buffer 737.

The stream buffer 737 temporarily stores the demultiplexed service stream.

The data processor 770 depacketizes the stream data packets stored in the stream buffer 737. The packet filter 771 of the data processor 770 may filter a packet having a desired packet identifier of the stream data packets stored in the stream buffer 737 and output the packet to the decoder 780. If the packet is a packet for transmitting data for a data broadcast, a data handler 773 of the data processor 771 may extract data which will be provided as a service and a middle engine 775 may provide the output data to an application for implementing a data broadcast.

The decoder 780 may decode A/V data output from the data processor 770. The postprocessor 790 may output an on-screen-display for allowing the user to select a control signal by the interface 765. The postprocessor 790 may post-process and output the A/V data output from the decoder 780 and the data for data broadcast output from the data processor 770.

By referring to the embodiment shown in FIG. 38, the frame parser 240 may output the network information including the PLP identifier corresponding to the transport stream from the preamble of the signal frame. The frame parser 240 may output the service description information describing the PLPs and the service package description information describing a group of the PLPs from the preamble of the signal frame. The frame parser 240 parses the signal frame and outputs the PLP corresponding to the transport stream for transmitting the service selected by the user.

The decoding demodulator 250 decodes and interleaves the output PLP by referring to the network information, the service description information and the service package description information, and the output processor 260 may decode the transport stream of the PLP output from the decoding demodulator 250 and output the decoded transport stream.

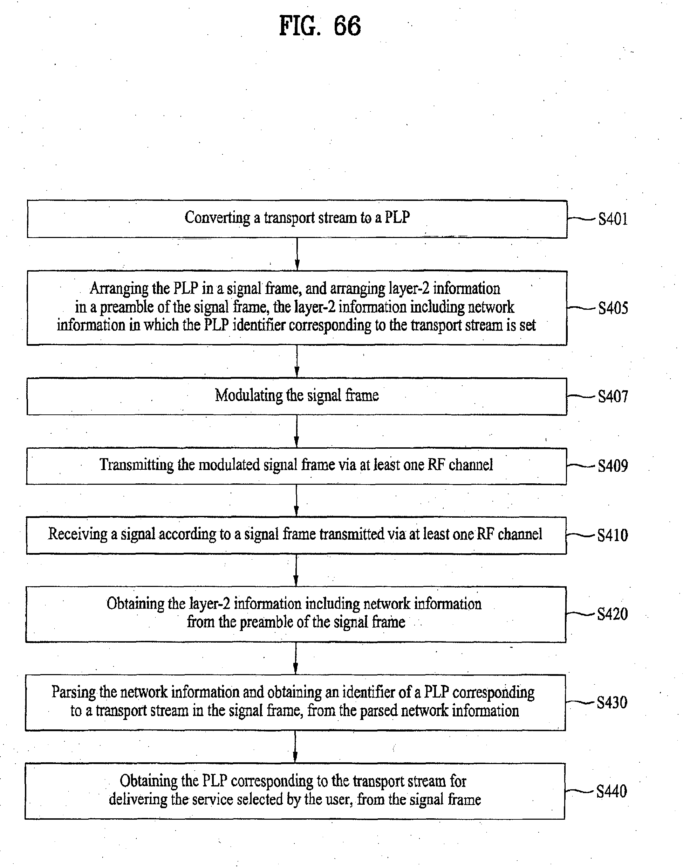

FIG. 66 is a flowchart illustrating another embodiment of a method for transmitting and receiving a signal.

A transport stream is converted to a PLP (S401). A transport stream may be converted to a PLP as follows. A transport stream is error-correction-encoded and the error-correction-encoded bits are interleaved. The interleaved bits are mapped to symbols of a PLP.

The PLP is arranged in a signal frame, and layer-2 information including network information in which the PLP identifier corresponding to the transport stream is set, is arranged in a preamble of the signal frame (S405). The network information may include the PLP identifier corresponding to the transport stream. A common PLP arranged in the preamble of the signal frame may include information describing a service delivered by the transport stream corresponding to the PLP identifier. The common PLP arranged in the preamble of the signal frame may include information describing a service package which is a group of the transport streams corresponding to the PLP identifiers.

The signal frame is modulated (S407) and the modulated signal frame is transmitted via at least one RF channel (S409).

A signal according to a signal frame transmitted via at least one RF channel, is received (S410).

The layer-2 information including network information is obtained from the preamble of the signal frame (S420). The layer-2 information may be included in the common PLP.

Accordingly, the network information in which the PLP identifier corresponding to the transport stream in the signal frame can be obtained from the common PLP. The common PLP may include, for example, at least one of service description information (SDT) and service package description information (BAT) in addition to the network information (NIT). For example, the PLP identifier corresponding to the transport stream via the network can be obtained from the NIT.

Then, the network information is parsed and an identifier of a PLP corresponding to a transport stream in the signal frame is obtained from the parsed network information (S430).

The PLP corresponding to the transport stream for delivering the service selected by the user is obtained from the signal frame, as a result of the parsed network information, namely using the identifier of the PLP corresponding to the transport stream (S440). The channel selected by the user or the PLP for transmitting the service can be obtained.

The transport stream is obtained by converting the PLP (S450). The correspondence between the transport stream and the service can be obtained from the SDT. If the SDT is decoded, the service delivered by the transport stream can be obtained.

According to an apparatus for transmitting and receiving a signal and a method for transmitting and receiving a signal of the invention, it is possible to readily obtain a PLP including a transport stream for transmitting a selected service. It is possible to improve signal transmission/reception performance of a signal transmission/reception system.

The disclosed structure of the pilot signal may not be used for a signal frame including the PLP, and if this pilot signal is used for any signal frame, the described effect can be taken.

It will be apparent to those skilled in the art that various modifications and variations can be made in the present invention without departing from the invention. Thus, it is intended that the present invention covers the modifications and variations of this invention provided they come within the scope of the appended claims.

## Claims

1. A method of transmitting a signal, the method comprising:

   encoding (S401) physical layer pipe, PLP, data for forward error correction using a Low Density Parity Code, LDPC, scheme, wherein the PLP data is data to be transmitted via a physical channel for delivering a transport stream and to be carried by an OFDM symbol;
   arranging (S405) the encoded PLP data and a preamble to form a signal frame, the encoded PLP data corresponding to a transport stream, wherein the preamble includes layer-1, L1, information and common PLP data, wherein the L1 information is signaling information for accessing the PLP data, wherein the L1 information includes an identifier of each of PLP data in the signal frame, and wherein the common PLP data includes a network information table, NIT, the NIT including a descriptor which includes an identifier of the encoded PLP data corresponding to the transport stream;
   modulating (S407) the signal frame; and
   transmitting (S409) the modulated signal frame via at least one radio frequency, RF, channel.

2. The method according to claim 1, wherein the common PLP data further includes service description information describing a service in the transport stream.

3. The method according to claim 1, wherein the NIT includes an original network identifier and a transport stream identifier and wherein the original network identifier and the transport stream identifier identify the transport stream carried by the PLP data which is identified by said identifier of the PLP data in the L1 information.

4. A method of receiving a signal, the method comprising:

   receiving (S410) a signal conveying a signal frame transmitted via at least one radio frequency, RF, channel, wherein the signal frame includes a preamble, physical layer pipe, PLP, data corresponding to a transport stream, wherein the preamble includes lawyer-1, L1, information and common PLP data,
   wherein the L1 information is signaling information for accessing the PLP data and the PLP data is data received via a physical channel for delivering the transport stream and carried by an OFDM symbol,
   wherein the L1 information includes an identifier of each of PLP data in the signal frame, and the common PLP data includes a network information table, NIT, the NIT including a descriptor which includes an identifier of the PLP data corresponding to the transport stream;
   demodulating the received signal according to orthogonal frequency divisional multiplexing, OFDM, scheme;
   obtaining (S420) the L1 information and the common PLP data from the signal frame;
   obtaining (S430) said identifier of the PLP data from the L1 information and the common PLP data;
   obtaining (S440) the PLP data from the signal frame according to said identifier of the PLP; and
   decoding the obtained PLP data.

5. The method according to claim 4, wherein the NIT includes an original network identifier and a transport stream identifier and wherein the original network identifier and the transport stream identifier identify the transport stream carried by the PLP data which is identified by said identifier of the PLP data in the L1 information.

6. An apparatus for transmitting a signal, the apparatus comprising:

   a coding and modulating unit (120) configured to encode physical layer pipe, PLP, using a Low Density Parity Code, LDPC, scheme, wherein the PLP data is data to be transmitted via a physical channel for delivering a transport stream and to be carried by an OFDM symbol;
   a frame builder (130) configured to

arrange (S405) the encoded PLP data and a preamble to form a signal frame, the encoded PLP corresponding to a transport stream, wherein the preamble includes layer-1, L1, information and common PLP data, wherein the L1 information is signaling information for accessing the PLP data, wherein the L1 information includes an identifier of each of PLP data in the signal frame and wherein the common PLP data includes a network information table, NIT, the NIT including a descriptor which includes an identifier of the encoded PLP data corresponding to the transport stream;

a modulator (150a, 150r) configured to modulate the signal frame; and

a transmitting unit (160a, 160r) configured to transmit the modulated signal via at least one radio frequency, RF, channel.

7. The apparatus according to claim 6, wherein the common PLP data further includes service description information describing a service in the transport stream.

8. The apparatus according to claim 6, wherein the NIT includes an original network identifier and a transport stream identifier and wherein the original network identifier and the transport stream identifier identify the transport stream carried by the PLP data which is identified by said identifier of the PLP data in the L1 information.

9. An apparatus for receiving a signal, the apparatus comprising:

a receiver (210r, 210n) configured to receive the signal conveying a signal frame transmitted via at least one radio frequency, RF, channel, wherein the signal frame includes a preamble, physical layer pipe, PLP, data corresponding to a transport stream, wherein the preamble includes layer-1, L1, information, wherein the L1 information is signaling information for accessing the PLP data and the PLP data is data received via a physical channel for delivering the transport stream and carried by an OFDM symbol; wherein the L1 information includes an identifier of each of PLP data in the signal frame and the common PLP data includes a network information table, NIT, the NIT including a descriptor which includes an identifier of the PLP data corresponding to the transport stream; a demodulator (220a, 220n) configured to demodulate the received signal according to orthogonal frequency divisional multiplexing, OFDM, scheme and output the signal frame; a frame parser (240) configured to obtain (S420) the L1 information and the common PLP from the signal frame, obtain (S430) said identifier of the PLP data corresponding to the transport stream from the L1 information and the common PLP data; and, obtain (S440) the PLP data from the signal frame according to said identifier of the PLP; and a decoding and demodulation unit (250) configured to decode the obtained PLP data.

10. The apparatus according to claim 9, wherein the common PLP data further includes service description information describing a service in the transport stream.

11. The apparatus according to claim 9, wherein the NIT includes an original network identifier and a transport stream identifier and wherein the original network identifier and the transport stream identifier identify the transport stream carried by the PLP data which is identified by said identifier of the PLP data in the L1 information.

**Patentansprüche**

1. Verfahren zum Senden eines Signals, wobei das Verfahren umfasst:

Codieren (S401) von PLP-Daten (PLP = Physical Layer Pipe) zur Vorwärtsfehlerkorrektur unter Verwendung eines LDPC-Programms (LDPC = Low Density Parity Code), wobei die PLP-Daten Daten sind, die über einen physikalischen Kanal zum Liefern eines Transportstroms zu senden sind und von einem OFDM-Symbol zu tragen sind,

Anordnen (S405) der codierten PLP-Daten und einer Präambel auf eine solche Weise, dass sie einen Signal-Frame bilden, wobei die codierten PLP-Daten einem Transportstrom entsprechen, wobei die Präambel L1-Informationen (L1 = Schicht 1) und gemeinsame PLP-Daten einschließt, wobei die L1-Informationen Signalisierungsinformationen für den Zugriff auf die PLP-Daten sind, wobei die L1-Informationen einen Bezeichner jedes der PLP-Daten in dem Signal-Frame einschließen und wobei die gemeinsamen PLP-Daten eine Netzwerkinformationstabelle (NIT) einschließen, wobei die NIT einen Deskriptor einschließt, der einen Bezeichner der dem Transportstrom entsprechenden codierten PLP-Daten einschließt,
Modulieren (S407) des Signal-Frames und
Senden (S409) des modulierten Signal-Frames über mindestens einen HF-Kanal (HF = Hochfrequenz).

2. Verfahren nach Anspruch 1, wobei die gemeinsamen PLP-Daten ferner Dienstbeschreibungsinformationen, die einen Dienst in dem Transportstrom beschreiben, einschließen.

3. Verfahren nach Anspruch 1, wobei die NIT einen Originalnetzwerkbezeichner und einen Transportstrombezeichner einschließt und wobei der Originalnetzwerkbezeichner und der Transportstrombezeichner den Transportstrom kennzeichnen, der von den PLP-Daten getragen wird, die durch den Bezeichner der PLP-Daten in den L1-Informationen gekennzeichnet werden.

4. Verfahren zum Empfangen eines Signals, wobei das Verfahren umfasst:

Empfangen (S410) eines Signals, das einen Signal-Frame überträgt, der über mindestens einen HF-Kanal (HF = Hochfrequenz) gesendet wird, wobei der Signal-Frame eine Präambel und einem Transportstrom entsprechende PLP-Daten (PLP = Physical Layer Pipe) einschließt,
wobei die Präambel L1-Informationen (L1 = Schicht 1) und gemeinsame PLP-Daten einschließt,
wobei die L1-Informationen Signalisierungsinformationen für den Zugriff auf die PLP-Daten sind und die PLP-Daten Daten sind, die über einen physikalischen Kanal zum Liefern des Transportstroms empfangen werden und von einem OFDM-Symbol getragen werden,
wobei die L1-Informationen einen Bezeichner jedes der PLP-Daten in dem Signal-Frame einschließen und die gemeinsamen PLP-Daten eine Netzwerkinformationstabelle (NIT) einschließen, wobei die NIT einen Deskriptor einschließt, der einen Bezeichner der dem Transportstrom entsprechenden PLP-Daten einschließt,
Demodulieren des empfangenen Signals gemäß dem OFDM-Programm (OFDM = Orthogonal Frequency Divisional Multiplexing),
Gewinnen (S420) der L1-Informationen und der gemeinsamen PLP-Daten aus dem Signal-Frame,
Gewinnen (S430) des Bezeichners der PLP-Daten aus den L1-Informationen und den gemeinsamen PLP-Daten,
Gewinnen (S440) der PLP-Daten aus dem Signal-Frame gemäß dem Bezeichner der PLP und
Decodieren der gewonnenen PLP-Daten.

5. Verfahren nach Anspruch 4, wobei die NIT einen Originalnetzwerkbezeichner und einen Transportstrombezeichner einschließt und wobei der Originalnetzwerkbezeichner und der Transportstrombezeichner den Transportstrom kennzeichnen, der von den PLP-Daten getragen wird, die durch den Bezeichner der PLP-Daten in den L1-Informationen gekennzeichnet werden.

6. Vorrichtung zum Senden eines Signals, wobei die Vorrichtung umfasst:

eine Codier- und Modulationseinheit (120), die so konfiguriert ist, dass sie PLP (Physical Layer Pipe) unter Verwendung eines LDPC-Programms (LDPC = Low Density Parity Code) codiert, wobei die PLP-Daten Daten sind, die über einen physikalischen Kanal zum Liefern eines Transportstroms zu senden sind und von einem OFDM-Symbol zu tragen sind,
einen Frame-Builder (130), der so konfiguriert ist, dass er
die codierten PLP-Daten und eine Präambel so anordnet (S405), dass sie einen Signal-Frame bilden, wobei die codierten PLP einem Transportstrom entsprechen, wobei die Präambel L1-Informationen (L1 = Schicht 1) und gemeinsame PLP-Daten einschließt,
wobei die L1-Informationen Signalisierungsinformationen für den Zugriff auf die PLP-Daten sind, wobei die L1-Informationen einen Bezeichner jedes der PLP-Daten in dem Signal-Frame einschließen und wobei die gemeinsamen PLP-Daten eine Netzwerkinformationstabelle (NIT) einschließen, wobei die NIT einen Deskriptor einschließt, der einen Bezeichner der dem Transportstrom entsprechenden codierten PLP-Daten einschließt,
einen Modulator (150a, 150r), der so konfiguriert ist, dass er den Signal-Frame moduliert, und
eine Sendeeinheit (160a, 160r), die so konfiguriert ist, dass sie das modulierte Signal über mindestens einen HF-Kanal (HF = Hochfrequenz) sendet.

7. Vorrichtung nach Anspruch 6, wobei die gemeinsamen PLP-Daten ferner Dienstbeschreibungsinformationen, die einen Dienst in dem Transportstrom beschreiben, einschließen.

8.  Vorrichtung nach Anspruch 6, wobei die NIT einen Originalnetzwerkbezeichner und einen Transportstrombezeichner einschließt und wobei der Originalnetzwerkbezeichner und der Transportstrombezeichner den Transportstrom kennzeichnen, der von den PLP-Daten getragen wird, die durch den Bezeichner der PLP-Daten in den L1-Informationen gekennzeichnet werden.

9.  Vorrichtung zum Empfangen eines Signals, wobei die Vorrichtung umfasst:

    einen Empfänger (210r, 210n), der so konfiguriert ist, dass er das Signal, das einen Signal-Frame überträgt, der über mindestens einen HF-Kanal (HF = Hochfrequenz) gesendet wird, empfängt, wobei der Signal-Frame eine Präambel und einem Transportstrom entsprechende PLP-Daten (PLP = Physical Layer Pipe) einschließt, wobei die Präambel L1-Informationen (L1 = Schicht 1) einschließt,
    wobei die L1-Informationen Signalisierungsinformationen für den Zugriff auf die PLP-Daten sind und die PLP-Daten Daten sind, die über einen physikalischen Kanal zum Liefern des Transportstroms empfangen werden und von einem OFDM-Symbol getragen werden,
    wobei die L1-Informationen einen Bezeichner jedes der PLP-Daten in dem Signal-Frame einschließen und die gemeinsamen PLP-Daten eine Netzwerkinformationstabelle (NIT) einschließen, wobei die NIT einen Deskriptor einschließt, der einen Bezeichner der dem Transportstrom entsprechenden PLP-Daten einschließt,
    einen Demodulator (220a, 220n), der so konfiguriert ist, dass er das empfangene Signal gemäß dem OFDM-Programm (OFDM = Orthogonal Frequency Divisional Multiplexing) demoduliert und den Signal-Frame ausgibt,
    einen Frame-Parser (240), der so konfiguriert ist, dass er
    die L1-Informationen und die gemeinsamen PLP aus dem Signal-Frame gewinnt (S420),
    den Bezeichner der dem Transportstrom entsprechenden PLP-Daten aus den L1-Informationen und den gemeinsamen PLP-Daten gewinnt (S430) und
    die PLP-Daten aus dem Signal-Frame gemäß dem Bezeichner der PLP gewinnt (S440), und
    eine Decodier- und Demodulationseinheit (250), die so konfiguriert ist, dass sie die gewonnenen PLP-Daten decodiert.

10. Vorrichtung nach Anspruch 9, wobei die gemeinsamen PLP-Daten ferner Dienstbeschreibungsinformationen, die einen Dienst in dem Transportstrom beschreiben, einschließen.

11. Vorrichtung nach Anspruch 9, wobei die NIT einen Originalnetzwerkbezeichner und einen Transportstrombezeichner einschließt und wobei der Originalnetzwerkbezeichner und der Transportstrombezeichner den Transportstrom kennzeichnen, der von den PLP-Daten getragen wird, die durch den Bezeichner der PLP-Daten in den L1-Informationen gekennzeichnet werden.

**Revendications**

1.  Procédé de transmission d'un signal, le procédé comprenant :

    le codage (S401) de données de tuyau de couche physique, PLP, pour une correction d'erreur sans voie de retour en utilisant un schéma de code de parité à faible densité, LPDC, dans lequel les données PLP sont des données à transmettre par l'intermédiaire d'un canal physique pour délivrer un flux de transport et à porter par un symbole OFDM ;
    l'agencement (S405) des données PLP codées et d'un préambule pour former une trame de signal, les données PLP codées correspondant à un flux de transport, dans lequel le préambule comprend des informations de couche 1, L1, et des données PLP communes, dans lequel les informations L1 sont des informations de signalisation pour accéder aux données PLP, dans lequel les informations L1 comprennent un identifiant de chacune des données PLP dans la trame de signal, et dans lequel les données PLP communes comprennent un tableau d'informations de réseau, NIT, le NIT comprenant un descripteur qui comprend un identifiant des données PLP codées correspondant au flux de transport ;
    la modulation (S407) de la trame de signal ; et
    la transmission (S409) de la trame de signal modulée par l'intermédiaire d'au moins un canal de radiofréquences, RF.

2.  Procédé selon la revendication 1, dans lequel les données PLP communes comprennent en outre des informations de description de service décrivant un service dans le flux de transport.

**3.** Procédé selon la revendication 1, dans lequel le NIT comprend un identifiant de réseau d'origine et un identifiant de flux de transport, et dans lequel l'identifiant de réseau d'origine et l'identifiant de flux de transport identifient le flux de transport porté par les données PLP qui sont identifiées par ledit identifiant des données PLP dans les informations L1.

**4.** Procédé de réception d'un signal, le procédé comprenant :

la réception (S410) d'un signal portant une trame de signal transmise par l'intermédiaire d'au moins un canal de radiofréquences, RF, dans lequel la trame de signal comprend un préambule, des données de tuyau de couche physique, PLP, correspondant à un flux de transport,
dans lequel le préambule comprend des informations de couche 1, L1, et des données PLP communes,
dans lequel les informations L1 sont des informations de signalisation pour accéder aux données PLP et les données PLP sont des données reçues par l'intermédiaire d'un canal physique pour délivrer le flux de transport et portées par un symbole OFDM,
dans lequel les informations L1 comprennent un identifiant de chacune des données PLP dans la trame de signal, et les données PLP communes comprennent un tableau d'informations de réseau, NIT, le NIT comprenant un descripteur qui comprend un identifiant des données PLP correspondant au flux de transport ;
la démodulation du signal reçu en fonction d'un schéma de multiplexage par répartition orthogonale de fréquence, OFDM ;
l'obtention (S420) des informations L1 et des données PLP communes à partir de la trame de signal ;
l'obtention (S430) dudit identifiant des données PLP à partir des informations L1 et des données PLP communes ;
l'obtention (S440) des données PLP à partir de la trame de signal en fonction dudit identifiant du PLP ; et
le décodage des données PLP obtenues.

**5.** Procédé selon la revendication 4, dans lequel le NIT comprend un identifiant de réseau d'origine et un identifiant de flux de transport, et dans lequel l'identifiant de réseau d'origine et l'identifiant de flux de transport identifient le flux de transport porté par les données PLP qui sont identifiées par ledit identifiant des données PLP dans les informations L1.

**6.** Appareil de transmission d'un signal, l'appareil comprenant :

une unité de codage et de modulation (120) configurée pour effectuer le codage d'un tuyau de couche physique, PLP, en utilisant un schéma de code de parité à faible densité, LPDC, dans lequel les données PLP sont des données à transmettre par l'intermédiaire d'un canal physique pour délivrer un flux de transport et à porter par un symbole OFDM ;
un constructeur de trame (130) configuré pour effectuer
l'agencement (S405) des données PLP codées et d'un préambule pour former une trame de signal, les données PLP codées correspondant à un flux de transport, dans lequel le préambule comprend des informations de couche 1, L1, et des données PLP communes,
dans lequel les informations L1 sont des informations de signalisation pour accéder aux données PLP, dans lequel les informations L1 comprennent un identifiant de chacune des données PLP dans la trame de signal, et dans lequel les données PLP communes comprennent un tableau d'informations de réseau, NIT, le NIT comprenant un descripteur qui comprend un identifiant des données PLP codées correspondant au flux de transport ;
un modulateur (150a, 150r) configuré pour effectuer la modulation de la trame de signal ; et
une unité de transmission (160a, 160r) configurée pour effectuer la transmission du signal modulé par l'intermédiaire d'au moins un canal de radiofréquences, RF.

**7.** Appareil selon la revendication 6, dans lequel les données PLP communes comprennent en outre des informations de description de service décrivant un service dans le flux de transport.

**8.** Appareil selon la revendication 6, dans lequel le NIT comprend un identifiant de réseau d'origine et un identifiant de flux de transport, et dans lequel l'identifiant de réseau d'origine et l'identifiant de flux de transport identifient le flux de transport porté par les données PLP qui sont identifiées par ledit identifiant des données PLP dans les informations L1.

**9.** Appareil de réception d'un signal, l'appareil comprenant :

un récepteur (210r, 210n) configuré pour effectuer la réception du signal portant une trame de signal transmise par l'intermédiaire d'au moins un canal de radiofréquences, RF, dans lequel la trame de signal comprend un préambule, des données de tuyau de couche physique, PLP, correspondant à un flux de transport, dans lequel le préambule comprend des informations de couche 1, L1,

dans lequel les informations L1 sont des informations de signalisation pour accéder aux données PLP et les données PLP sont des données reçues par l'intermédiaire d'un canal physique pour délivrer le flux de transport et portées par un symbole OFDM,

dans lequel les informations L1 comprennent un identifiant de chacune des données PLP dans la trame de signal, et les données PLP communes comprennent un tableau d'informations de réseau, NIT, le NIT comprenant un descripteur qui comprend un identifiant des données PLP correspondant au flux de transport ;

un démodulateur (220a, 220n) configuré pour effectuer la démodulation du signal reçu en fonction d'un schéma de multiplexage par répartition orthogonale de fréquence, OFDM, et la délivrance de la trame de signal ;

un analyseur syntaxique de trame (240) configuré pour effectuer l'obtention (S420) des informations L1 et des données PLP communes à partir de la trame de signal ;

l'obtention (S430) dudit identifiant des données PLP correspondant au flux de transport à partir des informations L1 et des données PLP communes ; et

l'obtention (S440) des données PLP à partir de la trame de signal en fonction dudit identifiant du PLP ; et

une unité de décodage et de démodulation (250) configurée pour effectuer le décodage des données PLP obtenues.

10. Appareil selon la revendication 9, dans lequel les données PLP communes comprennent en outre des informations de description de service décrivant un service dans le flux de transport.

11. Appareil selon la revendication 9, dans lequel le NIT comprend un identifiant de réseau d'origine et un identifiant de flux de transport, et dans lequel l'identifiant de réseau d'origine et l'identifiant de flux de transport identifient le flux de transport porté par les données PLP qui sont identifiées par ledit identifiant des données PLP dans les informations L1.

# FIG. 1

| RF 1 | RF 2 | RF 3 | RF 4 |
|---|---|---|---|
| 17 | 12 | 7 | Service 2 |
| 16 | 11 | 6 | Service 2 |
| 15 | 10 | 5 | Service 1 |
| 14 | 9 | 4 | Service 1 |
| 13 | 8 | Service 3 | Service 1 |
| 12 | 7 | Service 2 | 17 |
| 11 | 6 | Service 2 | 16 |
| 10 | 5 | Service 1 | 15 |
| 9 | 4 | Service 1 | 14 |
| 8 | Service 3 | Service 1 | 13 |
| 7 | Service 2 | 17 | 12 |
| 6 | Service 2 | 16 | 11 |
| 5 | Service 1 | 15 | 10 |
| 4 | Service 1 | 14 | 9 |
| Service 3 | Service 1 | 13 | 8 |
| Service 2 | 17 | 12 | 7 |
| Service 2 | 16 | 11 | 6 |
| Service 1 | 15 | 10 | 5 |
| Service 1 | 14 | 9 | 4 |
| Service 1 | 13 | 8 | Service 3 |
| P2 | P2 | P2 | P2 |
| P1 | P1 | P1 | P1 |

Time
(not in scale)

# FIG. 2

# FIG. 3

# FIG. 4

EP 2 079 183 B1

# FIG. 5

# FIG. 6

```
Input                121              123              125              127          Frame
processor      ┌─────────┐    ┌─────────┐    ┌─────────┐    ┌─────────┐   builder
PLP(n)    ───→ │ First   │──→ │ First   │──→ │ Second  │──→ │ Second  │──→ PLP(n)
output         │ encoder │    │interleaver│   │ encoder │    │interleaver│   input
               └─────────┘    └─────────┘    └─────────┘    └─────────┘
```

# FIG. 7

```
                131a             132a             133              137a
PLP(1)      ┌─────────┐    ┌─────────┐                      ┌─────────┐   Frame
BICM   ───→ │ First   │──→ │First time│──→              ──→ │ Second  │──→ builder
            │ mapper  │    │interleaver│                     │interleaver│   RF(1)
            └─────────┘    └─────────┘    ┌─────────┐       └─────────┘   output
                                          │         │
                  :              :        │TFS frame│            :
                                          │ builder │
PLP(p)      ┌─────────┐    ┌─────────┐    │         │       ┌─────────┐   Frame
BICM   ───→ │ First   │──→ │First time│──→│         │──→    │ Second  │──→ builder
            │ mapper  │    │interleaver│   │         │       │interleaver│   RF(R)
            └─────────┘    └─────────┘    └────▲────┘       └─────────┘   output
                131b             132b          │               137r
                                          ┌─────────┐
                                          │ Ref/PL  │── 135
                                          │ signal  │
                                          └─────────┘
```

## FIG. 8

| bit/cell (exp.) | HOQ ratio | HOQ bits | LOQ bits | HOQ symbols | LOQ symbols | Total symbols | bit/cell |
|---|---|---|---|---|---|---|---|
| 256-QAM | 1 | 64800 | 0 | 8100 | 0 | 8100 | 8 |
| Hyb 128-QAM | 3/5 | 38880 | 25920 | 4860 | 4320 | 9180 | 7.0588 |
| 64-QAM | 1 | 64800 | 0 | 10800 | 0 | 10800 | 6 |
| Hyb 32-QAM | 3/5 | 38880 | 25920 | 6480 | 6480 | 12960 | 5 |
| 16-QAM | 1 | 64800 | 0 | 16200 | 0 | 16200 | 4 |
| Hyb 8-QAM | 2/3 | 43200 | 21600 | 10800 | 10800 | 21600 | 3 |
| QPSK | 1 | 64800 | 0 | 32400 | 0 | 32400 | 2 |

EP 2 079 183 B1

# FIG. 9

| bit/cell (exp.) | HOQ ratio | HOQ bits | LOQ bits | HOQ symbols | LOQ symbols | Total symbols | bit/cell |
|---|---|---|---|---|---|---|---|
| 256-QAM | 1 | 16200 | 0 | 2025 | 0 | 2025 | 8 |
| Hyb 128-QAM | 3/5 | 9720 | 6480 | 1215 | 1080 | 2295 | 7.0588 |
| 64-QAM | 1 | 16200 | 0 | 2700 | 0 | 2700 | 6 |
| Hyb 32-QAM | 3/5 | 9720 | 6480 | 1620 | 1620 | 3240 | 5 |
| 16-QAM | 1 | 16200 | 0 | 4050 | 0 | 4050 | 4 |
| Hyb 8-QAM | 2/3 | 10800 | 5400 | 2700 | 2700 | 5400 | 3 |
| QPSK | 1 | 16200 | 0 | 8100 | 0 | 8100 | 2 |

EP 2 079 183 B1

FIG. 10

| bit/cell (exp.) | HOQ ratio | HOQ bits | LOQ bits | HOQ symbols | LOQ symbols | Total symbols | bit/cell |
|---|---|---|---|---|---|---|---|
| 256-QAM | 8/9 | 57600 | 7200 | 7200 | 1200 | 8400 | 7.714285714 |
| Hyb 128-QAM | 4/9 | 28800 | 36000 | 3600 | 6000 | 9600 | 6.75 |
| 64-QAM | 1 | 64800 | 0 | 10800 | 0 | 10800 | 6 |
| Hyb 32-QAM | 5/9 | 36000 | 28800 | 6000 | 7200 | 13200 | 4.909090909 |
| 16-QAM | 1/9 | 7200 | 57600 | 1200 | 14400 | 15600 | 4.153846154 |
| Hyb 8-QAM | 2/3 | 43200 | 21600 | 10800 | 10800 | 21600 | 3 |
| QPSK | 1 | 64800 | 0 | 32400 | 0 | 32400 | 2 |
| | | | | | GCD | 1200 | |

EP 2 079 183 B1

## FIG. 11

| bit/cell (exp.) | HOQ ratio | HOQ bits | LOQ bits | HOQ symbols | LOQ symbols | Total symbols | bit/cell |
|---|---|---|---|---|---|---|---|
| 256-QAM | 4/5 | 51840 | 12960 | 6480 | 2160 | 8640 | 7.5 |
| Hyb 128-QAM | 8/15 | 34560 | 30240 | 4320 | 5040 | 9360 | 6.923076923 |
| 64-QAM | 1 | 64800 | 0 | 10800 | 0 | 10800 | 6 |
| Hyb 32-QAM | 3/5 | 38880 | 25920 | 6480 | 6480 | 12960 | 5 |
| 16-QAM | 1/15 | 4320 | 60480 | 720 | 15120 | 15840 | 4.090909091 |
| Hyb 8-QAM | 2/3 | 43200 | 21600 | 10800 | 10800 | 21600 | 3 |
| QPSK | 1 | 64800 | 0 | 32400 | 0 | 32400 | 2 |
| | | | | | GCD | 720 | |

EP 2 079 183 B1

## FIG. 12

| bit/cell (exp.) | HOQ ratio | HOQ bits | LOQ bits | HOQ symbols | LOQ symbols | Total symbols | bit/cell |
|---|---|---|---|---|---|---|---|
| 256-QAM | 44/45 | 63360 | 1440 | 7920 | 240 | 8160 | 7.941176471 |
| Hyb 128-QAM | 28/45 | 40320 | 24480 | 5040 | 4080 | 9120 | 7.105263158 |
| 64-QAM | 1 | 64800 | 0 | 10800 | 0 | 10800 | 6 |
| Hyb 32-QAM | 3/5 | 38880 | 25920 | 6480 | 6480 | 12960 | 5 |
| 16-QAM | 1/15 | 4320 | 60480 | 720 | 15120 | 15840 | 4.090909091 |
| Hyb 8-QAM | 2/3 | 43200 | 21600 | 10800 | 10800 | 21600 | 3 |
| QPSK | 1 | 64800 | 0 | 32400 | 0 | 32400 | 2 |
| | | | | | GCD | 240 | |

EP 2 079 183 B1

## FIG. 13

| bit/cell (exp.) | HOQ ratio | HOQ bits | LOQ bits | HOQ symbols | LOQ symbols | Total symbols | bit/cell |
|---|---|---|---|---|---|---|---|
| 256-QAM | 8/9 | 14400 | 1800 | 1800 | 300 | 2100 | 7.714285714 |
| Hyb 128-QAM | 4/9 | 7200 | 9000 | 900 | 1500 | 2400 | 6.75 |
| 64-QAM | 1 | 16200 | 0 | 2700 | 0 | 2700 | 6 |
| Hyb 32-QAM | 5/9 | 9000 | 7200 | 1500 | 1800 | 3300 | 4.909090909 |
| 16-QAM | 1/9 | 1800 | 14400 | 300 | 3600 | 3900 | 4.153846154 |
| Hyb 8-QAM | 2/3 | 10800 | 5400 | 2700 | 2700 | 5400 | 3 |
| QPSK | 1 | 16200 | 0 | 8100 | 0 | 8100 | 2 |
| | | | | | GCD | 300 | |

EP 2 079 183 B1

## FIG. 14

| bit/cell (exp.) | HOQ ratio | HOQ bits | LOQ bits | HOQ symbols | LOQ symbols | Total symbols | bit/cell |
|---|---|---|---|---|---|---|---|
| 256-QAM | 4/5 | 12960 | 3240 | 1620 | 540 | 2160 | 7.5 |
| Hyb 128-QAM | 8/15 | 8640 | 7560 | 1080 | 1260 | 2340 | 6.923076923 |
| 64-QAM | 1 | 16200 | 0 | 2700 | 0 | 2700 | 6 |
| Hyb 32-QAM | 3/5 | 9720 | 6480 | 1620 | 1620 | 3240 | 5 |
| 16-QAM | 1/15 | 1080 | 15120 | 180 | 3780 | 3960 | 4.090909091 |
| Hyb 8-QAM | 2/3 | 10800 | 5400 | 2700 | 2700 | 5400 | 3 |
| QPSK | 1 | 16200 | 0 | 8100 | 0 | 8100 | 2 |
| | | | | | GCD | 180 | |

EP 2 079 183 B1

## FIG. 15

| bit/cell (exp.) | HOQ ratio | HOQ bits | LOQ bits | HOQ symbols | LOQ symbols | Total symbols | bit/cell |
|---|---|---|---|---|---|---|---|
| 256-QAM | 44/45 | 15840 | 360 | 1980 | 60 | 2040 | 7.941176471 |
| Hyb 128-QAM | 28/45 | 10080 | 6120 | 1260 | 1020 | 2280 | 7.105263158 |
| 64-QAM | 1 | 16200 | 0 | 2700 | 0 | 2700 | 6 |
| Hyb 32-QAM | 3/5 | 9720 | 6480 | 1620 | 1620 | 3240 | 5 |
| 16-QAM | 1/15 | 1080 | 15120 | 180 | 3780 | 3960 | 4.090909091 |
| Hyb 8-QAM | 2/3 | 10800 | 5400 | 2700 | 2700 | 5400 | 3 |
| QPSK | 1 | 16200 | 0 | 8100 | 0 | 8100 | 2 |
| | | | | | GCD | 60 | |

EP 2 079 183 B1

## FIG. 16

## FIG. 17

EP 2 079 183 B1

# FIG. 18

# FIG. 19

EP 2 079 183 B1

# FIG. 20

WRITE

READ

# FIG. 21

WRITE

READ

## FIG. 22

| QAM | nCol | Col 1 | Col 2 | Col 3 | Col 4 | Col 5 | Col 6 | Col 7 | Col 8 |
|---|---|---|---|---|---|---|---|---|---|
| QPSK | 2 | 0 | 2 | - | - | - | - | - | - |
| 16QAM | 4 | 0 | 2 | 4 | 7 | - | - | - | - |
| 64QAM | 6 | 0 | 2 | 5 | 9 | 10 | 13 | - | - |
| 256QAM | 8 | 0 | 0 | 2 | 4 | 4 | 5 | 7 | 7 |

# FIG. 23

| QAM type | HOQ Rows | HOQ Columns | LOQ Rows | LOQ Columns |
|---|---|---|---|---|
| 256-QAM | 8100 | 8 | | |
| Hyb 128-QAM | 4860 | 8 | 4320 | 6 |
| 64-QAM | 10800 | 6 | | |
| Hyb 32-QAM | 6480 | 6 | 6480 | 4 |
| 16-QAM | 16200 | 4 | | |
| Hyb 8-QAM | 10800 | 4 | 10800 | 2 |
| 4-QAM | 32400 | 2 | | |

# FIG. 24

| QAM type | HOQ Rows | HOQ Columns | LOQ Rows | LOQ Columns |
|---|---|---|---|---|
| 256-QAM | 2025 | 8 | | |
| Hyb 128-QAM | 1215 | 8 | 1080 | 6 |
| 64-QAM | 2700 | 6 | | |
| Hyb 32-QAM | 1620 | 6 | 1620 | 4 |
| 16-QAM | 4050 | 4 | | |
| Hyb 8-QAM | 2700 | 4 | 2700 | 2 |
| 4-QAM | 8100 | 2 | | |

## FIG. 25

WRITE

| 1 | C+1 | | | |
|---|---|---|---|---|
| 2 | C+2 | | | |
| 3 | C+3 | | | |
| 4 | C+4 | | | |
| | . | | | . |
| | . | | | . |
| | . | | | . |
| C-1 | | . | | N-1 |
| C | | | | N |

READ →

| 1 | C+1 | | | |
|---|---|---|---|---|
| | 2 | C+2 | | |
| | | 3 | C+3 | |
| | | | 4 | C+4 |
| | | . | | . |
| . | | | . | |
| N-1 | C-1 | | | . |
| | N | C | . | |

## FIG. 26

WRITE

| 1 | C+1 | | | |
|---|---|---|---|---|
| 2 | C+2 | | | |
| 3 | C+3 | | | |
| 4 | C+4 | | | |
| 5 | C+5 | | | |
| 6 | C+6 | | | |
| | . | | | . |
| C-1 | | | | N-1 |
| C | | | | N |

READ →

| 1 | C+1 | | | |
|---|---|---|---|---|
| | 2 | C+2 | | |
| | | | 3 | C+3 |
| 4 | C+4 | | | |
| | | 5 | C+5 | |
| C+6 | | | | 6 |
| | . | | | . |
| N-1 | C-1 | | | |
| | | N | C | |

# FIG. 27

WRITE

READ →

twisted

double twisted

twisted

# FIG. 28

Bit mapping into constellation

$x_0, x_1, \cdots, x_{N-1}$ → Bit Interleaver → $b_{1,0}, b_{1,1}, \cdots$ → DEMUX

$y_{0,0}, y_{0,1}, \cdots$
$y_{1,0}, y_{1,1}, \cdots$

Mapping

Re{z} convey $y_{0,0}$

Im{z} convey $y_{1,0}$

QPSK

1312a (1312b)

Bit mapping into constellation

$x_0, x_1, \cdots, x_{N-1}$ → Bit Interleaver → $b_{1,0}, b_{1,1}, \cdots$ → DEMUX

$y_{0,0}, y_{0,1}, \cdots$
$y_{1,0}, y_{1,1}, \cdots$
$y_{2,0}, y_{2,1}, \cdots$
$y_{3,0}, y_{3,1}, \cdots$

Mapping

Re{z} convey $y_{0,0}, y_{2,0}$

Im{z} convey $y_{1,0}, y_{3,0}$

16QAM

1312a (1312b)

Bit mapping into constellation

$x_0, x_1, \cdots, x_{N-1}$ → Bit Interleaver → $b_{1,0}, b_{1,1}, \cdots$ → DEMUX

$y_{0,0}, y_{0,1}, \cdots$
$y_{1,0}, y_{1,1}, \cdots$
$y_{2,0}, y_{2,1}, \cdots$
$y_{3,0}, y_{3,1}, \cdots$
$y_{4,0}, y_{4,1}, \cdots$
$y_{5,0}, y_{5,1}, \cdots$

Mapping

Re{z} convey $y_{0,0}, y_{2,0}, y_{4,0}$

Im{z} convey $y_{1,0}, y_{3,0}, y_{5,0}$

64QAM

1312a (1312b)

Bit mapping into constellation

$x_0, x_1, \cdots, x_{N-1}$ → Bit Interleaver → $b_{1,0}, b_{1,1}, \cdots$ → DEMUX

$y_{0,0}, y_{0,1}, \cdots$
$y_{1,0}, y_{1,1}, \cdots$
$y_{2,0}, y_{2,1}, \cdots$
$y_{3,0}, y_{3,1}, \cdots$
$y_{4,0}, y_{4,1}, \cdots$
$y_{5,0}, y_{5,1}, \cdots$
$y_{6,0}, y_{6,1}, \cdots$
$y_{7,0}, y_{7,1}, \cdots$

Mapping

Re{z} convey $y_{0,0}, y_{2,0}, y_{4,0}, y_{6,0}$

Im{z} convey $y_{1,0}, y_{3,0}, y_{5,0}, y_{7,0}$

256QAM

1312a (1312b)

# FIG. 29

| qam | cr | DEMUX selection |
|---|---|---|
| 4-qam | 1/4 | all |
| | 1/3 | all |
| | 2/5 | all |
| | 1/2 | all |
| | 3/5 | all |
| | 2/3 | all |
| | 3/4 | all |
| | 4/5 | all |
| | 5/6 | all |
| | 8/9 | all |
| | 9/10 | all |
| 16-qam | 1/4 | No-Int, No-Demux |
| | 1/3 | No-Int, No-Demux |
| | 2/5 | No-Int, No-Demux |
| | 1/2 | No-Int, No-Demux |
| | 3/5 | 9, 10 or 12 |
| | 2/3 | 6 |
| | 3/4 | 6 |
| | 4/5 | 6 |
| | 5/6 | 6 |
| | 8/9 | 6 |
| | 9/10 | 6 |
| 64-qam | 1/4 | No-Int, No-Demux |
| | 1/3 | No-Int, No-Demux |
| | 2/5 | No-Int, No-Demux |
| | 1/2 | No-Int, No-Demux |
| | 3/5 | 9, or 10 |
| | 2/3 | 6 |
| | 3/4 | 6 |
| | 4/5 | 6 |
| | 5/6 | 6 |
| | 8/9 | 6 |
| | 9/10 | 6 |
| 256-qam | 1/4 | No-Int, No-Demux |
| | 1/3 | No-Int, No-Demux |
| | 2/5 | No-Int, No-Demux |
| | 1/2 | No-Int, No-Demux |
| | 3/5 | 9 |
| | 2/3 | 6 |
| | 3/4 | 6 |
| | 4/5 | 6 |
| | 5/6 | 6 |
| | 8/9 | 6 |
| | 9/10 | 6 |

# FIG. 30

| Type | 1st type | 2nd type | 3rd type | 4th type | 5th type | 6th type |
|---|---|---|---|---|---|---|
| QPSK | $b_{1,0}$ maps to $y_{0,0}$<br>$b_{1,1}$ maps to $y_{1,0}$ | $b_{1,0}$ maps to $y_{0,0}$<br>$b_{1,1}$ maps to $y_{1,0}$ | $b_{1,0}$ maps to $y_{0,0}$<br>$b_{1,1}$ maps to $y_{1,0}$ | $b_{1,0}$ maps to $y_{0,0}$<br>$b_{1,1}$ maps to $y_{1,0}$ | $b_{1,0}$ maps to $y_{0,0}$<br>$b_{1,1}$ maps to $y_{1,0}$ | $b_{1,0}$ maps to $y_{0,0}$<br>$b_{1,1}$ maps to $y_{1,0}$ |
| 16-QAM | $b_{1,0}$ maps to $y_{0,0}$<br>$b_{1,1}$ maps to $y_{2,0}$<br>$b_{1,2}$ maps to $y_{1,0}$<br>$b_{1,3}$ maps to $y_{3,0}$ | $b_{1,0}$ maps to $y_{2,0}$<br>$b_{1,1}$ maps to $y_{0,0}$<br>$b_{1,2}$ maps to $y_{3,0}$<br>$b_{1,3}$ maps to $y_{1,0}$ | $b_{1,0}$ maps to $y_{0,0}$<br>$b_{1,1}$ maps to $y_{2,0}$<br>$b_{1,2}$ maps to $y_{3,0}$<br>$b_{1,3}$ maps to $y_{1,0}$ | $b_{1,0}$ maps to $y_{2,0}$<br>$b_{1,1}$ maps to $y_{0,0}$<br>$b_{1,2}$ maps to $y_{1,0}$<br>$b_{1,3}$ maps to $y_{3,0}$ | $b_{1,0}$ maps to $y_{2,0}$<br>$b_{1,1}$ maps to $y_{3,0}$<br>$b_{1,2}$ maps to $y_{0,0}$<br>$b_{1,3}$ maps to $y_{1,0}$ | $b_{1,0}$ maps to $y_{0,0}$<br>$b_{1,1}$ maps to $y_{1,0}$<br>$b_{1,2}$ maps to $y_{2,0}$<br>$b_{1,3}$ maps to $y_{3,0}$ |
| 64-QAM | $b_{1,0}$ maps to $y_{0,0}$<br>$b_{1,1}$ maps to $y_{2,0}$<br>$b_{1,2}$ maps to $y_{4,0}$<br>$b_{1,3}$ maps to $y_{1,0}$<br>$b_{1,4}$ maps to $y_{3,0}$<br>$b_{1,5}$ maps to $y_{5,0}$ | $b_{1,0}$ maps to $y_{4,0}$<br>$b_{1,1}$ maps to $y_{2,0}$<br>$b_{1,2}$ maps to $y_{0,0}$<br>$b_{1,3}$ maps to $y_{5,0}$<br>$b_{1,4}$ maps to $y_{3,0}$<br>$b_{1,5}$ maps to $y_{1,0}$ | $b_{1,0}$ maps to $y_{0,0}$<br>$b_{1,1}$ maps to $y_{2,0}$<br>$b_{1,2}$ maps to $y_{4,0}$<br>$b_{1,3}$ maps to $y_{5,0}$<br>$b_{1,4}$ maps to $y_{3,0}$<br>$b_{1,5}$ maps to $y_{1,0}$ | $b_{1,0}$ maps to $y_{4,0}$<br>$b_{1,1}$ maps to $y_{2,0}$<br>$b_{1,2}$ maps to $y_{0,0}$<br>$b_{1,3}$ maps to $y_{1,0}$<br>$b_{1,4}$ maps to $y_{3,0}$<br>$b_{1,5}$ maps to $y_{5,0}$ | $b_{1,0}$ maps to $y_{4,0}$<br>$b_{1,1}$ maps to $y_{5,0}$<br>$b_{1,2}$ maps to $y_{2,0}$<br>$b_{1,3}$ maps to $y_{3,0}$<br>$b_{1,4}$ maps to $y_{0,0}$<br>$b_{1,5}$ maps to $y_{1,0}$ | $b_{1,0}$ maps to $y_{0,0}$<br>$b_{1,1}$ maps to $y_{1,0}$<br>$b_{1,2}$ maps to $y_{2,0}$<br>$b_{1,3}$ maps to $y_{3,0}$<br>$b_{1,4}$ maps to $y_{4,0}$<br>$b_{1,5}$ maps to $y_{5,0}$ |
| 256-QAM | $b_{1,0}$ maps to $y_{0,0}$<br>$b_{1,1}$ maps to $y_{2,0}$<br>$b_{1,2}$ maps to $y_{4,0}$<br>$b_{1,3}$ maps to $y_{6,0}$<br>$b_{1,4}$ maps to $y_{1,0}$<br>$b_{1,5}$ maps to $y_{3,0}$<br>$b_{1,6}$ maps to $y_{5,0}$<br>$b_{1,7}$ maps to $y_{7,0}$ | $b_{1,0}$ maps to $y_{6,0}$<br>$b_{1,1}$ maps to $y_{4,0}$<br>$b_{1,2}$ maps to $y_{2,0}$<br>$b_{1,3}$ maps to $y_{0,0}$<br>$b_{1,4}$ maps to $y_{7,0}$<br>$b_{1,5}$ maps to $y_{5,0}$<br>$b_{1,6}$ maps to $y_{3,0}$<br>$b_{1,7}$ maps to $y_{1,0}$ | $b_{1,0}$ maps to $y_{0,0}$<br>$b_{1,1}$ maps to $y_{2,0}$<br>$b_{1,2}$ maps to $y_{4,0}$<br>$b_{1,3}$ maps to $y_{6,0}$<br>$b_{1,4}$ maps to $y_{7,0}$<br>$b_{1,5}$ maps to $y_{5,0}$<br>$b_{1,6}$ maps to $y_{3,0}$<br>$b_{1,7}$ maps to $y_{1,0}$ | $b_{1,0}$ maps to $y_{6,0}$<br>$b_{1,1}$ maps to $y_{4,0}$<br>$b_{1,2}$ maps to $y_{2,0}$<br>$b_{1,3}$ maps to $y_{0,0}$<br>$b_{1,4}$ maps to $y_{1,0}$<br>$b_{1,5}$ maps to $y_{3,0}$<br>$b_{1,6}$ maps to $y_{5,0}$<br>$b_{1,7}$ maps to $y_{7,0}$ | $b_{1,0}$ maps to $y_{6,0}$<br>$b_{1,1}$ maps to $y_{7,0}$<br>$b_{1,2}$ maps to $y_{4,0}$<br>$b_{1,3}$ maps to $y_{5,0}$<br>$b_{1,4}$ maps to $y_{2,0}$<br>$b_{1,5}$ maps to $y_{3,0}$<br>$b_{1,6}$ maps to $y_{0,0}$<br>$b_{1,7}$ maps to $y_{1,0}$ | $b_{1,0}$ maps to $y_{0,0}$<br>$b_{1,1}$ maps to $y_{1,0}$<br>$b_{1,2}$ maps to $y_{2,0}$<br>$b_{1,3}$ maps to $y_{3,0}$<br>$b_{1,4}$ maps to $y_{4,0}$<br>$b_{1,5}$ maps to $y_{5,0}$<br>$b_{1,6}$ maps to $y_{6,0}$<br>$b_{1,7}$ maps to $y_{7,0}$ |

EP 2 079 183 B1

# FIG. 31

## FIG. 32

| qam | cr | DEMUX selection |
|---|---|---|
| 4-qam | 1/4 | all |
| | 1/3 | all |
| | 2/5 | all |
| | 1/2 | all |
| | 3/5 | all |
| | 2/3 | all |
| | 3/4 | all |
| | 4/5 | all |
| | 5/6 | all |
| | 8/9 | all |
| | 9/10 | all |
| 16-qam | 1/4 | No-Int, No-Demux |
| | 1/3 | No-Int, No-Demux |
| | 2/5 | No-Int, No-Demux |
| | 1/2 | No-Int, No-Demux |
| | 3/5 | 9, 10 or 12 |
| | 2/3 | 6 |
| | 3/4 | 6 |
| | 4/5 | 6 |
| | 5/6 | 6 |
| | 8/9 | 6 |
| | 9/10 | 6 |
| 64-qam | 1/4 | No-Int, No-Demux |
| | 1/3 | No-Int, No-Demux |
| | 2/5 | No-Int, No-Demux |
| | 1/2 | No-Int, No-Demux |
| | 3/5 | 9, or 10 |
| | 2/3 | 6 |
| | 3/4 | 6 |
| | 4/5 | 6 |
| | 5/6 | 6 |
| | 8/9 | 6 |
| | 9/10 | 6 |
| 256-qam | 1/4 | No-Int, No-Demux |
| | 1/3 | No-Int, No-Demux |
| | 2/5 | No-Int, No-Demux |
| | 1/2 | No-Int, No-Demux |
| | 3/5 | 9 |
| | 2/3 | 6 |
| | 3/4 | 6 |
| | 4/5 | 6 |
| | 5/6 | 6 |
| | 8/9 | 6 |
| | 9/10 | 6 |

# FIG. 33

QPSK : $i = 0,1,2,..., \dfrac{N}{2} - 1,$

$$(y_{0,i}, y_{0,i}) = (x_i, x_{N/2+i}),$$

16-QAM : $i = 0,1,2,..., \dfrac{N}{4} - 1,$

$$(y_{0,i}, y_{0,i}, y_{2,i}, y_{3,i}) = \left\{ x_{\frac{2N}{4}+i}, x_{\frac{3N}{4}+i}, x_i, x_{\frac{N}{4}+i} \right\}$$

64-QAM : $i = 0,1,2,..., \dfrac{N}{6} - 1,$

$$(y_{0,i}, y_{0,i}, y_{2,i}, y_{3,i}, y_{4,i}, y_{5,i}) = \left\{ x_{\frac{4N}{6}+i}, x_{\frac{5N}{6}+i}, x_{\frac{2N}{6}+i}, x_{\frac{3N}{6}+i}, x_i, x_{\frac{N}{6}+i} \right\}$$

256-QAM : $i = 0,1,2,..., \dfrac{N}{8} - 1,$

$$(y_{0,i}, y_{0,i}, y_{2,i}, y_{3,i}, y_{4,i}, y_{5,i}, y_{6,i}, y_{7,i}) = \left\{ x_{\frac{6N}{8}+i}, x_{\frac{7N}{8}+i}, x_{\frac{4N}{8}+i}, x_{\frac{5N}{8}+i}, x_{\frac{2N}{8}+i}, x_{\frac{3N}{8}+i}, x_i, x_{\frac{N}{8}+i} \right\}$$

# FIG. 34

Im{z} Convey $y_{1,q}$

QPSK
Bit ordering:
$y_{0,q}\ y_{1,q}$

10 · 1 · 00
Re{z} Convey $y_{0,q}$
-1 · 1
11 · -1 · 01

Im{z} Convey $y_{1,q}, y_{3,q}$

16-QAM
Bit ordering:
$y_{0,q}\ y_{1,q}\ y_{2,q}\ y_{3,q}$

1000 · 1010 · 3 · 0010 · 0000
1001 · 1011 · 1 · 0011 · 0001
Re{z} Convey $y_{0,q}, y_{2,q}$
-3 · -1 · 1 · 3
1101 · 1111 · -1 · 0111 · 0101
1100 · 1110 · -3 · 0110 · 0100

Im{z} Convey $y_{1,q}, y_{3,q}, y_{5,q}$

64-QAM
Bit ordering:
$y_{0,q}\ y_{1,q}\ y_{2,q}\ y_{3,q}\ y_{4,q}\ y_{5,q}$

100000 · 10010 · 101010 · 101000 · 7 · 001000 · 001010 · 000010 · 000000
100001 · 10011 · 101011 · 101001 · 5 · 001001 · 001011 · 000011 · 000001
100101 · 100111 · 101111 · 101101 · 3 · 001101 · 001111 · 000111 · 000101
100100 · 100110 · 101110 · 101100 · 1 · 001100 · 001110 · 000110 · 000100
-7 · -5 · -3 · -1 · 1 · 3 · 5 · 7
Re{z} Convey $y_{0,q}, y_{2,q}, y_{4,q}$
110100 · 110110 · 111110 · 111100 · -1 · 011100 · 011110 · 010110 · 010100
110101 · 110111 · 111111 · 111100 · -3 · 011101 · 011111 · 010111 · 010101
110001 · 110011 · 111011 · 111001 · -5 · 011001 · 011011 · 010011 · 010001
110000 · 110010 · 111010 · 111000 · -7 · 011000 · 011010 · 010010 · 010000

# FIG. 35

140

Frame
builder
RF(n)
output $\longrightarrow$

MIMO/
MISO
encoder

$\longrightarrow$ MISO/MIMO
RF(n)
Antenna(1)
output

⋮

$\longrightarrow$ MISO/MIMO
RF(n)
Antenna(A)
output

# FIG. 36

RF(n)
MIMO/MISO
antenna(m)
output
→
[ PAPR reduce1 ] (151)
→
[ Time-domain transform (IFFT) ] (153)
→
[ PAPR reduce2 ] (157)
→
[ Guard-interval inserter ] (159)
→
RF(n)
MIMO/MISO
antenna(m)
AFE

# FIG. 37

RF(n) antenna(m) modulator → **161** DAC → **163** Up-conversion → **165** Analog filter → RF(n) antenna(m) aerial

# FIG. 38

210a  220a  230  240  250  260

RF(1) Aerial → First signal receiver → First demodulator → MIMO/ MISO Dec → Frame parser → Decoding demodulator → Output processor → RF(1) Output

RF(1) Aerial → n-th signal receiver → n-th demodulator →

210n  220b

EP 2 079 183 B1

# FIG. 39

211          213          215

RF(n)
antenna(m) → | Tuner | → | Down-convvert | → | ADC | → RF(n)
aerial                                              antenna(m)
                                                    modulator

RF
center
frequency

# FIG. 40

EP 2 079 183 B1

```
RF(n),                  221            222            223             224                      226            227
antenna(m)        ┌─────────┐  ┌─────────────┐ ┌─────────────┐ ┌─────────────────┐  ┌──────────┐  ┌──────────────────┐
AFE        ──────▶│  Frame  │─▶│    Frame    │▶│Guard-interval│▶│Frequency-domain │─▶│ Channel  │  │Signaling-information│──▶PL sig
output            │ detector│  │synchronization│ │  remover    │ │ transform (FFT) │  │equalizer │  │    extractor     │
                  └─────────┘  │    unit     │ └─────────────┘ └─────────────────┘  └──────────┘  └──────────────────┘
                               └─────────────┘                          │                │
                                                                        │                ▲
                                                                        │           ┌──────────┐
                                                                        └──────────▶│  Channel │
                                                                                    │ estimator│
                                                                                    └──────────┘
                                                                                         225
```

RF(n)
MIMO/MISO
antenna(m)
AFE

# FIG. 41

230

MISO/MIMO
RF(n)
antenna(1) ⟶
demod

⋮

MISO/MIMO
RF(n)
antenna(B) ⟶
demod

MIMO/
MISO
decoder

⟶ Frame
parser
RF(n)
input

# FIG. 42

RF(1) MIMO/MISO Dec → **First de-interleaver** (241a) → **Frame parser** (243) → **First time de-interleaver** (245a) → **First symbol demapper** (247a) → PLP(1) BICM Dec

RF(R) MIMO/MISO Dec → **r-th frequency de-interleaver** (241r) → **Frame parser** (243) → **p-th time de-interleaver** (245p) → **p-th symbol demapper** (247p) → PLP(P) BICM Dec

EP 2 079 183 B1

# FIG. 43

PLP(n)
Time
De-intrlv →

2471 — Error Correction Block Splitter

→ 2473 — Symbol Splitter

→ 2475a — 1st order Demapper

2475b — 2nd order Demapper

→ 2478 — Bitsream Merger → PLP(n) BICM Dee

# FIG. 44

PLP(n)
Time
De-intrlv →

2471 — Error Correction Block Splitter

→ 2473 — Symbol Splitter

→ 2474a — 1st order Power Calibration

2474b — 2nd order Power Calibration

→ 2475a — 1st order Demapper

→ 2475b — 2nd order Demapper

→ 2478 — Bitsream Merger → PLP(n) BICM Dee

# FIG. 45

PLP (n) Time Deintrlv

2473 — Symbol Splitter

2474a — 1st order Demap
2475a — 1st order Mux
2476a — 1st order Bit Deintrlv

2474b — 2nd order Demap
2475b — 2nd order Mux
2476b — 2nd order Bit Deintrlv

2478 — Bitstream Merger

253 — LDPC Dee

PLP (n) Outer Deintrlv

# FIG. 46

PLP (n) Time Deintrlv → **Symbol Splitter** (2473)

2473

Upper path:
- 2474a: 1st order Power Calibration
- 2475a: 1st order Mux
- 2476a: 1st order Bit Deintrlv
- 2477a: 1st order Demap

Lower path:
- 2474b: 2nd order Power Calibration
- 2475b: 2nd order Mux
- 2476b: 2nd order Bit Deintrlv
- 2477b: 2nd order Demap

→ **Bitstream Merger** (2478) → **LDPC Dec** (253) → PLP (n) Outer Deintrlv

EP 2 079 183 B1

# FIG. 47

2475a(2475b)

2475a2(2475b2)

2475a1(2475b1)

2475a4(2475b4)

2474a(2474b)

2476a(2476b)

Demapper

1st MUX

Bit
De-interleaver

2475a3(2475b3)

Nth MUX

MUX selection

## FIG. 48

Frame parser PLP(n) output → **First de-interleaver** (251) → **First decoder** (253) → **Second de-interleaver** (255) → **Second decoder** (257) → Output processor PLP(n) input

# FIG. 49

261a     263a     265a

PLP(1)
BICM → BB frame parser → First service merger → First demultiplexer ⋮ → MPEG 2 TS

⋮

PLP(m)
BICM → BB frame parser →

261m

261n     263b     265b

PLP(n)
BICM → BB frame parser → Second service merger → Second demultiplexer ⋮ → Generic stream (IP)

⋮

PLP(p)
BICM → BB frame parser →

261p

# FIG. 50

EP 2 079 183 B1

Input streams

Service Composer  310

Frequency splitter  320

400

First mapper  410

First interleaver  420

First symbol inserter  430

First modulator  440

First Pilot symbol inserter  450

Second mapper  415

Second interleaver  425

second symbol inserter  435

Second modulator  445

Second Pilot symbol inserter  455

# FIG.51

EP 2 079 183 B1

...

## FIG. 52

## FIG. 53

## FIG. 54

## FIG. 55

# FIG. 56

# FIG. 57

| A service stream is converted to a PLP | —S110 |

↓

| The PLP modulated is allocated in at least one signal frame and a preamble including a first pilot signal is arranged in a beginning part of the signal frame | —S150 |

↓

| The signal frame is converted into a time domain according to an OFDM scheme | —S160 |

↓

| The cyclic prefix obtained by frequency-shifting a first portion of an useful portion of the first pilot signal and the cyclic suffix obtained by frequency-shifting a second portion of the useful portion are inserted into the first pilot signal in the time domain | —S170 |

↓

| The signal frame including the first frame signal is transmitted over at least one RF channel | —S180 |

# FIG. 58

| A signal is received from a specific frequency band transferring signal frame | —S210 |

| From the received signal, a first pilot signal including a cyclic prefix obtained by frequency-shifting a first portion of an useful portion and a cyclic suffix obtained by frequency-shifting a second portion of the useful portion, is identified, and the signal frame including the PLPs, is demodulated by the OFDM scheme using information set in the first pilot signal | —S220 |

| The identified signal frame is parsed | —S230 |

| A service can be obtained from the PLP of the parsed signal frame | —S240 |

# FIG. 59

| | |
|---|---|
| Delay received signal | S311 |

↓

| | |
|---|---|
| Calculate complex conjugate of delayed signal | S313 |

↓

| | |
|---|---|
| Multiply received signal by complex conjugate of delayed signal | S315 |

↓

| | |
|---|---|
| Inversely shift multiplied signal according to frequency shift of cyclic prefix | S317 |

↓

| | |
|---|---|
| Calculate average of signal inversely shifted according to frequency shift of cyclic prefix | S319 |

↓

| | |
|---|---|
| Delay signal of which average is calculated | S321 |

↓

| | |
|---|---|
| Inversely shift signal multiplied in S315 according to frequency shift of cyclic suffix | S323 |

↓

| | |
|---|---|
| Calculate average of signal inversely shifted according to frequency shift of cyclic suffix | S325 |

↓

| | |
|---|---|
| Multiply signal delayed in S321 and signal of which average is calculated in s325 | S327 |

↓

| | |
|---|---|
| Search for peak location of multiplied result | S329 |

↓

| | |
|---|---|
| Measure phase of signal using peak | S331 |

# FIG. 60

A transport stream for delivering a service is error-correction-coded — S411

↓

The bits of error-correction-coded transport stream are interleaved, in which the bits are stored in a memory by a method and the stored bits are read by another method, according to a symbol mapping method — S413

↓

The interleaved bits are symbol-mapped according to the symbol mapping method — S415

↓

The symbols are allocated in signal frames, and the allocated symbols are arranged in a signal frame which is transmitted over at least one radio frequency (rf) channel and a first pilot signal which can identify the signal frame is arranged in — S417

↓

The signal frame is modulated and transmitted — S419

↓

A signal including a signal frame which can be transmitted over at least one radio frequency channel is received from a first radio frequency channel, and the signal frame is identified by using the preamble of the signal frame — S421

↓

The signal frame is demodulated and symbols of a transport stream are outputted by parsing the demodulated the signal frame — S423

↓

The symbols are demapped according to a symbol mapping method, and demapped bit stream is outputted — S425

↓

The bit stream is deinterleaved, in which the bits are stored in a memory by a method and the stored bits are read by another method, according to a symbol mapping method — S427

↓

The deinterleaved bits are error-correction-decoded — S429

## FIG. 61

Common PLP → NIT, SDT, BAT

Get Common PLP info

L1 Signal — Get L2 info → L2 Signal

Get network /PLP /Service info

Frame structure info

Get P1/ P2 frame

T2 Frame

Network1
- PLP1 — Service1, Service2
- PLP2 — Service3
- PLP3 — Service4, Service5, Service6

Network2
- PLP4 — Service7, Service8
- PLP5 — Service9

EP 2 079 183 B1

# FIG. 62

L1 signaling

```
// Static param
CELL_ID [16b]
NETWORK_ID [16b]
NUM_RF [3b]
for each RF {
    FREQUENCY [32b]
}
PILOT_PATTERN  [3b]
FRAME_LENGTH [10b]
// Configurable param
NUM_PLP [8b]
RF_SHIFT [8b]
for each PLP {
    PLP_ID [8b]
    PLP_CR [3b]
    PLP_MOD [4b]
    PLP_FEC_BLOCK [1b]
}
PLP0_CR [3b]
PLP0_MOD [4b]
PLP0_FEC_BLOCK [1b]
// Dynamic param
FRAME_IDX [8b]
NOTTIFICATION [1b]
L2_SIZE [18b]
NOTIF_SIZE [18b]
for each PLP {
    PLP_NUM_BLOCKS [8b]
    PLP_START [20b]
}
CRC-8 [8b]
```

PLP-to-TS
mapping

**NIT**
network_id
descriptors( )

TS1 (PLP1)
transport_stream_id
original_network_id

PLP_id_descriptor( )
descriptor_tag
descriptor_length
PLP_id

TS2 (PLP2)
transport_stream_id
original_network_id

PLP_id_descriptor( )
descriptor_tag
descriptor_length
PLP_id

**SDT**
transport_stream_id
original_network_id

Service1
service_id
. . .
descriptor( )

Service2
service_id
. . .
descriptor( )

**SDT**
transport_stream_id
original_network_id

Service1
service_id
. . .
descriptor( )

Service2
service_id
. . .
descriptor( )

# FIG. 63

# FIG. 64

| Syntax | No. of Bits | Format |
|---|---|---|
| network_information_section( ){ | | |
|   table_id | 8 | uimsbf |
|   section_syntax_indicator | 1 | bslbf |
|   reserved_future_use | 1 | bslbf |
|   reserved | 2 | bslbf |
|   section_length | 12 | uimsbf |
|   network_id | 16 | uimsbf |
|   reserved | 2 | bslbf |
|   version_number | 5 | uimsbf |
|   current_next_indicator | 1 | bslbf |
|   section_number | 8 | uimsbf |
|   last_section_number | 8 | uimsbf |
|   reserved_future_use | 4 | bslbf |
|   network_descriptors_length | 12 | uimsbf |
|   for( i = 0; i < N; i + + ) { | | |
|     descriptor( ) ◄—Descriptor for all network (A) | | |
|   } | | |
|   reserved_future_use | 4 | bslbf |
|   transport_stream_loop_length | 12 | uimsbf |
|   for ( i = 0; i < N; i + + ) {       TS Loop | | |
|     transport_stream_id | 16 | uimsbf |
|     original_network_id | 16 | uimsbf |
|     reserved_future_use | 4 | bslbf |
|     transport_descriptors_length | 12 | uimsbf |
|     for ( j = 0; j < N; j + + ) { | | |
|       descriptor( ) ◄—Descriptor for current TS (B) | | |
|     } | | |
|   } | | |
|   CRC_32 | 32 | rpchof |
| } | | |

| Syntax | No. of Bits | Format |
|---|---|---|
| PLP_identifier_descriptor ( ) { | | |
|   descriptor_tag | 8 | uimsbf |
|   descriptor_length | 8 | uimsbf |
|     PLP_id | 8 | uimsbf |
| } | | |

# FIG. 65

# FIG. 66

```
┌────────────────────────────────────────────────────────────────┐
│           Converting a transport stream to a PLP                │──S401
└────────────────────────────────────────────────────────────────┘
                              │
                              ▼
┌────────────────────────────────────────────────────────────────┐
│     Arranging the PLP in a signal frame, and arranging layer-2  │
│     information in a preamble of the signal frame, the layer-2   │──S405
│     information including network information in which the PLP   │
│     identifier corresponding to the transport stream is set      │
└────────────────────────────────────────────────────────────────┘
                              │
                              ▼
┌────────────────────────────────────────────────────────────────┐
│                  Modulating the signal frame                     │──S407
└────────────────────────────────────────────────────────────────┘
                              │
                              ▼
┌────────────────────────────────────────────────────────────────┐
│    Transmitting the modulated signal frame via at least one RF  │──S409
│                            channel                               │
└────────────────────────────────────────────────────────────────┘
                              │
                              ▼
┌────────────────────────────────────────────────────────────────┐
│  Receiving a signal according to a signal frame transmitted via │──S410
│                   at least one RF channel                        │
└────────────────────────────────────────────────────────────────┘
                              │
                              ▼
┌────────────────────────────────────────────────────────────────┐
│     Obtaining the layer-2 information including network          │
│     information from the preamble of the signal frame            │──S420
└────────────────────────────────────────────────────────────────┘
                              │
                              ▼
┌────────────────────────────────────────────────────────────────┐
│  Parsing the network information and obtaining an identifier of  │
│  a PLP corresponding to a transport stream in the signal frame,  │──S430
│         from the parsed network information                      │
└────────────────────────────────────────────────────────────────┘
                              │
                              ▼
┌────────────────────────────────────────────────────────────────┐
│   Obtaining the PLP corresponding to the transport stream for    │
│   delivering the service selected by the user, from the signal   │──S440
│                            frame                                 │
└────────────────────────────────────────────────────────────────┘
```

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- WO 2005022811 A

- WO 03045054 A1